(19) Europäisches Patentamt
European Patent Office
Office européen des brevets

(11) Publication number: **0 274 567 B1**

(12) **EUROPEAN PATENT SPECIFICATION**

(45) Date of publication of patent specification: **22.04.92**

(51) Int. Cl.$^5$: **G11B 7/095**

(21) Application number: **87112122.4**

(22) Date of filing: **19.09.84**

(60) Publication number of the earlier application in accordance with Art.76 EPC: **0 151 220**

# (54) Servo-system for positioning an optical beam.

(30) Priority: **09.11.83 JP 211459/83**
**10.01.84 JP 3794/84**
**10.01.84 JP 3795/84**
**09.05.84 JP 93584/84**
**25.05.84 JP 106780/84**

(43) Date of publication of application:
**20.07.88 Bulletin 88/29**

(45) Publication of the grant of the patent:
**22.04.92 Bulletin 92/17**

(84) Designated Contracting States:
**DE FR GB IT**

(56) References cited:
**EP-A- 0 056 712**

**REVIEW OF THE ELECTRICAL COMMUNICATION LABORATORIES, vol. 28, no. 5-6, May-June 1980, pages 368-380, Tokyo, JP; R. KANEKO et al.: "Development of 800 Mega Byte disk drive"**

**IBM TECHNICAL DISCLOSURE BULLETIN, vol. 22, no. 11, April 1980, pages 5069-5075, New York, US; R.S. PALMER: "Fast eigenvector control of a disk file actuator"**

(73) Proprietor: **SHARP KABUSHIKI KAISHA**
**22-22 Nagaike-cho Abeno-ku**
**Osaka 545(JP)**

(72) Inventor: **Fujii, Yoshikazu**
**6-36, Chiyogaoka 2-chome**
**Nara-shi Nara-ken(JP)**
Inventor: **Inui, Tetsuya**
**1, Inyo-cho**
**Nara-shi Nara-ken(JP)**
Inventor: **Deguchi, Toshihisa Dauya-heights**
**Gakuenmae C-722**
**200-5, Gakuendaiwa-cho 2-chome**
**Nara-shi Nara-ken(JP)**
Inventor: **Okuda, Tohru**
**449-10, Hibaigaoka Hiramatsu-cho**
**Nara-shi Nara-ken(JP)**

(74) Representative: **Selting, Günther, Dipl.-Ing. et al**
**Deichmannhaus am Hauptbahnhof**
**W-5000 Köln 1(DE)**

**EP 0 274 567 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**IEEE TRANSACTIONS ON MAGNETICS, vol. MAG-14, no. 4, July 1978, pages 178-181, IEEE; F.A. SAMUELS: "Beyond the second order system in track following servos"**

**ELECTRONIC DESIGN, vol. 25, no. 26, 20th December 1977, pages 142-145; D.F. GEIGER: "Drive servos with a switching amplifier"**

## Description

The present invention relates to a servo-system for positioning an optical beam of an optical disk apparatus, which is adapted to optically record, reproduce, erase the information through application of light beams such as laser lights, etc. on a record medium.

Conventionally, in the optical disk apparatus or the optical magnetic disk apparatus, the record medium's face is displaced in the vertical direction, i.e., optical direction due to the movement of the disk face. The optical focus position is controlled to be placed in focus in the disk vertical direction for adjustment so that the light-beams position of the light beams might follow the displacement of the disk and be normally positioned on the medium face. Also, during the disk rotation, the information track portion on the disk is displaced in the lateral direction, namely, in the disk radius direction because of the eccentricity between the rotary shaft of the disk and the motor shaft for drivingly rotating the disk. Thus, the optical-focus position is controlled radially in the disk radius direction for adjustment so that the optical focus position of the light beam may be always positioned on the information track by causing the optical-focus position of the light beam to follow the displacement of the information track on the disk. Also, the position controlling, i.e., operation access controlling is performed to get the optical focus position to reach at a high speed and with better accuracy the optional track of the entire disk radius zone or the jumping control operation is performed to return to one-time portion of information track per rotation by repetition of the disk-rotation for one peripheral portion of the information track spirally made for reproduction use.

Generally, among the well known mechanisms, there is a mechanism which performs the controlling operation, vertically and laterally driving the objective lens supported by two parallel-plate springs with the use of the electromagnetic force, a mechanism which performs the controlling operation, rotating the mirror with the use of the electromagnetic force to tilt the incident optical axis of the objective lens thereby to laterally displace the optical focus position or a mechanism which performs the controlling operation, driving an optical head, supported by the slide bearing, in the lateral direction with the use of the electromagnetic force.

The focus controlling operation is effected by the feedback controlling operation, of sensing the opposite displacement, i.e. focus error between the light-disk medium face and the optical-focus position by a method of an optical means or the like, passing the focus error signal there provided through the phase lead compensating circuit, thereafter feeding it into the focus actuator driving circuit to drive the focus actuator. Also, the radial controlling operation is performed by a feedback controlling operation, of sensing the opposite displacement, i.e., radial error between the information track on the optical disk and the optical focus position by a method of an optical means or the like, passing the radial error signal there provided through the phase lead compensating circuit, thereafter feeding it into the radial actuator driving circuit to drive the radial actuator. The phase lead compensating circuit is a circuit for improving the safety of the feedback controlling system.

However, various problems are in the mechanical apparatus. In the feedback controlling system composed of the above-described actuator and phase lead compensating circuit, a phase lag compensating circuit for causing the gain stage difference between a frequency, normally disk rotation frequency, wherein the frequency component of the displacement is largest and the actuator resonance frequency is built-in in the feedback controlling system to improve the compression factor i.e., near the disk rotation frequency, because the percentage, namely, compression factor of the remaining error after the controlling operation is sufficient with respect to the displacement, which becomes an object to be controlled. However, as the damping of the actuator is inferior (that is, in general, the damping number $\zeta<0.5$), the phase lag $\theta$ in the feedback controlling system with the phase lag compensating circuit being built-in therein becomes smaller than (-180°) near the actuator resonance frequency. Things are so unstable that the above-described phase lag compensating circuit cannot be built-in in the feedback controlling system, or even when it has been built-in, the results have to be controlled by making the gain stage difference extremely small. As a result, the compression factor of the feedback controlling system becomes lower, so that the desired servo follow-up performance cannot be provided.

Also, in a mechanism wherein the objective lens is supported with the above-described two parallel springs or a mechanism for rotating the mirror, the entire controlling mechanism becomes too large as compared with the optical head to fit the entire apparatus in order to render the optical focus position variable across the entire disk radius zone. Also, in the mechanism supported by the slide bearing, the binding force of the moving-part with respect to the radial direction for the high-speed access operation is weak and the mechanism is weak against the disturbance oscillation applied upon the entire optical disk apparatus. Also, in the mechanism supported by the slide bearing, the optical focus position controlling operation in precision of sub micron or less cannot be performed due to influences by the stick slip or the like of the slide bearing portion.

A method of performing the parallel controlling operation by both mechanisms is considered from these disadvantages to compensate the respective disadvantages of a mechanism for supporting the objective lens with two parallel springs to drive it with the use of the electromagnetic force or a mechanism (hereinafter referred to as radial actuator mechanism) for tilting the incident optical axis of the objective lens through the rotation of the mirror with the use of the electromagnetic force to laterally displace the optical focus position and a mechanism (hereinafter referred to as linear mechanism) for driving in the lateral direction the optical head, supported by the slide bearing, with the use of the electromagnetic force. But both mechanisms are mutually influenced to minus with respect to the disturbance oscillation applied upon the entire optical disk apparatus in the simple driving operation of both the mechanisms, thus resulting in the oscillation-increasing operation towards the unstable condition. As the driving force of the linear motor is not applied directly upon the objective lens through the radial actuator mechanism, the phase lag is caused in the displacement of the objective lens with the displacement of the optical head, so that the stable parallel controlling operation cannot be performed.

Also, at the switching from the access control to the radial control or at the switching from the jump control to the radial control, the setting condition of the optical focus position immediately after the servo loop of the feed-back controlling system has been rendered the closed loop was extremely unstable, because the position of the information track always moves and the initial value of the radial error difference greatly changed. To cope with the unstability, there is a method of storing in synchronous relation with the disk rotation the radial driving current in the closed loop condition of the feedback controlling system servo-loop, adding the memory signal to the radial actuator during the closed loop and the open loop of the radial control system servo-loop to reduce the opposite displacement, i.e., radial error between the information track on the disk and the optical focus position thereby to reduce the unstability of the radial control setting condition.

However, actually the radial driving current had noise component, component to be caused by the shape of the individual information track, high-frequency component for causing the closed loop servo condition to be stable, except for frequency component which is used in the follow-up into the eccentric condition of the information track. Thus, if the radical driving current is stored as it is, and is added, fed to the radial actuator, the radial setting condition does not become stable as expected, thus resulting in unstability due to the above-described components.

The present invention is provided to remove the above-described disadvantages inherent to the conventional apparatus. The object of the present invention is to provide a servo system for positioning an optical beam with regard to an optical or optical magnetic disk, wherein the compression factor is higher, the stability is better, the strength is better against the disturbance oscillation, the stable parallel controlling operation is performed between the radial actuator and the linear motor, whereby the radial setting condition can be made stable.

According to the invention it is provided a servo system for positioning an optical beam in regard to an optical or optical magnetic disk comprising:

- a linear motor for driving the optical head in the radial direction of an optical disk
- a radial actuator which is built-in within said optical head and adapted to drive an objective lens, for causing the lights to be focused, in the radial direction of the optical disk by an electromagnetic means or
- a radial actuator for rotating and driving a mirror, for causing the lights to be reflected, in the radial direction of the optical disk by the electromagnetic means,
- by performing a parallel controlling operation of the linear motor and the radial actuator,

wherein
a first condition $\{A_L/A_R \fallingdotseq (\omega_R/\omega_L)^2\}$ under which the ratio between the low frequency gain $A_L$ of a feedback transfer function to said linear motor and the low frequency gain $A_R$ of the feedback transfer function to said radial actuator is rendered to coincide approximately with the square of the ratio between the resonance frequency $\omega_R$ of the radial actuator and the resonance frequency $\omega_L$ of said linear motor.

The present application is a divisional application derived from EP-A-0.151.220 concerning a servo system for positioning an optical beam.

These and other features of the present invention will become apparent from the following description taken in conjunction with preferred embodiments thereof with reference to the accompanying drawings, throughout which like parts are designated by like reference numerals, and in which:

Fig. 1 is an examplary front view showing a construction for illustrating an optical disk apparatus or an optical magnetic disk apparatus;

Fig. 2 is a block diagram of the conventional controlling system;

Fig. 3 is a board diagram of an actuator transfer function $G_O$;
Fig. 4 is a board diagram of a phase lead compensating circuit P;
Fig. 5 is a board diagram of the open loop transfer function G of Fig. 2;
Fig. 6 is a frequency characteristic chart of the compression factor H of Fig. 2;
Fig. 7 is a block diagram of a controlling system with a phase lag compensating circuit U being built-in therein;
Fig. 8 is a board diagram of the phase lag compensating circuit U;
Fig. 9 is a board diagram of the open loop transfer function G′ of Fig. 7;
Fig. 10 is a block diagram of the controlling system in accordance with the present invention;
Fig. 11 is a board diagram of a damping correction circuit T of Fig. 10;
Fig. 12 is a block diagram showing one example in a case where the damping correction circuit T is composed of operation amplifiers;
Fig. 13 is a board diagram of the open loop transfer function G″ of Fig. 10;
Fig. 14 is a frequency characteristic chart of the compression factor H″ of Fig. 10;
Fig. 15 is a block diagram of the conventional radial controlling system;
Fig. 16 is a board diagram of the linear motor transfer function $G_O$ or the radial actuator;
Fig. 17 is a board diagram of the phase lead compensating circuit P;
Fig. 18 is a board diagram of the open loop transfer function G of Fig. 15;
Fig. 19 is a board diagram of the disturbance transfer function $G_Y$;
Fig. 20 is a frequency characteristic chart of the compression factor H;
Fig. 21 is a frequency characteristic chart of the disturbance compression factor $H_Y$;
Fig. 22 is a frequency characteristic chart of the stiffness St with respect to the disturbance;
Fig. 23 is a block diagram of the radial controlling system in accordance with the present invention;
Fig. 24 is a board diagram of the phase lag compensating circuit U′ of Fig. 23;
Fig. 25 is a board diagram of the open loop transfer function G′ of Fig. 23;
Fig. 26 is a frequency characteristic chart of the compression factor H′;
Fig. 27 is a frequency characteristic chart of the disturbance compression factor $H_Y'$;
Fig. 28 is a frequency characteristic chart of the stiffness S′;
Fig. 29 is a model construction view for illustrating the kinetic model of the parallel controlling system;
Fig. 30 is a block diagram of Fig. 29;
Fig. 31 is a model construction view for illustrating the kinetic model of the other type of the parallel controlling system;
Fig. 32 is a block diagram of Fig. 31;
Fig. 33 is a board diagram of the open loop transfer function G of Fig. 32;
Fig. 34 is a board diagram of the linear transfer function of Fig. 32;
Fig. 35 is a block diagram for illustrating the addition controlling system;
Fig. 36 is a board diagram of the open loop transfer function G of Fig. 30;
Fig. 37 is a board diagram of the linear transfer function Ga of Fig. 30;
Fig. 38 is a board diagram of the open loop transfer function G of Fig. 35;
Fig. 39 is a board diagram of the linear transfer function Ga of Fig. 35;
Fig. 40 is a board diagram of the open loop transfer function G in a case where $\zeta_L$, $\zeta_R$ are small in Fig. 32 or Fig. 35;
Fig. 41 is a block diagram of the parallel controlling system wherein the damping correction has been performed;
Fig. 42 is a block diagram of the parallel controlling system of the other type, wherein the damping correction has been performed;
Fig. 43 is a board diagram of the open loop transfer function of Fig. 41 or Fig. 42;
Fig. 44 is a block diagram of the parallel controlling system wherein the phase lag compensation has been performed;
Fig. 45 is a block diagram of the parallel controlling system of the other type wherein the phase lag compensation has been performed;
Fig. 46 is a board diagram of the open loop transfer function of Fig. 44 or Fig. 45;
Fig. 47 is a block diagram of the radial controlling system wherein the conventional memory controlling operation has been performed;
Fig. 48 is a block diagram of the radial controlling system wherein the memory controlling operation of the present invention has been performed;
Fig. 49 is a board diagram of a band-pass filter B of Fig. 48;
Fig. 50 is a block diagram of the parallel controlling system wherein the memory controlling operation has been performed; and

Fig. 51 is a block diagram of the parallel controlling system of the other type wherein the memory controlling operation has been effected.

Embodiments of an optical-focus-position controlling apparatus in accordance with the present invention will be described in detail with reference to the drawings.

All frequencies $\omega$ are represented in the drawings by W.

Fig. 1 is a construction illustrating view showing the construction of an optical disk unit or an optical magnetic-disk unit. In Fig. 1, a reference numeral 1 is a laser light source for transmitting laser beams 2; a reference numeral 3 is a mirror; a reference numeral 4 is an objective lens for focusing the laser beams 2 on the disk record medium face; a reference numeral 5 is an actuator for effecting a focus controlling operation and a radial controlling operation, which drive the objective lens 4 vertically and laterally to follow and control the optical-focus position on the record track of the disk record medium; a reference numeral 6 is an optical head for accommodating the above-described optical systems, an optical system for reproducing the recorded information (not shown), a servo-optical system, and so on; a reference numeral 7 is a linear motor which is adapted to laterally drive the optical head to perform the radial controlling operation or the access controlling operation into the track position of the object; a reference numeral 8 is an optical disk or an optical magnetic disk with a record medium 8′ being provided therein; a reference numeral 9 is a motor for rotating and driving the disk; and a reference numeral 10 is a support stand for the above-described apparatus.

The controlling system of the optical-focus-position controlling apparatus in accordance with the present invention will be described hereinafter as compared with the conventional controlling system.

A. In the focus controlling or the radial controlling, a damping correcting circuit T is built-in in a feedback controlling system to increase the servo compression factor to ensure the stable controlling operation.

a. Conventional Controlling System

Fig. 2 is a block diagram of the conventional controlling system. In Fig. 2, a reference Xd is the disk displacement; a reference $X\ell$ is the objective lens displacement, Xe is the follow-up error; a reference De is a detector which converts the follow-up error Xe into electric signal; a reference P is a phase-lead compensating circuit for performing the stable control; a reference $G_O$ is an actuator for driving and displacing the objective lens; a reference $D_O$ is a driver for driving the $G_O$.

The respective transfer functions are represented by the following equations.

$$De=1$$

$$P=\frac{S/\omega_3+1}{S/\omega_4+1}$$

$$D_O=A\ \text{(constant)}$$

$$G_0=\frac{\omega_0^2}{S^2+2\zeta_0\ \omega_0\ S+\omega_0^2}$$

wherein

$\omega_0$: resonance frequency of $G_O$ ($\omega_0$ is larger than $\omega_r$; $\omega_r$ is disk rotation frequency)

$\zeta_0$: damping number of $G_O$

S: $j\omega$

$\omega_3 . \omega_4$: two turning point frequencies ($\omega_3<\omega_4$) of P

An open loop transfer function G to be transmitted from the follow-up error Xe to the lens displacement $X\ell$ is as follows.

$$G = \frac{X\ell}{Xe} = De \cdot P \cdot D_0 \cdot G_0$$

$$= A \cdot \frac{S/\omega_3 + 1}{S/\omega_4 + 1} \cdot \frac{\omega_0^2}{S^2 + 2\zeta_0 \omega_0 S + \omega_0^2}$$

In the closed loop controlling system of Fig. 2,

$$\begin{cases} X\ell = G \cdot Xe \\ Xe = Xd - X\ell \end{cases}$$

Therefore,

$$Xe = \frac{1}{1+G} \cdot Xd$$

Assume that the compression factor in the closed loop transfer function with respect to the disk displacement Xd of the follow-up error Xe is H, and

$$H = \frac{Xe}{Xd} = \left| \frac{1}{1+G} \right|$$

Then, assume that a frequency (hereinafter referred to as cut-off frequency) wherein the compression factor H becomes 1 is $\omega_c$, and

$$|H| = \left| \frac{1}{1+G} \right|$$

$$= \frac{1}{\left| 1 + A \cdot \frac{S/\omega_3 + 1}{S/\omega_4 + 1} \cdot \frac{\omega_0}{S^2 + 2\zeta_0 \omega_0 S + \omega_0^2} \right|}$$

wherein $S = j\omega$; In $\omega = \omega_c$, $\omega_0 << \omega_c$ and $1 << A$. The $\omega_3 . \omega_4$ is so determined that $\omega_3 < \omega_4$ may be established, and

$$1 = |H| \div \frac{1}{\left| A \cdot \frac{\omega_C}{\omega_3} \cdot \frac{\omega_0^2}{\omega_C^2} \right|}$$

Therefore,

$$A = \frac{\omega_3 \cdot \omega_C}{\omega_0^2}.$$

Fig. 3 is a board diagram of the transfer function $G_O$ of the actuator; Fig. 4 is a board diagram of a phase lead compensating circuit P; Fig. 5 is a board diagram of an open loop transfer function G; Fig. 6 is a board diagram of the compression factor H; wherein the solid line is a gain curve and the dotted line is a phase curve.

As shown from Fig. 5 and Fig. 6, the compression $H_r$ near the disk rotation frequency $\omega_r$ ($\omega_r = 2\pi_{fr}$) is as follows.

$$|H_r| = \frac{1}{A} = \frac{\omega_0^2}{\omega_3 \cdot \omega_C}$$

Then, for instance, one case will be described, wherein in order to improve the compression factor $H_r$ near the disc rotation frequency $\omega_r$, a phase lag compensating circuit for causing the gain stage difference in the low frequency is built-in in the feedback controlling system.

Fig. 7 is a block diagram of a feedback controlling system with a phase lag compensating circuit U being built-in therein.

The transfer function of the phase lag compensating circuit U is

$$U = \frac{s + \omega_2}{s + \omega_1}$$

wherein $\omega_1$, $\omega_2$ are two turning-point frequencies ($\omega_1 < \omega_2$) of U.

Thus, the open loop transfer function G′ is as follows.

$$G' = De \cdot P \cdot U \cdot D_0 \cdot G_0$$

$$= A \cdot \frac{s + \omega_2}{s + \omega_1} \cdot \frac{s/\omega_3 + 1}{s/\omega_4 + 1} \cdot \frac{\omega_0^2}{s^2 + 2\zeta_0 \omega_0 s + \omega_0^2}$$

When the $\omega_1 < \omega_r$ has been established, the compression factor $H_r'$ in the disk rotation frequency $\omega_r$ is

$$\left| H_r' \right| = \frac{1}{A \cdot \frac{\omega_2}{\omega_r}} = \frac{\omega_r}{\omega_2} \cdot \frac{\omega_0^2}{\omega_3 \cdot \omega_c}$$

The compression factor is improved by the rate of the $\omega_r/\omega_2$ compared with $H_r$.

Fig. 8 is a board diagram of the phase lag compensating circuit U; Fig. 9 is a board diagram of the open loop transfer function G′ with the U being built-in therein.

However, in the above-described case, the phase of the open loop transfer function G′ becomes $\theta G' < -180°$ near the actuator resonance frequency $\omega_0$ ($\omega_0 = 2\pi f_0$) from Fig. 9 so that it cannot be stably controlled. Also, set the $\omega_1$, $\omega_2$ of the phase lag compensating circuit U so that $\theta G' > -180°$ becomes established, and the compression cannot be expected to be improved, because the $\omega_2/\omega_1$ becomes close to 1.

b. Controlling System of the Present Invention

A controlling unit of the optical-focus-position controlling apparatus of the present invention will be described hereinafter.

Fig. 10 is a block diagram of the controlling system in accordance with the present invention, wherein the phase lag compensating circuit U and a damping compensation circuit T are built-in in the feedback controlling system. The damping compensation circuit T stabilizes the feedback controlling system through the advancement of the frequency above the resonance frequency $\omega_0$ and its vicinity, and the transfer function T is

$$T = \frac{s^2 + 2\zeta_0 \omega_0 s + \omega_0^2}{s^2 + 2\zeta_1 \omega_0 s + \omega_0^2}$$

wherein $1 \leqq \zeta_1$,

Thus, the open loop transfer function G″ is

$$G' = De \cdot P \cdot U \cdot T \cdot D_0 \cdot G_0$$

$$= A \cdot \frac{s+\omega_2}{s+\omega_1} \cdot \frac{s/\omega_3 + 1}{s/\omega_4 + 1} \cdot \frac{\omega_0^2}{s^2\ 2\zeta_1\ \omega_0\ s + \omega_0^2}$$

Construct so that, for example, the phase lag compensating circuit U becomes $\omega_1 \cdot \omega_2 = \omega_0^2$ and to construct so that the damping correction circuit T becomes

$$\zeta_1 = \frac{\omega_1 + \omega_2}{2\omega_0}$$ and

$$G' = A \cdot \frac{s+\omega_2}{s+\omega_1} \cdot \frac{s/\omega_3 + 1}{s/\omega_4 + 1} \cdot \frac{\omega_0^2}{s^2 + (\omega_1 + \omega_2)s + \omega_1 \cdot \omega_2}$$

$$= A \cdot \frac{s/\omega_3 + 1}{s/\omega_4 + 1} \cdot \frac{\omega_0^2}{(s+\omega_1)^2}$$

In the case of the $\omega_1 < \omega_r$, the compression factor $H_r''$ in the disk rotation frequency $\omega_r$ is

$$|H_r'| = \frac{1}{A \cdot \frac{\omega_r^2}{\omega_0^2}} = \frac{\omega_r^2}{\omega_3 \cdot \omega_c}$$

The compression factor $H_r''$ is further improved by the ratio of the $\omega_r^2/\omega_0^2$ as compared with the $H_r$.

Fig. 11 is a board diagram of the damping correction circuit T; Fig. 12 is one example wherein the damping correction circuit T is composed of operation amplifiers $OP_1$, $OP_2$; Fig. 13 is a board diagram of the open loop transfer function G″ with the phase lag compensating circuit U and the damping correction circuit T being built-in therein; Fig. 14 is the frequency characteristics of the compression factor H″.

As apparent from Fig. 14, the phase $\theta$ is rendered to $\theta > -180°$ in the frequency of $\omega_c$ or less, thus resulting in sufficiently stable controlling system.

In the above description, the constants $\omega_1$, $\omega_2$ of the phase lag compensating circuit U are

$\omega_1 \cdot \omega_2 = \omega_0^2$ .

The constant $\zeta_1$ of the damping correction circuit T is constructed to become the following equation.

$$\zeta_1 = \frac{\omega_1 \div \omega_2}{2\,\omega_0}$$

It is effective if such $\omega_1$, $\omega_2$, $\zeta_1$ are provided as the phase $\theta$ of the open loop transfer function G″ becomes $\theta$>-180° in the frequency of $\omega_c$ or lower even if the respective equations are not necessarily satisfied. However if $\omega_1 \cdot \omega_2 = \omega_{02}$,

$$\zeta_1 = \frac{\omega_1 \div \omega_2}{2\,\omega_0} \qquad ,$$

the phase condition of the open loop transfer function G″ becomes most stable, thus resulting in better effect.

Also, the characteristics of the actual actuator is at random, and the resonance frequency $\omega_0$ is dispersed near the $\omega_0$ without having a constant value. If the resonance frequencies of the phase lag compensating circuit U and the damping compensating circuit T are out of phase higher than the resonance frequency of the actuation, the phase $\theta$ of the open loop transfer function G″ is shifted onto the lag side in the frequency above the $\omega_0$ near the $\omega_0$ and becomes $\theta$<-180°. Also, if the phase is shifted low, it is shifted on the lead side and becomes $\theta$>-180°, thus resulting in stability. When the phase lag compensating circuit U and the damping correcting circuit T are designed, it found out that it is better to be set somewhat lower than it in anticipation of the dispersion of the resonance frequency $\omega_0$ of the actuator.

B. The resonance frequency of the linear motor is increased more than the disk rotation frequency to perform the phase lag compensation thereby to improve the stiffness of the low frequency.

a. Conventional Controlling System

Fig. 15 is a block diagram of the conventional radial controlling system. In Fig. 15, a reference Xd is disk displacement, a reference Xℓ is object lens displacement, a reference Xe is follow-up error, a reference Y is disturbance oscillation, a reference De is a detector for converting the radial follow-up error Xe into electrical signals, a reference P is a phase lead compensating circuit for stably performing the radial controlling operation, a reference $G_0$ is a radial actuator or a linear motor for driving and displacing the objective lens in the radial direction, a reference $D_0$ is a driver for driving the $G_0$. The respective transfer function is expressed in the following equation.

$$De = 1$$

$$P = \frac{\frac{S}{\omega_3} + 1}{\frac{S}{\omega_4} + 1}$$

$$D_0 = A \text{ (constant)}$$

$$G_0 = \frac{\omega_0^2}{S^2 + 2\zeta_0\,\omega_0\,S + \omega_0^2}$$

wherein

$\omega_0$ is resonance frequency of $G_0$,
$\zeta_0$ is damping number of $G_0$,
S is $j\omega$, and $\omega_3$, $\omega_4$ are two turning point frequencies ($\omega_3 < \omega_4$).

Also, the disturbance transfer function $G_Y$ to be transmitted to the lens displacement $X\ell$ from the disturbance oscillation Y is

$$G_Y = \frac{X\ell}{Y} = -\frac{s^2}{\omega_0^2} G_0 = -\frac{s^2}{s^2 + 2\zeta_0 \omega_0 s + \omega_0^2}$$

The open loop transfer function G to be transmitted to the lens displacement $X\ell$ from the radial follow-up error Xe is

$$G = \frac{X\ell}{Xe} = De \cdot P \cdot D_0 \cdot G_0 = A \cdot \frac{S/\omega_3 + 1}{S/\omega_4 + 1} \cdot \frac{\omega_0^2}{s^2 + 2\zeta_0 \omega_0 S + \omega_0^2}$$

In the closed loop controlling system of Fig. 15,

$$X\ell = G \cdot Xe - \frac{s^2}{\omega_0^2} G_0 \cdot Y$$

$$Xe = Xd - X\ell$$

Thus,

$$Xe = \frac{1}{1+G} \cdot Xd + \frac{G_Y}{1+G} \cdot Y$$

Assume that the compression factor in the open loop transfer function with respect to the disk displacement Xd of the radial follow-up error Xe is H,

$$H = \frac{Xe}{Xd} = \left| \frac{1}{1+G} \right|$$

The disturbance compression factor $H_Y$ with respect to the disturbance oscillation Y of the radial follow-up error Xe is

$$H_Y = \frac{Xe}{Y} = \left| \frac{G_Y}{1+G} \right| = \left| H \cdot G_Y \right|$$

The acceleration $\alpha_Y$ to be caused by the disturbance oscillation Y is

$\alpha_Y = S^2 \cdot Y$

Also, the disturbance acceleration for displacing Xe by unit distance, i.e., the stiffness with respect to the disturbance is

$$St = \frac{\alpha_Y}{Xe} = \frac{S^2 \cdot Y}{Xe} = \left| \frac{S^2}{H_Y} \right|$$

Then, assume that a frequency (hereinafter referred to as cut-off frequency) wherein the compression factor H becomes 1 is $\omega_c$, and

$$H = \left| \frac{1}{1+G} \right| = \frac{1}{\left| 1 + A \cdot \frac{S/\omega_3 + 1}{S/\omega_4 + 1} \cdot \frac{\omega_0^2}{S^2 + 2\zeta_0 \omega_0 S + \omega_0^2} \right|}$$

wherein $S = j\omega$.

In the $\omega = \omega_c$, $\omega_0 << \omega_c$ and $1 << A$.

$$1 = \left| H \right| \doteqdot \frac{1}{\left| A \cdot \frac{\omega_0^2}{\omega_0^2} \right|} = \frac{\omega_c^2}{A \cdot \omega_0^2}$$

Thus, $\omega_c \doteqdot \sqrt{A} \cdot \omega_0$

Strictly, the $\omega_c$ is represented as $\sqrt{\omega_3 \cdot \omega_c}$, but the $\omega_c \doteqdot \sqrt{A} \cdot \omega_0$ is used hereinafter, because it does not give influences to the substance of the present invention.

In the closed loop controlling system of Fig. 15, the stiffness St with respect to the disturbance is almost constant in the cut-off frequency $\omega_c$ or lower by

$$St = \left| \frac{S^2}{H_Y} \right| = \left| \frac{1+G}{G_Y} \cdot S^2 \right| = \left| -\omega_0^2 \cdot \frac{1 + A \cdot G_0 \cdot \frac{S/\omega_3 + 1}{S/\omega_4 + 1}}{G_0} \right|$$

Then,

$St \doteqdot \left| -A\omega_0^2 \right| = \omega_c^2$

For example, the cut-off frequency is 1 KHz,

$\omega_c = 2\pi \cdot f_c = 2000\pi$

$\therefore St \fallingdotseq (2000\pi)^2 \fallingdotseq 3.95\times10^7 N/m \fallingdotseq 4G/\mu m$

Fig. 16 is a board diagram of the transfer function $G_O$ of the radial actuator or the linear motor; Fig. 17 is a board diagram of a phase lead compensating circuit P; Fig. 18 is a board diagram of the open loop transfer function G; Fig. 19 is a board diagram of the disturbance transfer function $G_Y$; Fig. 20 is a frequency characteristic chart of the compression factor H; Fig. 21 is a frequency characteristic chart of the disturbance compression factor $H_Y$; Fig. 22 is a frequency characteristic chart of the stiffness St with respect to the disturbance, wherein the solid line is a gain curve and the dotted line is a phase curve.

b. Controlling System in the Present Invention

The radial controlling system of the optical-focus position controlling apparatus in accordance with the present invention will be described hereinafter. Fig. 23 is a block diagram of the radial controlling system. In Fig. 23, the same portions as those of Fig. 15 are represented by the same reference characters. Assume here that the resonance frequency $\omega_0$ of $G_O$ is the disk rotation frequency $\omega_r$ or more.

The transfer function of the U′ is

$$U' = \left( \frac{S/\omega_0 + 1}{S/\omega_1 + 1} \right)^2$$

wherein $\omega_1$ is the lower turning-point frequency ($\omega_1 < \omega_0$) of the U. Therefore, the open loop transfer function G′ is

$$G' = De \cdot P \cdot U' \cdot D_0 \cdot G_0$$

$$= A \cdot \frac{S/\omega_3 + 1}{S/\omega_4 + 1} \cdot \left( \frac{S/\omega_0 + 1}{S/\omega_1 + 1} \right)^2 \cdot \frac{\omega_0^2}{S^2 + 2\zeta_0 \omega_0 S + \omega_0^2}$$

The stiffness St with respect to the disturbance is

$$St = \left| \frac{S^2}{H_Y} \right| = \left| \frac{S^2}{H \cdot G_Y} \right| = \left| \frac{(1 + G) \cdot S^2}{G_Y} \right|$$

$$= \left| -\omega_0^2 \cdot \frac{1 + A \cdot G_0 \cdot \frac{S/\omega_3 + 1}{S/\omega_4 + 1} \cdot \left( \frac{S/\omega_0 + 1}{S/\omega_1 + 1} \right)^2}{G_0} \right|$$

Accordingly, in the cut-off frequency $\omega_c$ or lower, the stiffness S becomes as shown in a table 1 given hereinafter. In the low frequency scope of the $\omega_1$ or lower,

$$\left(\frac{\omega_0}{\omega_1}\cdot\omega_C\right)^2$$

is established, thus resulting in performance

$$\left(\frac{\omega_0}{\omega_3}\right)^2$$

time as better as the conventional radial controlling system.

Table 1

| $\omega$ | ~ | $\omega_1$ | ~ | $\omega_0$ | ~ | $\omega_C$ |
|---|---|---|---|---|---|---|
| St | $\left(\frac{\omega_0}{\omega_1}\cdot\omega_C\right)^2$ | ~ | ~ | ~ | $\omega_C^2$ | |

Also, as the $\omega_0$ is higher than the disk rotation frequency $\omega_r$, the stiffness with respect to the disturbance even in the disk rotation frequency $\omega_r$ is improved in performance as compared with the conventional radial controlling system.

Fig. 24 through Fig. 28 show the characteristics in the radial controlling system of Fig. 23. Fig. 24 is a board diagram of the phase lag compensating circuit U′; Fig. 25 is a board diagram of the open loop transfer function G′; Fig. 26 is a frequency characteristic chart of the compression factor H′; Fig. 27 is a frequency characteristic chart of the disturbance compression factor $H_Y$′; Fig. 28 is a frequency characteristic chart of the stiffness St′.

C. Parallel Controlling of the Radial Actuator and the Linear Motor

(a) First, a kinetic model and a controlling system will be described, which are adapted to perform the parallel controlling operation of the radial actuator mechanism and the linear motor mechanism in a case where the radial actuator mechanism is driven with the electromagnetic force through the supporting operation of the objective lens with two parallel springs.

(a - 1) Kinetic Model

Fig. 29 is an illustrating view for illustrating the kinetic model. In Fig. 29, a reference m is a radial actuator moving-part weight; a reference k is a spring constant of a radial actuator moving-part support spring; a reference d is a damping number of a radial actuator moving-part support spring; a reference M is a linear motor moving-part weight, a reference K is a spring constant of the slide bearing of the linear motor; a reference D is a damping number of the slide bearing of the linear motor; a reference $X_1$ is a radial actuator moving-part displacement to be caused by the radial actuator driving force $F_1$; a reference $X_2$ is a linear motor moving-part displacement to be caused by the linear motor driving force $F_2$; a reference Xd is disk displacement; a reference Y is disturbance oscillation.

The kinetic equation of the kinetic model is

$$\begin{cases} m(\ddot{X}_1+\ddot{X}_2+\ddot{Y}) = F_1 - kX_1 - d\dot{X}_1 \\ M(\ddot{X}_2+\ddot{Y}) = F_2 - KX_2 - D\dot{X}_2 - (F_1 - kX_1 - d\dot{X}_1) \end{cases}$$

If the kinetic equation is Laplace-transformed,

$$\begin{cases} F_1 = (ms^2+ds+k)X_1 + ms^2X_2 \times ms^2Y \\ F_2 = ms^2X_1 + \{(M+m)s^2+Ds+K\}X_2 + (M+m)s^2Y_{\circ} \end{cases}$$

If it is converted into a displacement dimension equation,

$$\begin{cases} \dfrac{F_1}{k} = (\dfrac{m}{k}s^2+\dfrac{d}{k}s+1)X_1 + \dfrac{m}{k}s^2X_2 + \dfrac{m}{k}s^2Y \\ \dfrac{F_2}{K} = \dfrac{m}{K}s^2X_1 + (\dfrac{M+m}{K}s^2+\dfrac{D}{K}s+1)X_2 + \dfrac{M+m}{K}s^3Y_{\circ} \end{cases}$$

Assume that the transfer function in the radial actuator transfer function with respect to the radial actuator driving force $F_1$ (or $F_1/k$ in the displacement dimension) of the radial actuator moving-part displacement $X_1$ is $G_R$, and the transfer function in the linear motor transfer function with respect to the linear motor driving force $F_2$ (or $F_2/K$ in the displacement dimension) of the linear motor moving-part displacement $X_2$ is $G_L$, and

$$G_R = \frac{1}{\dfrac{m}{k}s^2+\dfrac{d}{k}s+1} = \frac{\omega_R^2}{s^2+2\zeta_R\omega_R s+\omega_R^2}$$

$$G_L = \frac{1}{\dfrac{M+m}{K}s+\dfrac{D}{K}s+1} = \frac{\omega_L^2}{s^2+2\zeta_L\omega_L s+\omega_L^2}$$

wherein $\omega_R$ is a radial actuator resonance frequency, $\zeta_R$ is a radial actuator damping number, $\omega_L$ is a linear motor resonance frequency, $\zeta_L$ is a linear motor damping number.

$$\omega_R = \sqrt{\frac{k}{m}}\ ,\quad \zeta_R = \frac{d}{2\sqrt{mk}},\quad \omega_L = \sqrt{\frac{K}{M+m}}\ ,$$

$$\zeta_L = \frac{D}{2\sqrt{(M+m)K}}$$

Then, $F_1/k$, $F_2/K$ are respectively inputted into the displacement dimension into $U_1$, $U_2$. The kinetic equation is rewritten with the use of the $G_R$, $G_L$, and $U_1$, $U_2$.

$$\begin{cases} U_1 = \dfrac{1}{G_R} \cdot X_1 + \dfrac{S^2}{\omega_R{}^2} \cdot X_2 + \dfrac{S^2}{\omega_R{}^2} \cdot Y \\ U_2 = \dfrac{m}{M+m} \cdot \dfrac{S^2}{\omega_L{}^2} X_1 + \dfrac{1}{G_L} \cdot X_2 + \dfrac{S^2}{\omega_L{}^2} \cdot Y \end{cases}$$

As the radial actuator moving-part weight m is sufficiently lighter as compared with the linear motor moving-part weight M,

$$\frac{m}{M+m} << 1$$

$$\begin{cases} U_1 = \dfrac{1}{G_R} \cdot X_1 + \dfrac{S^2}{\omega_R{}^2} \cdot X_2 + \dfrac{S^2}{\omega_R{}^2} \cdot Y \\ U_2 = \dfrac{1}{G_L} \cdot X_2 + \dfrac{S^2}{\omega_L{}^2} \cdot Y \end{cases}$$

Thus, the outputs $[X_1, X_2]$ with respect to the inputs $[U_1, U_2, Y]$ are

$$\begin{cases} X_1 = G_R \cdot U_1 - \frac{s^2}{\omega_R^2} G_R \cdot G_L \cdot U_2 - \frac{s^2}{\omega_R^2} G_R \cdot (1 - \frac{s^2}{\omega_R^2} G_L) \cdot Y \\ X_2 = G_L \cdot U_2 - \frac{s^2}{\omega_L^2} G_L \cdot Y \end{cases}$$

(a - 2) Controlling System

Fig. 30 is a block diagram for illustrating the controlling system. In Fig. 30, the following equations are established. Radial follow-up error (Xe) = disk displacement (Xd)-light-focus position displacement ($X\ell = X_1 + X_2$). And linear motor follow-up error (namely, radial actuator burden displacement) (Xa) = disk displacement (Xd)-linear motor moving-portion displacement ($X_2$). The $X_1$ is the radial actuator moving-part displacement.

The parallel controlling operation by the radial actuator mechanism and the linear motor mechanism is effected through the feedback of the radial follow-up error Xe to the radial actuator driving force and the linear motor driving force. Assume that the feedback transfer functions of the radial follow-up error Xe to the inputs $U_1$, $U_2$ are respectively $B_R$, $B_L$, and $U_1 = B_R \cdot Xe$, $U_2 = B_L \cdot Xe$. Also, the open loop transfer function to be transmitted to the optical-focus position displacement $X\ell (= X_1 + X_2)$ from the radial follow-up error Xe is $G = \frac{X\ell}{Xe}$. The disturbance transfer function GY to be transmitted to the optical-focus position displacement $X\ell (= X_1 + X_2)$ from the disturbance oscillation Y is $G_Y = \frac{X\ell}{Y}$. Accordingly, $X\ell = G \cdot Xe + G_Y \cdot Y$. Also, $Xe = Xd - X\ell$,

$$Xe = \frac{1}{1+G} \cdot Xd - \frac{G_Y}{1+G} \cdot Y$$

Then, assume that the compression factor in the closed transfer function with respect to the disk displacement Xd of the radial follow-up error Xe is H, and

$$H = \left| \frac{Xe}{Xd} \right| = \left| \frac{1}{1+G} \right|$$

Also, the disturbance compression factor $H_Y$ with respect to the disturbance oscillation Y of the radial follow-up error Xe is

$$H_Y = \left| \frac{Xe}{Y} \right| = \left| \frac{G_Y}{1+G} \right| = \left| H \cdot G_Y \right|$$

Also, the linear transfer function Ga to be transmitted from the linear motor follow-up error Xa to the linear motor moving-part displacement $X_2$ is $Ga = X_2/Xa$. The disturbance transfer function $Ga_Y$ to be transmitted from the disturbance oscillation Y to the linear motor moving-part displacement $X_2$ is $Ga_Y = X_2/Y$. Thus, $X_2 = Ga \cdot Xa + Ga_Y \cdot Y$. Also, the linear motor follow-up error in the radial actuator burden displacement Xa is

$$Xa = \frac{1}{1+Ga} \cdot Xd - \frac{Ga_Y}{1+Ga} \cdot Y$$

wherein $Xa = Xd - X_2$.

Accordingly, the compression factor in the closed loop transfer function with respect to the disk displacement Xd the linear motor follow-up error Xa is Ha, and

$$Ha = \left| \frac{Xa}{Xd} \right| \doteqdot \left| \frac{1}{1+Ga} \right|$$

Also, the disturbance compression factor $Ha_Y$ with respect to the disturbance oscillation of the linear motor follow-up error Xa is

$$Ha_Y = \left| \frac{Xa}{Y} \right| = \left| \frac{Ga_Y}{1+Ga} \right| \doteqdot \left| Ha \cdot Ga_Y \right|$$

The phase lag argG of the open loop transfer function $G(=\frac{X\ell}{Xe})$ is (-180°) or more and the compression factor $H(=|Xe/Xd|)$ is approximately $H \doteqdot 1/|G|$ in the frequency scope wherein the gain $|G|$ is 1 or larger. Accordingly, the compression factor H showing the performance of the controlling system is determined by the gain difference between the gain $|G|$ $(\omega_c)$ in the cut-off frequency $\omega_c$ which is a frequency of $|H| \doteqdot 1$ and the gain $|G|$ $(\omega_r)$ in the disk rotation frequency $\omega_r$ which is a frequency having the largest component among the frequency components of the disk displacement Xd. Therefore, the larger the gain difference becomes, the better the compression factor H becomes.

Also, the stability of the controlling system largely depends upon the phase of the open loop transfer function G as far as the vicinity to the cut-off frequency $\omega_c$. As the margin provided before the argG in $|G| = 1$ (namely, $\omega = \omega_c$) reaches (-180°) becomes the phase margin, the phase margin is normally set to 40° through 50°. Accordingly, the argG in the $|G| = 1$ is approximately (-140°) through (-130°). The argG is unstable as it becomes closer to (-180°) under the condition of $\omega < \omega_c$, and is oscillated in $\arg G \doteqdot -180°$.

From the above-described, the performance i.e., compression factor of the controlling system and stability can be roughly estimated by the gain curve of the open loop transfer function G and the phase curve. Similarly, the performance i.e., compression factor and stability of the linear motor, can be roughly estimated by the gain curve and phase curve of the linear transfer constant Ga.

The radial follow-up error Xe and the radial actuator burden displacement Xa in a case wherein the parallel controlling operation has been performed in the above-described system are

$$\left\{\begin{array}{l} X_e = \dfrac{1}{\left\{G_R \cdot B_R + G_L\left(1 - \dfrac{s^2}{\omega_R^2} \cdot G_R\right) \cdot B_L + 1\right\}} \cdot X_d \\[2ex] \quad + \dfrac{\left\{\dfrac{s^2}{\omega_R^2} G_R + \dfrac{s^2}{\omega_L^2} \cdot G_L \cdot \left(1 - \dfrac{s^2}{\omega_R^2} \cdot G_R\right)\right\}}{\left\{G_R \cdot B_R + G_L\left(1 - \dfrac{s^2}{\omega_R^2} \cdot G_R\right) B_L + 1\right\}} \cdot Y \\[4ex] X_a = \dfrac{1}{\dfrac{G_L \cdot B_L}{G_R\left(B_R - \dfrac{s^2}{\omega_R^2} \cdot G_L \cdot B_L\right) + 1} + 1} \cdot X_d \\[4ex] \quad + \dfrac{\dfrac{\dfrac{s^2}{\omega_L^2} \cdot G_L \cdot \left\{1 + \dfrac{G_R}{\omega_R^2} \cdot \left(R_R \omega_R^2 - B_L \omega_L^2\right)\right\}}{G_R\left(B_R - \dfrac{s^2}{\omega_R^2} \cdot G_L \cdot B_L\right) + 1}}{\dfrac{G_L \cdot B_L}{G_R\left(B_R - \dfrac{s^2}{\omega_R^2} \cdot G_L \cdot B_L\right) + 1} + 1} \cdot Y \end{array}\right.$$

(b) Next, there will be described a kinetic model controlling system for performing the parallel controlling operation of the radial actuator mechanism and the linear motor mechanism in a case where the incident optical-axis of the objective lens is adapted to be inclined through the rotation of the mirror in the radial actuator mechanism with the use of the electromagnetic force, to laterally displace the optical-focus-position.

(b - 1)Kinetic Model

Fig. 31 is an illustrating view for illustrating the kinetic model. In Fig. 31, a reference numeral I is a radial actuator moving-part inertia moment; a reference $k\theta$ is a rotary spring constant of the radial actuator moving-part support rotary spring, a reference $d\theta$ is a damping number of the radial actuator moving-part support rotary spring, a reference M is a linear motor moving-part weight, a reference K is a spring constant of the slide bearing of the linear motor, a reference D is a damping number of the slide bearing of the linear motor, a reference $\theta$ is a radial actuator moving-part rotary angle to be caused by the radial actuator driving torque $T_1$, a reference f is an objective lens focus distance, a reference $X_1$ is an optical focus position displacement to be caused by the optical axis rotation, a reference $X_2$ is a linear motor moving-part displacement to be caused by the linear motor driving force $F_2$, a reference Xd is a disk displacement, a reference Y is a disturbance oscillation. In this case, the optical-axis rotation angle is $2\theta$ and the optical-focus-position displacement $X_1$ to be caused by the optical-axis rotation is approximately $X_1 = 2\theta \cdot f$.

The kinetic equation of the kinetic model is

$$\begin{cases} I\theta = T_1 - k_\theta \cdot \theta - d_\theta \cdot \theta \\ M(X_2 + Y) = F_2 - KX_2 - DX_2 \end{cases}$$

If the kinetic equation is Laplace-transformed,

$$\begin{cases} 2fT_1 = (Is^2 + d_\theta s + k\theta)X_1 \\ F_2 = (Ms^2 + Ds + K)X_2 + Ms^2 Y \end{cases}$$

If it is converted into a displacement dimension,

$$\begin{cases} \dfrac{2fT_1}{k_\theta} = \left(\dfrac{I}{k_\theta}s^2 + \dfrac{d_\theta}{k_\theta}s + 1\right)X_1 \\[2ex] \dfrac{F_2}{K} = \left(\dfrac{M}{K}s^2 + \dfrac{D}{K}s + 1\right)X_2 + \dfrac{M}{K}s^2 Y \end{cases}$$

Assume that the transfer function with respect to the radial actuator driving-torque T1 (or $2fT_1/K_\theta$) in the displacement dimension) of the optical-focus-position displacement $X_1$ to be caused by the optical-axis rotation is a radial actuator transfer function $G_R$, and the transfer function with respect to the linear driving force $F_2$ (or $F_2/K$ in the displacement dimension) of the linear motor moving-part displacement $X_2$ is a linear motor transfer function $G_L$, and

$$G_R = \frac{1}{\frac{I}{k_\theta} s^2 + \frac{d_\theta}{k_\theta} + 1} = \frac{\omega_R^2}{s^2 + 2\zeta_R \omega_R s + \omega_R^2}.$$

$$G_L = \frac{1}{\frac{M}{K} s^2 + \frac{D}{K} s + 1} = \frac{\omega_L^2}{s^2 + 2\zeta_L \omega_L s + \omega_L^2}$$

wherein $\omega_R$ is a radial actuator resonance frequency, $\zeta_R$ is a radial actuator damping number, $\omega_L$ is a linear motor resonance frequency, $\zeta_L$ is a linear motor damping number,

$$\omega_R = \frac{k_\theta}{I}, \quad \zeta_R = \frac{d_\theta}{2\sqrt{I k_\theta}}, \quad \omega_L = \frac{K}{M}, \quad \zeta_L = \frac{D}{2\sqrt{MK}}$$

Then, input $2fT_1/K_\theta$, $F_2/K$ respectively into the displacement dimension into $U_1$, $U_2$, and rewrite the kinetic equation with the use of the $G_R$, $G_L$ and $U_1$, $U_2$, and

$$\begin{cases} U_1 = \dfrac{1}{G_R} \cdot X_1 \\ U_2 = \dfrac{1}{G_L} \cdot X_2 + \dfrac{s^2}{\omega_L^2} \cdot Y \end{cases}$$

Thus, the outputs $[X_1, X_2]$ with respect to the inputs $[U_1, U_2, Y]$ are

$$\begin{cases} X_1 = G_R \cdot U_1 \\ X_2 = G_L \cdot U_2 - \dfrac{s^2}{\omega_L^2} \cdot G_L \cdot Y \end{cases}$$

(b-2) Controlling system

Fig. 32 is a block diagram for illustrating the controlling system. As the description of this controlling system is the same as that of the (a-2), the summary is omitted.

The radial follow-up error Xe, the radial actuator burden displacement Xa in a case where the parallel controlling operation has been performed in this system are

$$\begin{cases} Xe = \dfrac{1}{(G_R \cdot B_R + G_L \cdot B_L + 1)} \cdot Xd + \dfrac{\frac{S^2}{\omega_L^2} \cdot G_L}{(G_R \cdot B_R + G_L \cdot B_L + 1)} \cdot Y \\ Xa = \dfrac{1}{\frac{G_L \cdot B_L}{G_R \cdot B_R + 1} + 1} \cdot Xd + \dfrac{\frac{S^2}{\omega_L^2} \cdot G_L}{\frac{G_L \cdot B_L}{G_R \cdot B_R + 1} + 1} \cdot Y \end{cases}$$

(c) The first conditions, i.e., the ratio between the low-frequency gain $A_L$ of the feed-back transfer function to the linear motor and the low-frequency gain $A_R$ of the feedback transfer function to the radial actuator is made to coincide with the square of the ratio between the resonance frequency $\omega_R$ of the radial actuator and the resonance frequency $\omega_L$ of the linear motor. Namely, $A_L/A_R = \omega_R^2/\omega_L^2$ will be described.

Represent the feedback transfer functions $B_R$, $B_L$ by the low-frequency gains $A_R$, $A_L$ and the servo-compensating circuit transfer function C, $B_R = A_R \cdot C$, $B_L = A_L \cdot C$. Assume that the ratio between the low-frequency gains $A_L$ and $A_R$ is $\alpha \cdot (\omega_R/\omega_L)^2$, and from $A_L/A_R = \alpha(\omega_R/\omega_L)^2$,

$$\begin{cases} B_R = A_R \cdot C \\ B_L = \alpha \cdot \left(\dfrac{\omega_R}{\omega_L}\right)^2 \cdot A_R \cdot C \end{cases}$$

(c-1) There will be described a parallel controlling system in a case where the radial actuator mechanism designed to support the objective lens by two parallel springs and is driven with the use of the electromagnetic force.

In the case of the parallel controlling system, the disturbance compression factor $Ha_Y$ with respect to the disturbance oscillation Y of the linear motor follow-up error Xa will be considered. The $Ha_Y$ is obtained as follows through substitution of the above-described values into the $B_R$, $B_L$.

$$Ha_Y = \left| \dfrac{\frac{S^2}{\omega_L^2} G_L \cdot \{1 + A_R \cdot C \cdot G_R(1 - \alpha)\}}{1 + A_R \cdot C\{G_R + \alpha \cdot G_L \cdot (\frac{\omega_R}{\omega_L})^2 \cdot (1 - \frac{S^2 \omega_R}{\omega_R^2})\}} \right|$$

From $1 \ll A_R$, $A_R G_R \gg 1$ in the low frequency zone. From $A_R G_L \gg 1$,

$$Ha_Y \doteqdot \left| \frac{(1+\alpha)}{\left\{ \frac{\omega_L^2}{s^2 G_L} + \alpha \left( \frac{\omega_R^2}{s^2 G_R} - 1 \right) \right\}} \right|$$

From this equation, in $\alpha = 1$, namely, $A_L/A_R = \omega_R^2/\omega_L^2$,$Ha_Y \doteqdot 0$ is established, and the $Ha_Y$ becomes smallest. As the movable range of the radial actuator is narrow, the disturbance compression factor $Ha_Y$ becomes smallest and the radial actuator burden displacement becomes smallest, whereby it has a large effect in increasing the stability of the radial parallel controlling system. Also, it is found out from the above points that the $A_L/A_R = \omega_R^2/\omega_L^2$ is optimum in value and the value closer to the value is more desirable.

(c-2) There will be described the parallel controlling system in a case wherein the incident optical-axis of the objective lens is adapted to be inclined to displace the optical-focus position laterally through the rotation of the mirror with the use of the electromagnetic force in the radial actuator mechanism.

In the case of the parallel controlling system, the open loop transfer function G and the linear transfer function Ga are considered. If the above-described values are substituted into the $B_R$, $B_L$ to obtain the G and Ga,

$$\begin{cases} G = G_R B_R + G_L B_L = A_R \cdot C \cdot G_R \cdot \left(1 + \alpha \cdot \frac{\omega_R^2}{\omega_L^2} \cdot \frac{G_L}{G_R}\right) \\ Ga = \frac{G_L B_L}{G_R B_R + 1} = \frac{\alpha \cdot \frac{\omega_R^2}{\omega_L^2} \cdot G_L}{G_R + \frac{1}{A_R \cdot C}} \end{cases}$$

Here, see Fig. 33 showing the board diagram of the open transfer function G in the parallel controlling system and Fig. 34 showing the board diagram of the linear transfer function Ga in which both figures relate to $\alpha = 0.25$, 1, 4 respectively, while the solid line shows a gain curve and the dotted line shows a phase curve. Also, in the open loop transfer function G and the linear transfer function Ga, the servo-compensating circuit transfer function C is considered the phase lead compensation because of the controlling safety compensation.

Namely,

$$C = \frac{\frac{s}{\omega_3} + 1}{\frac{s}{\omega_4} + 1} \qquad (\omega_R \ll \omega_3 < \omega_4)$$

In the observation of the gain curve of Fig. 33, compare $|G|(\omega_r)$ with $|G|(\omega_c)$ when the low frequency gain $A_R$ has been determined so that $|G|(\omega_c) \doteqdot 1$ may be established with the largest frequency of the phase margin as the cut-off frequency $\omega_c$, and in the $\alpha < 1$, the $|G|(\omega_r)$ becomes larger in proportion to the $\alpha$ as the $\alpha$ becomes larger, but when it is larger than $\alpha \doteqdot 1$, the $|G|(\omega_r)$ becomes just closer to a constant value if the $\alpha$ becomes larger, and does not become larger so much. It is found out from this point that it is better to make larger than $\alpha \doteqdot 1$.

It is found out from the observation of the gain curve of Fig. 34 that when it is smaller than the $\alpha \doteqdot 1$, the frequency scope wherein the gain $|Ga|$ of the linear transfer function Ga becomes $1 < |Ga|$ is approximately

$\omega_R$ and its vicinity or lower, while in the case of $\alpha>1$, the frequency scope extends as far as the $\omega_c$ and its vicinity. As described hereinabove, the linear motor cannot expect the precise controlling operation from its construction because of influences of stick slips, etc. Thus, it is meaningless to extend the linear controlling zone as far as the high-frequency scope such as approximately $\omega_c$. Also, the action of the linear motor can be the disturbance of the radial actuator due to the non-linear movement. Accordingly, it is found out that $\alpha \doteqdot 1$ or smaller is better.

From the above two points, it is optimum to have $\alpha \doteqdot 1$, namely, $A_L/A_R \doteqdot \omega_R^2/\omega_L^2$.

(d) The second conditions, namely, addition of the controlling current of the linear motor to the radial actuator controlling current through the second order high-pass filter where the turning-point frequency is $\omega_L$, i.e., linear motor resonance frequency, will be described hereinafter.

The description will be given on the assumption that the first conditions, i.e., $A_L/A_R = \omega_R^2/\omega_L^2$ explained in (c) are already satisfied.

When the above-described addition controlling operation is not effected,

$$\begin{cases} B_R = A_R \cdot C \\ B_L = \left(\dfrac{\omega_R}{\omega_L}\right)^2 \cdot A_R \cdot C \end{cases}$$

as described hereinabove, but when the addition controlling operation has been effected,

$$\begin{cases} B_R = \left(1 + \dfrac{S^2}{\omega_L^2} \cdot G_L\right) \cdot A_R \cdot C \\ B_L = \left(\dfrac{\omega_R}{\omega_L}\right)^2 \cdot A_R \cdot C \end{cases}$$

(d-1) There will be described a parallel controlling system in a case where the objective lens is supported with two parallel springs in the radial actuator mechanism and is driven with the use of the electromagnetic force.

A block diagram for illustrating a system of the addition controlling operation is shown in Fig. 35. In Fig. 35, a reference $B_R$ is shown in $A_R \cdot C$, and a reference $B_L$ is divided in two, $A_L \cdot C$ and $\omega_R^2/\omega_L^2$. Also, $S^2G_L/\omega_L^2$ is the second order high-pass filter wherein the turning point frequency is $\omega_L$.

When the above-described addition controlling operation is not effected through the filter,

$$\begin{cases} G = A_R \cdot C \cdot G_R \cdot \left\{1 + \dfrac{\omega_R^2}{\omega_L^2} \cdot \left(\dfrac{G_L}{G_R} - \dfrac{S^2}{\omega_R^2}\right)\right\} \\ Ga = \dfrac{\dfrac{\omega_R^2}{\omega_L^2} \cdot G_L}{G_R \cdot \left(1 - \dfrac{S^2}{\omega_L^2} G_L\right) + \dfrac{1}{A_R \cdot C}} \end{cases}$$

but when the above-described addition controlling operation has been effected,

$$\begin{cases} G = A_R \cdot C \cdot G_R \cdot \left\{ 1 + \dfrac{\omega_R{}^2}{\omega_L{}^2} \cdot \dfrac{G_L}{G_R} \right\} \\ Ga = \dfrac{\dfrac{\omega_R{}^2}{\omega_L{}^2} \cdot G_L}{G_R + \dfrac{1}{A_R\,C}} \end{cases}$$

Fig. 36 and Fig. 37 are respectively board diagrams of the open loop transfer function G and the linear transfer function Ga in a case where the above-described addition controlling operation has not been effected. Fig. 38 and Fig. 39 are respectively board diagrams of the open loop transfer function G and the linear transfer function Ga in a case where the above-described addition controlling operation has been effected. Figs. 36 through 39 respectively show $\omega_R/\omega_L(=\beta)=1$, 2, 4, 8, wherein the solid line shows the gain curve and the dotted line shows the phase curve. Also, in the open loop transfer function G and the linear transfer function Ga, the servo-compensating circuit transfer function C is the phase lead compensation for the controlling stable compensation.

In Fig. 37 and Fig. 39, the gain curve will be observed, and it is found out that the greater $\beta$ becomes, the more the low frequency gain of the linear transfer function Ga increases and the better the linear compression factor becomes. Namely, as $\beta$ becomes larger, the radial actuator burden Xa becomes smaller and the radial parallel controlling system becomes stable.

Then, in Fig. 36 and Fig. 38, the phase curve will be observed. In Fig. 36 wherein the addition controlling operation is not effected, a case exists wherein the phase $\arg G < -180°$ is established near the radial actuator resonance frequency $\omega_R$ when the $\beta$ becomes large, thus resulting in an extremely unstable condition. As the cut-off frequency $\omega_c$ can be set only in such a frequency scope as the phase $\arg G > -180°$ may be established, the $\omega_R$ becomes larger than the $\omega_c$ when the $\arg G < -180°$ is established in the radial actuator resonance frequency $\omega_R$ and its vicinity, so that the difference between the low frequency gain $|G|(\omega_r)$ and the $|G|(\omega_c)$ becomes extremely smaller. Accordingly, the compression factor H becomes worse so that the radial follow-up error cannot be controlled small. On the other hand, in Fig. 38 wherein the addition controlling operation has been effected, the argG is larger than (-180°), thus being sufficiently stable in the scope as far as $\omega_c$ established in the high frequency. Accordingly, the $\beta$ can be made larger. Accordingly, the radial parallel controlling system of the high compression factor and the better stability can be provided.

(d-2) There will be described a parallel controlling system in a case wherein the incident optical axis of the objective lens is adapted to be tilted, through the rotation of the mirror with the use of the electromagnetic force in the radial actuator mechanism, to laterally displace the optical-focus-position.

In the parallel controlling system, the above-described addition controlling operation is not required so much if the gravity-center position of the rotation movable-part including the mirror coincides with the support-point position. However, when the gravity-point position of the rotation movable-part including the mirror is somewhat slipped out of the support-point position, the kinetic model similar to the kinetic model of the objective lens driving can be applied, and the addition controlling operation becomes effective as described in the above-described (d-1).

C'. <u>There will be described respective damping numbers in the parallel controlling operation of the radial actuator and the linear motor.</u>

In the above-described description, the concrete values of the damping numbers $\zeta_R$, $\zeta_L$ of the radial actuator and the linear motor were not mentioned. However, when the $\zeta_R$, $\zeta_L$ are small in the $\zeta_R<1$, $\zeta_L<1$, the phase condition of the open loop transfer function G becomes unstable.

The loop transfer function G is represented by the same equation even in the parallel controlling system in a case where the incident optical axis of the objective lens is adapted to be tilted, through the rotation of the mirror with the use of electromagnetic force in the radial actuator, to laterally vary the optical focus, position, also even in the parallel controlling system in a case where the addition controlling operation has been performed as in the above description (d-1) as a mechanism for driving the radial actuator through the support of the objective lens with two parallel springs and by the use of the electromagnetic force. Thus,

$$G = A_R \cdot C \cdot G_R \cdot \{1 + \frac{\omega_R^2}{\omega_L^2} \cdot \frac{G_L}{G_R}\}$$

The open loop transfer function G will be described hereinafter.

Fig. 40 is one example of the board diagram of the open loop transfer function G when the $\zeta_R$, $\zeta_L$ are smaller, and shows in the case of such as $\zeta_R = 0.1$, $\zeta_L = 0.2$. The phase condition is extremely disturbed between $\omega_L$ and $\omega_R$ in frequency $\omega$ and the gain condition also has a minimum value. Namely, assume that the frequency is $\omega_N$, and the phase difference between the radial actuator driving displacement and the linear motor driving displacement in the frequency $\omega_N$ is 90° or more, approximately 180°. Namely, the radial actuator and the linear motor are displaced in the reverse direction.

To stabilize such unstable condition as described hereinabove, it is necessary to make smaller the phase difference in the frequency range. That is to make lead the phase of the linear motor in the frequency range and lag the phase of the radial actuator. Namely, make larger the damping numbers $\zeta_L$, $\zeta_R$ of the linear motor and the radial actuator.

Fig. 41 is a block diagram showing a controlling system wherein the damping correction has been performed in the parallel controlling system in a case wherein the addition controlling operation has been performed as a mechanism for supporting the objective lens with two parallel springs to drive the radial actuator with the use of the electromagnetic force. Also, Fig. 42 is a block diagram showing a controlling system wherein the damping correction has been made in a parallel controlling system in a case where the incident optical-axis of the objective lens is adapted to be tilted to laterally displace the optical focus position through the rotation of the mirror in the radial actuator with the use of the electromagnetic force.

Fig. 43 is a board diagram of the open loop transfer function G with the damping correction being performed, the solid line showing the gain curve, the dotted line showing the phase curve.

Apply the damping correction circuit T described in A to the radial actuator and the linear motor like this through the application of the radial actuator transfer function $G_R$ or the linear motor transfer function $G_L$ to the transfer function $G_O$ in the description of and flow the respective currents through the damping correction circuits $T_R$, $T_L$ wherein the transfer functions are represented by

$$T_R = \frac{s^2 + 2\zeta_R \omega_R s + \omega_R^2}{s^2 + 2\zeta'_R \omega_R s + \omega_R^2} \qquad (\zeta'_R \geqq 1)$$

$$T_L = \frac{s^2 + 2\zeta_L \omega_L s + \omega_L^2}{s^2 + 2\zeta'_L \omega_L s + \omega_R^2} \qquad (\zeta'_L \geqq 1)$$

thereby to assume that the apparent transfer functions of the radial actuator and the linear motor are

$G_{R'} = G_R \cdot T_R$
$G_{L'} = G_L \cdot T_L$

and the apparent damping numbers $\zeta'_R$ , $\zeta'_L$ become $1 \leqq \zeta'_R$ , $1 \leqq \zeta'_L$ , thus resulting in sufficiently stable open loop transfer function G.

C″. There will be described the improvement of stiffness in the low frequency of the parallel control system between the radial actuator and the linear motor.

To apply a contrivance of improving the stiffness St in the low frequency through the application of the phase lag compensating circuit U′ of the description of B, there are considered a case of applying the phase lag compensating circuit to the radial actuator controlling current, and a case of applying it to the linear motor controlling current.

In the parallel controlling system between the radial actuator and the linear motor, the resonance frequency $\omega_L$ of the linear motor is generally lower than the resonance frequency $\omega_R$ of the radial actuator and the linear transfer function Ga (Ga = X2/Xa, which is a transfer function to be transmitted from the linear motor follow-up error Xa to the linear motor moving-part displacement X2) apparently performs the phase lag compensation, namely, a function of increasing the low frequency gain, of the radial actuator. Accordingly, it is more effective to apply the phase lag compensating circuit U′ to the linear motor controlling current. A block diagram of the parallel controlling system with the phase lag compensating circuit U′ being provided therein is shown in Fig. 44 and Fig. 45. Fig. 44 is a block diagram in the parallel controlling system in a case wherein the radial actuator mechanism has been driven by two parallel springs; Fig. 45 is a block diagram in the parallel controlling system in a case wherein the radial actuator mechanism has been driven through the mirror rotation, wherein $T_R$, $T_L$ are damping correction circuits which are applied according to the values, to the damping numbers $\zeta_R$, $\zeta_L$ as in the description of C″. Fig. 46 is a board diagram of the open loop transfer function G of the parallel controlling system with the phase lag compensating circuit U′, wherein the solid line is the gain curve and the dotted line is the phase curve.

The transfer function of the phase lag compensating circuit U′ is

$$U_L' = \left( \frac{S/\omega_L + 1}{S/\omega_1 + 1} \right)^2$$

In the application of the linear motor transfer function $G_L$ to the transfer function $G_O$ of the description of B, $\omega_0$ becomes $\omega_L$. Through the flowing operation of the linear motor controlling current through the phase lag compensating circuit U′, the stiffness St with respect to the disturbance is improved in performance of $(\omega_L/\omega_1)^2$ times in the low frequency.

D. There will be described the supply of the memory signal to the radial actuator or the linear motor through the advance memorization of the controlling current for the radial control use.

a) Conventional radial controlling system

Fig. 47 is a block diagram of the conventional radial controlling system. In Fig. 47, reference Xd is a disk displacement; reference Xℓ is an optical-focus-position displacement; reference Xe is a radial error, reference Ee is a radial error signal; reference $E_R$ is a radial control driving circuit; reference $E_O$ is a radial actuator or a linear motor feed current; reference De is a detector for converting the radial error Xe into a radial error signal as an electric signal; reference P is a servo-compensating circuit for stably performing the radial controlling operation; reference $G_O$ is a radial actuator or a linear motor for driving and displacing the optical focus position in the radial direction; reference M is a memory for storing the radial control driving current $E_R$, reference $S_M$ is a switch as to whether or not the memory signal $E_M$ is added to the radial actuator or linear motor feed current $E_O$; reference $S_R$ is a change-over switch as to whether or not the radial driving current $E_R$ is fed to the radial actuator or linear motor $G_O$, or whether the jump control driving current or the access control driving current Ea is fed to the radial actuator or linear motor $G_O$.

The radial controlling operation is performed, first, on the sides of $S_M$:off, $S_R$:$E_R$ with the radial feedback controlling loop being closed. At this time point, the radial control driving current $E_R$ is synchronized with the disk rotation and is memorized in the memory M. Then, the memory signal $E_M$ is added to the radial driving current $E_O$ as $S_M$:on, and $S_R$ is switched onto the $E_R$ side or the Ea side thereby to perform the radial control, the access control or the jump control.

However, in this conventional control, the memory signal $E_M$ stored in the memory M is the radial control driving current $E_R$. Except for the signal component for causing it to follow up into the eccentric condition of the information track, there largely exist noise component, component to be caused by the individual track shape, high-frequency component for stabilizing the closed-loop servo condition. Thus, if the additional supply is made to the radial actuator or the linear motor, the radial setting condition does not become stable as is expected, but conversely becomes sometimes unstable because of the above-described components.

b) Radial controlling system of the present invention

Fig. 48 is a block diagram of the radial controlling system in one embodiment of the optical-focus-position controlling apparatus in accordance with the present invention. In Fig. 48, the same components as those of Fig. 47 are represented by the same reference characters; reference B is a band-pass filter with the disk rotation frequency $\omega_r$ as an approximately frequency, which lets pass only the disk rotation frequency component current $E_R'$, of the radial control driving current $E_R$. Memory M stores the signal $E_R'$. The transfer function of the band-pass filter B is

$$B = \frac{2\zeta\omega_r s}{s^2 + 2\zeta\omega_r s + \omega_r^2}$$

wherein $\omega_r$ is disk circuit frequency; $\zeta$ is damping number. One example of the board diagram of the transfer function is shown in Fig. 49. It is to be noted that the radial control, the access control, the jump control are performed in a manner similar to the conventional one.

The radial controlling system of the present invention is different from the conventional controlling system. The component showing the eccentric condition of the information track in the component of the driving current is almost the disk rotation frequency component current $E_{R'}$. Only the disk rotation frequency component current $E_{R'}$ is stored in the memory M by the use of the common eccentric signals even in the different tracks. Even when the radial controlling operation is effected upon any track, the disk rotation frequency component current $E_{R'}$ memorized in the controlling signal is added in synchronous relation with the disk rotation to reduce the relative displacement between the optical focus position and the disk information track, to stabilize the radial setting condition, and to reduce the radial error, thus resulting in improved accuracy.

If a band-pass filter B, having a range wherein the damping number $\zeta$ is 1 or smaller is used, the component of the radial control driving current $E_R$ passing through the band-pass filter B can be sufficiently restricted to the disk rotation frequency component.

Although the low-pass filter, instead of the band-pass filter B, can be used, the phase of the output signal of the filter is made lag in the adoption of the low-pass filter, thus making it impossible to provide better eccentric signal.

To introduce the memory in the parallel control system of C, it is required to perform the memory control on the input $U_1$ of the radial actuator and/or the input $U_2$ of the linear motor. Especially it is more advantageous to have the memory control on the input $U_2$ which is corresponding to the linear motor driving current $E_R$. The description thereof will be given hereinafter.

Fig. 50 is a block diagram in the memory controlling operation in the parallel control system in which the radial actuator mechanism has been driven by two parallel springs. Fig. 51 is a block diagram in a case where the memory controlling operation has been effected in the parallel controlling system of the mirror-rotation driving operation of the radial actuator mechanism. $T_R$, $T_L$, $U_{L'}$ are put in parentheses, because the memory controlling operation is effective even in a case where the compensation of the $T_R$, $T_L$, $U_L$, has been performed.

In the parallel controlling system described in C, the resonance frequency $\omega_L$ of the linear motor $G_L$ is generally lower than the resonance frequency $\omega_R$ of the radial actuator $G_R$. The linear transfer function Ga is adapted to apparently perform the phase lag compensation of the radial actuator $G_R$. Accordingly, the follow-up operation is effected by the linear-motor driving operation with respect to the large displacement in the low frequency component of the disk displacement Xd and is effected by the radial actuator driving operation with respect to the small displacement in the high frequency component. Namely, as the follow-up operation is almost effected by the linear motor $G_L$ with respect to the components near the disk rotation frequency $\omega_r$ of the disk displacement Xd, it is more advantageous to perform the memory control on the linear motor driving current.

Also, it is advantageous to perform the memory control on the linear motor driving current to cause the entire optical head to be followed and driven with respect to the large displacement of the disk rotation, because the movable range of the radial actuator is narrow when the disk displacement Xd is large, the more precise follow-up cannot be performed due to the optical offset caused when the follow-up displacement of the radial actuator, furthermore, the component of the disk-rotation number $\omega_r$ is the largest in the frequency component when the disk displacement Xd is large.

Combine the controlling described in A with the controlling described in B, as illustrated, and more stability, improved stiffness are provided.

According to the present invention, an optical-focus-position controlling apparatus is provided wherein the compression factor is higher, the stability is better, the strength is better against the disturbance oscillation, the stable parallel controlling operation is performed between the radial actuator and the linear motor. Also, the radial setting condition can be made stable.

## Claims

**1.** Servo-System for positioning an optical beam (6) of an optical or optical magnetic disk apparatus, comprising:

- a linear motor (7) for driving the optical head (6) in the radial direction of an optical disk (8),
- a radial actuator which is built-in within said optical head and adapted to drive an objective lens (4), for causing the lights to be focused, in the radial direction of the optical disk (8) by an electromagnetic means or
- a radial actuator for rotating and driving a mirror (3), for causing the lights to be reflected, in the radial direction of the optical disk (8) by the electromagnetic means,
- by performing parallel controlling operation of the linear motor (7) and the radial actuator,

**characterized by**

a first condition $\{A_L/A_R \fallingdotseq (\omega_R/\omega_L)^2\}$ under which the ratio between the low frequency gain $A_L$ of a feed-back transfer function to said linear motor (7) and the low frequency gain $A_R$ of the feedback transfer function to said radial actuator is rendered to coincide approximately with the square of the ratio between the resonance frequency $\omega_R$ of the radial actuator and the resonance frequency $\omega_L$ of said linear motor.

**2.** Servo-System as defined in claim 1, characterized by a second condition under which the controlling current of said linear motor is added into said radial actuator controlling current through a secondary by-pass filter wherein a turning-point frequency is almost said linear motor resonance frequency $\omega_L$.

**3.** Servo-System as defined in claim 1 or 2, characterized by a third condition under which a radial actuator controlling current is flowed into a damping correction circuit having a transfer function

$$T_R = \frac{S^2 + 2\zeta_R \omega_R S + \omega_R^2}{S^2 + 2\zeta'_R \omega_R S + \omega_R^2}$$

wherein an apparent damping number becomes $\zeta'_R \geqq 1$, when the damping number $\zeta_R$ of said radial actuator is smaller than 1, a linear motor controlling current is flowed into a damping correction circuit having a transfer function

$$T_L = \frac{S^2 + 2\zeta_L \omega_L S + \omega_L^2}{S^2 + 2\zeta'_L \omega_L S + \omega_L^2}$$

wherein an apparent damping number becomes $\zeta'_L \geqq 1$, when the damping number $\zeta_L$ of said linear motor is smaller than 1.

**4.** Servo-System as defined in one of claims 1 to 3, wherein the driving current of said radial actuator is flowed through a band-pass filter wherein the rotation frequency $\omega_r$ of the optical disk (8) is approximately a central frequency, is stored in advance in synchronous relation with the optical disk rotation, said stored signal is fed into said linear motor (7).

**5.** Servo-System as defined in one of claims 1 to 4, characterized by a phase lag compensating circuit (U) having a transfer function

$$U = \frac{s + \omega_2}{s + \omega_1}$$

wherein $\omega_1$, $\omega_2$ are two turning-point frequencies and $\omega_2$ is higher than $\omega_1$, and a damping correction circuit (T) having a transfer function

$$T = \frac{s^2 + 2\zeta_0 \ \omega_0 \ s + \omega_0^2}{s^2 + 2\zeta_1 \ \omega_0 \ s + \omega_0^2}$$

wherein $\zeta_1$ is a damping number, $\omega_0$ is a resonance frequency of said actuator, and $\zeta_0$ is a damping number of said actuator.

**6.** Servo-System as defined in one of claims 1 to 4, characterized by a resonance frequency $\omega_L$ of said linear motor (7) which is near or higher to the rotation frequency $\omega_r$ of the disk (8), and a compensating circuit for giving to said controlling current the phase lag compensation which raises the gain of the frequency including the resonance frequency.

**7.** Servo-System as defined in claim 1, wherein the driving current of said radial actuator is flowed through a band-pass filter wherein the rotation frequency $\omega_r$ of the optical disk (8) is approximately a central frequency, is stored in advance in synchronous relation with the optical disk rotation, said stored signal is fed into said radial actuator.

**Revendications**

**1.** Système asservi pour le positionnement d'un faisceau optique (6) d'un appareil à disque optique ou à disque magnéto-optique comprenant :

un moteur linéaire (7) pour entraîner la tête optique (6) dans la direction radiale d'un disque optique (8),

un actionneur radial qui est incorporé dans ladite tête optique et conçu pour entraîner une lentille d'objectif (4), pour faire en sorte que la lumière soit focalisée, dans la direction radiale du disque optique (8) par un moyen électromagnétique ou

un actionneur radial pour faire tourner et entraîner un miroir (3) pour faire en sorte que la lumière soit réfléchie, dans la direction radiale du disque optique (8) par le moyen électromagnétique,

en effectuant une opération de commande en parallèle du moteur linéaire (7) et de l'actionneur radial,

caractérisé par une première condition $\{A_L/A_R \fallingdotseq (\omega_R/\omega_L)^2\}$ selon laquelle le rapport entre le gain à basse fréquence $A_L$ d'une fonction de transfert de contre réaction vers ledit moteur linéaire (7) et le gain à basse fréquence $A_R$ de la fonction de transfert de contre réaction vers ledit actionneur radial est amené à coïncider approximativement avec le carré du rapport entre la fréquence de résonnance $\omega_R$ de l'actionneur radial et de la fréquence de résonnance $\omega_L$ dudit moteur linéaire.

**2.** Système asservi selon la revendication 1, caractérisé par une seconde condition selon laquelle le courant de commande dudit moteur linéaire est ajouté au courant de commande dudit actionneur radial par l'intermédiaire d'un filtre passe-haut du second ordre dans lequel une fréquence de point d'inflexion est presque la fréquence de résonnance dudit moteur linéaire $\omega_L$.

**3.** Système asservi selon la revendication 1 ou la revendication 2, caractérisé par une troisième condition selon laquelle un courant de commande de l'actionneur radial s'écoule dans un circuit de correction d'amortissement ayant une fonction de transfert :

$$T_R = \frac{S^2 + 2\zeta_R \omega_R S + \omega^2_R}{S^2 + 2\zeta'_R \omega_R S + \omega^2_R}$$

dans laquelle un nombre d'amortissement apparent devient $\zeta'_R \geqq 1$, lorsque le nombre d'amortissement $\zeta_R$ dudit actionneur radial est plus petit que 1, un courant de commande du moteur linéaire s'écoule dans un circuit de correction d'amortissement ayant une fonction de transfert:

$$T_L = \frac{S^2 + 2\zeta_L \omega_L S + \omega^2_L}{S^2 + 2\zeta'_L \omega_L S + \omega^2_L}$$

dans laquelle un nombre d'amortissement apparent devient $\zeta'_L \geqq 1$ lorsque le nombre d'amortissement $\zeta_L$ dudit moteur linéaire est plus petit que 1.

**4.** Système asservi selon l'une quelconque des revendications 1 à 3, dans lequel le courant d'entraînement dudit moteur linéaire s'écoule à travers un filtre passebande dans lequel la fréquence de rotation $\omega_r$ du disque optique (8) est approximativement une fréquence centrale, est mémorisée en avance en relation synchrone avec la rotation du disque optique, ledit signal mémorisé étant délivré audit moteur linéaire (7).

**5.** Système asservi selon l'une quelconque des revendications 1 à 4, caractérisé par un circuit de compensation de retard de phase (U) ayant une fonction de transfert :

$$U = \frac{S + \omega_2}{S + \omega_1}$$

dans laquelle $\omega_1$, $\omega_2$ sont deux fréquences de point d'inflexion et $\omega_2$ est plus élevée que $_1$, et un circuit de correction d'amortissement (T) ayant une fonction de transfert :

$$T = \frac{S^2 + 2\zeta_0 \omega_0 S + \omega_0^2}{S^2 + 2\zeta_1 \omega_0 S + \omega_0^2}$$

dans laquelle $\zeta_1$ est un nombre d'amortissement $\omega_0$ est une fréquence de résonnance dudit actionneur et $\zeta_0$ est un nombre d'amortissement dudit actionneur.

**6.** Système asservi selon l'une quelconque des revendications 1 à 4, caractérisé par une fréquence de résonnance $\omega_L$ dudit moteur linéaire (7) qui est proche de, ou plus élevée que, la fréquence de rotation $\omega_r$ du disque (8) et par un circuit de compensation pour donner audit courant de commande la compensation de retard de phase qui élève le gain de la fréquence comprenant la fréquence de résonnance.

**7.** Système asservi selon la revendication 1, dans lequel le courant d'entraînement dudit actionneur radial s'écoule à travers un filtre passe-bande dans lequel la fréquence de rotation $\omega_r$ du disque optique (8) est approximativement une fréquence centrale, est mémorisée en avance en relation synchrone avec la rotation du disque optique, ledit signal mémorisé étant délivré audit actionneur radial.

**Patentansprüche**

**1.** Servosystem zum Positionieren eines optischen Strahls (6) einer Vorrichtung für optische oder optomagnetische Platten, mit

- einem Linearmotor (7) zum Antreiben des optischen Kopfes (6) in Radialrichtung einer optischen Platte (8),
- einem Radialstellglied, das in den optischen Kopf eingebaut und imstande ist, zur Fokussierung der Lichter eine Objektivlinse (4) durch eine elektromagnetische Einrichtung in Radialrichtung der optischen Platte (8) anzutreiben, oder
- einem Radialstellglied, das zur Reflektierung der Lichter einen Spiegel (3) durch die elektromagnetische Einrichtung in Radialrichtung der optischen Platte (8) dreht und antreibt,
- zur Durchführung einer parallelen Steueroperation des Linearmotors (7) und des Radialstellglieds,

**gekennzeichnet durch**
eine erste Bedingung $\{A_L/A_R \fallingdotseq (\omega_R/\omega_L)^2\}$, unter der das Verhältnis zwischen dem Niedrigfrequenzverstärkungsfaktor $A_L$ einer Rückkopplungsübertragungsfunktion für den Linearmotor (7) und dem Niedrigfrequenzverstärkungsfaktor $A_R$ der Rückkopplungsübertragungsfunktion für das Radialstellglied im wesentlichen in Übereinstimmung gebracht wird mit dem Quadrat des Verhältnisses zwischen der Schwingfrequenz $\omega_R$ des Radialstellglieds und der Schwingfrequenz $\omega_L$ des Linearmotors.

**2.** Servosystem nach Anspruch 1, gekennzeichnet durch eine zweite Bedingung, unter der der Steuerstrom des Linearmotors dem Steuerstrom des Radialstellglieds durch ein Hochpaßfilter zweiter Ordnung zugefügt wird, wobei die Wendepunktfrequenz nahezu gleich der Schwingfrequenz $\omega_L$ des Linearmotors ist.

**3.** Servosystem nach Anspruch 1 oder 2, gekennzeichnet durch eine dritte Bedingung, unter der der Steuerstrom des Radialstellglieds einer Dämpfungskorrekturschaltung zugeführt wird, die eine Übertragungsfunktion

$$T_R = \frac{s^2 + 2\zeta_R \omega_R s + \omega_R^2}{s^2 + 2\zeta'_R \omega_R s + \omega_R^2}$$

hat, wobei eine scheinbare Dämpfungszahl $\zeta'_R \geqq 1$ ist, wenn die Dämpfungszahl $\zeta_R$ des Radialstellglieds kleiner als 1 ist, der Steuerstrom des Linearmotors einer Dämpfungskorrekturschaltung zugeführt wird, die eine Übertragungsfunktion

$$T_L = \frac{s^2 + 2\zeta_L \omega_L s + \omega_L^2}{s^2 + 2\zeta'_L \omega_L s + \omega_L^2}$$

hat, wobei eine scheinbare Dämpfungszahl $\zeta'_L \geqq 1$ ist, wenn die Dämpfungszahl $\zeta_L$ des Linearmotors kleiner als 1 ist.

**4.** Servosystem nach einem der Ansprüche 1 bis 3, bei dem der Steuerstrom des Linearmotors durch ein Bandpaßfilter geschickt wird, wobei die Drehfrequenz $\omega_r$ der optischen Platte (8) im wesentlichen eine mittlere Frequenz ist, die im voraus in synchroner Relation mit der Drehung der optischen Platte gespeichert wird, wobei das gespeicherte Signal dem Linearmotor (7) zugeführt wird.

**5.** Servosystem nach einem der Ansprüche 1 bis 4, gekennzeichnet durch eine Phasenverzögerungskompensationsschaltung (U) mit einer Übertragungsfunktion

$$U = \frac{s + \omega_2}{s + \omega_1}$$

wobei $\omega_1$, $\omega_2$ zwei Wendepunktfrequenzen sind und $\omega_2$ höher ist als $\omega_1$, und eine Dämpfungskorrekturschaltung (T) mit einer Übertragungsfunktion

$$T = \frac{s^2 + 2\zeta_0 \omega_0 s + \omega_0^2}{s^2 + 2\zeta_1 \omega_0 s + \omega_0^2}$$

wobei $\zeta_1$ die Dämpfungszahl, $\omega_0$ die Schwingfrequenz des Stellglieds und $\zeta_0$ die Dämpfungszahl des Stellglieds ist.

**6.** Servosystem nach einem der Ansprüche 1 bis 4, gekennzeichnet durch eine Schwingfrequenz $\omega_L$ des Linearmotors (7), die in der Nähe der Drehfrequenz $\omega_r$ der Platte (8) liegt oder höher ist als diese, und eine Kompensationsschaltung, die dem Steuerstrom die Phasenverzögerungskompensation gibt, die den Verstärkungsfaktor der die Schwingfrequenz enthaltenden Frequenz erhöht.

**7.** Servosystem nach Anspruch 1, bei dem die Drehfrequenz $\omega_r$ der optischen Platte (8) im wesentlichen eine mittlere Frequenz ist, die im voraus in synchroner Relation mit der Drehung der optischen Platte gespeichert wird, wobei das gespeicherte Signal in dem Radialstellglied zugeführt wird.

Fig. 1

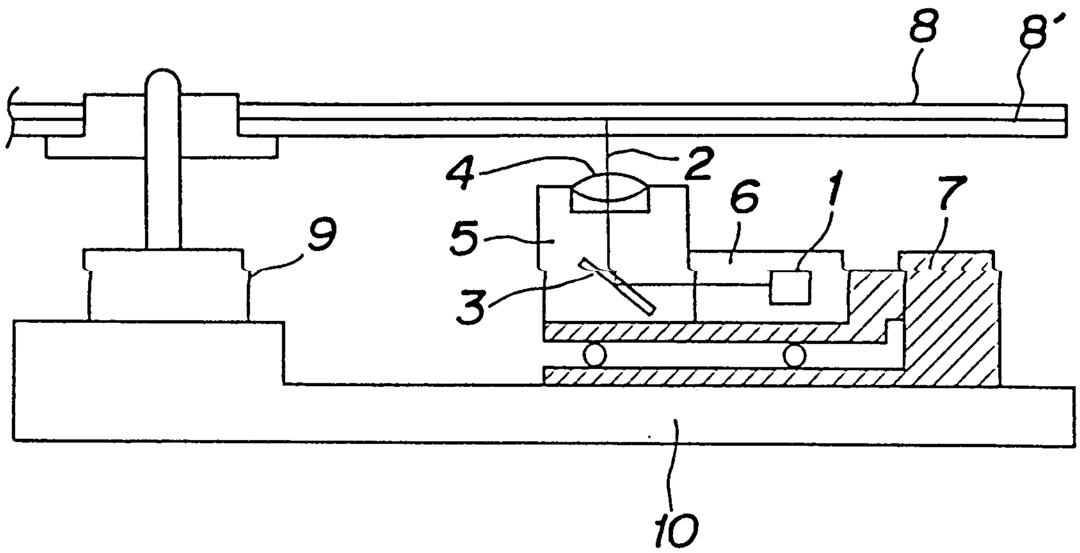


Fig. 2

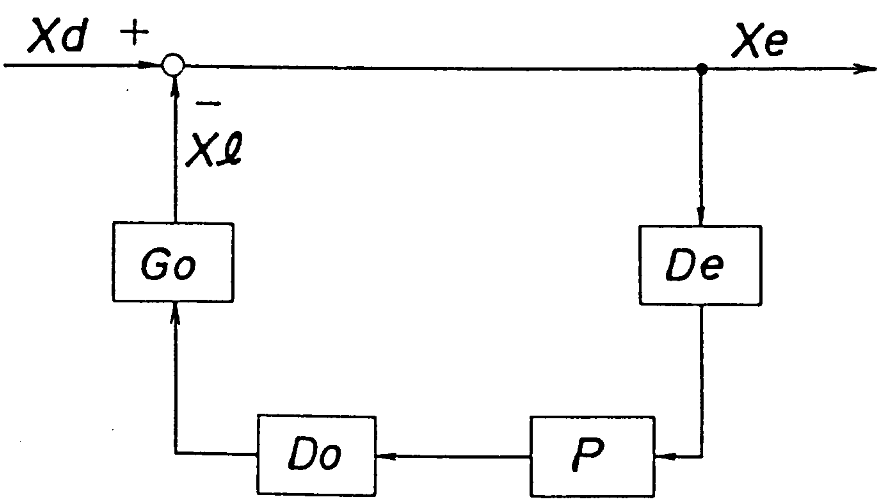

Fig. 3

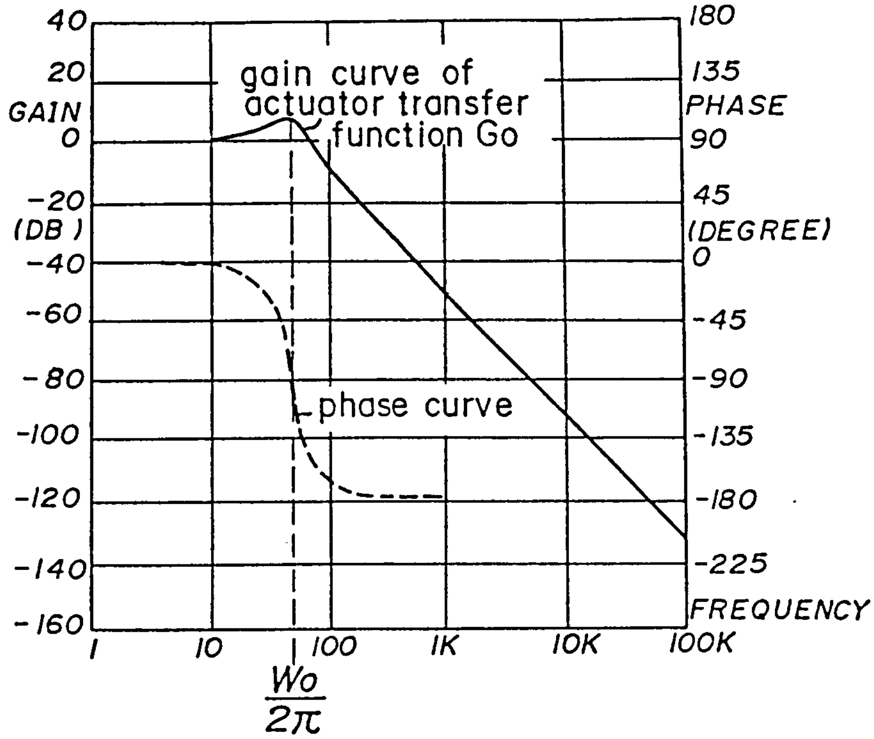
40
20
GAIN
0
-20
(DB)
-40
-60
-80
-100
-120
-140
-160
180
135
PHASE
90
45
(DEGREE)
0
-45
-90
-135
-180
-225
FREQUENCY
1
10
100
1K
10K
100K
gain curve of actuator transfer function Go
phase curve
Wo/2π

Fig. 4

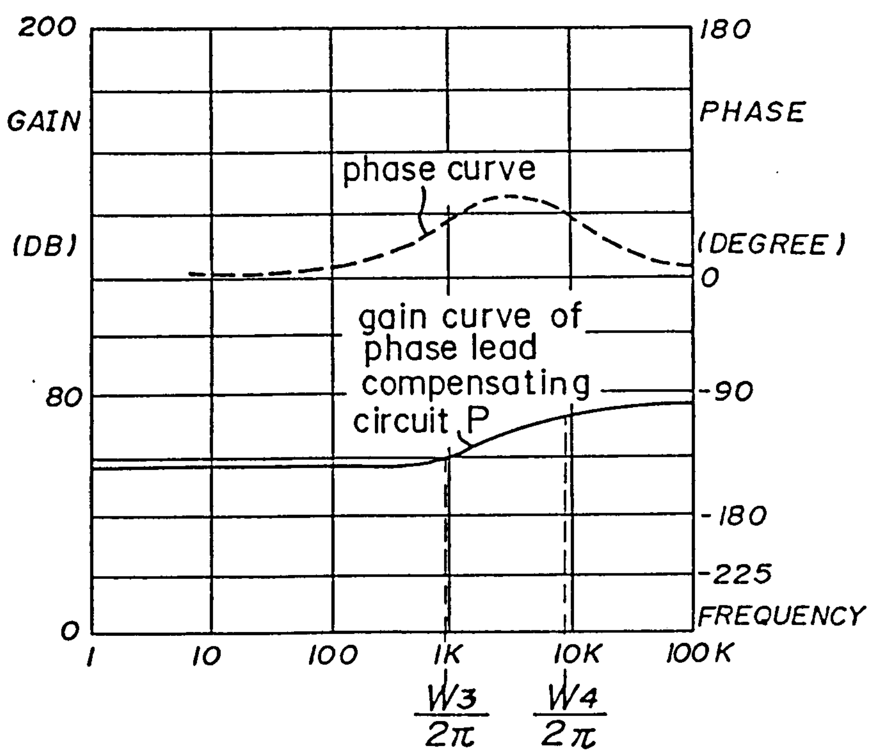
200
GAIN
(DB)
80
0
180
PHASE
(DEGREE)
0
-90
-180
-225
FREQUENCY
1
10
100
1K
10K
100K
phase curve
gain curve of phase lead compensating circuit P
W3/2π
W4/2π

Fig.5

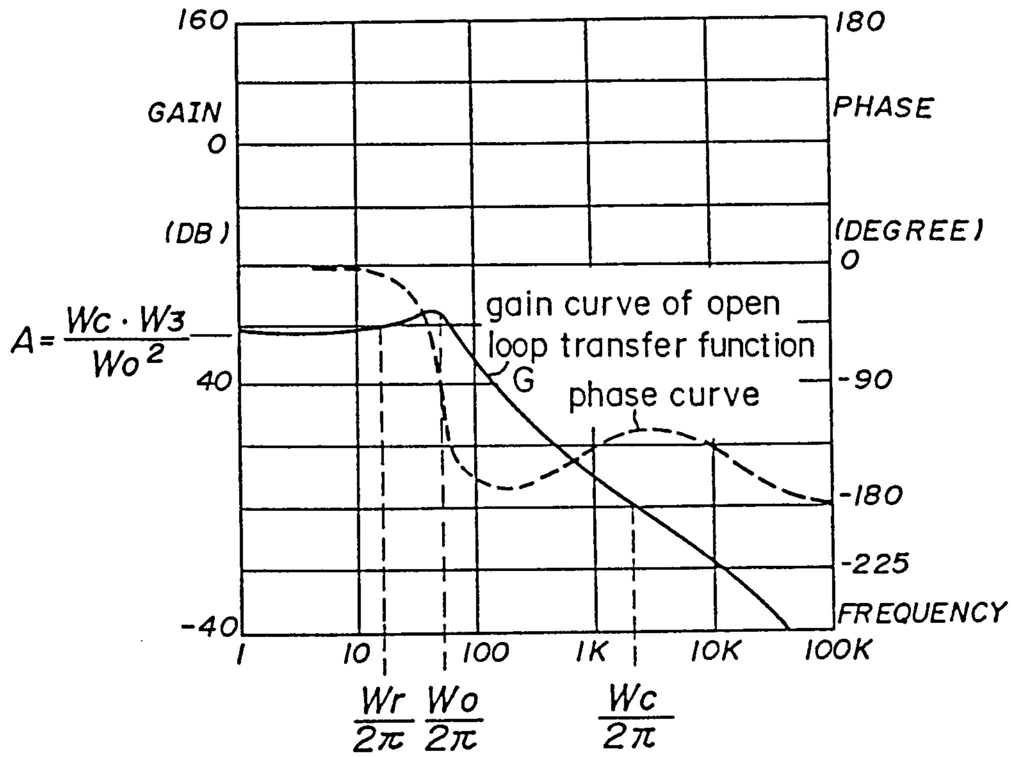
160
GAIN
0
(DB)
$A=\frac{Wc \cdot W3}{Wo^2}$
40
-40
180
PHASE
(DEGREE)
0
-90
-180
-225
FREQUENCY
1
10
100
1K
10K
100K
gain curve of open loop transfer function G
phase curve
$\frac{Wr}{2\pi}$
$\frac{Wo}{2\pi}$
$\frac{Wc}{2\pi}$

Fig.6

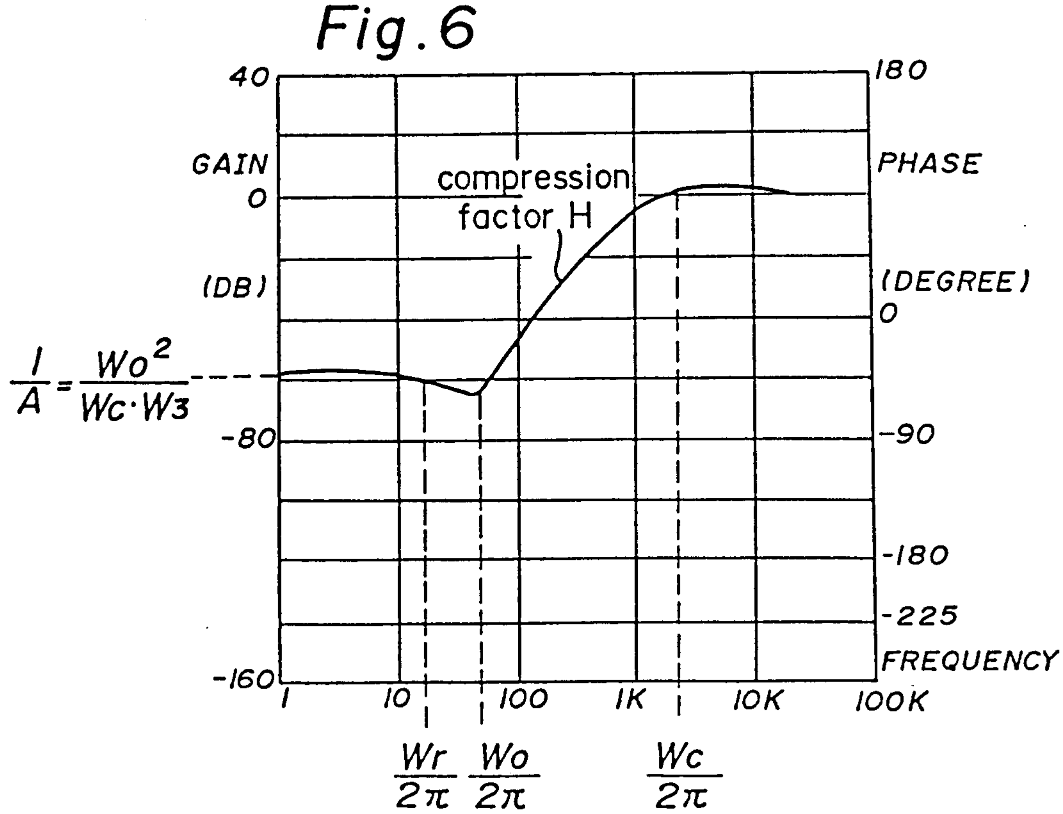
40
GAIN
0
(DB)
$\frac{1}{A}=\frac{Wo^2}{Wc \cdot W3}$
-80
-160
180
PHASE
(DEGREE)
0
-90
-180
-225
FREQUENCY
1
10
100
1K
10K
100K
compression factor H
$\frac{Wr}{2\pi}$
$\frac{Wo}{2\pi}$
$\frac{Wc}{2\pi}$

Fig. 7

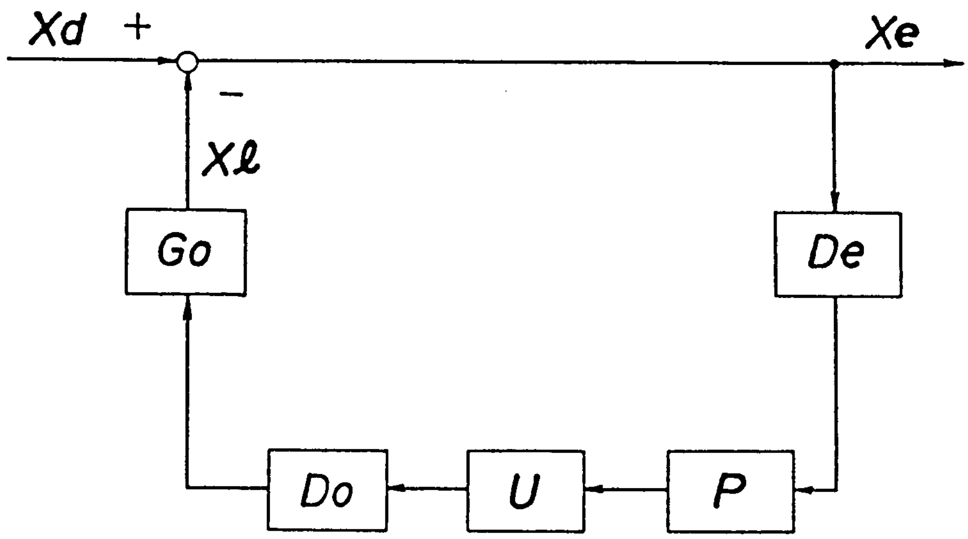
Xd
+
Xe
-
Xℓ
Go
De
Do
U
P

Fig. 8

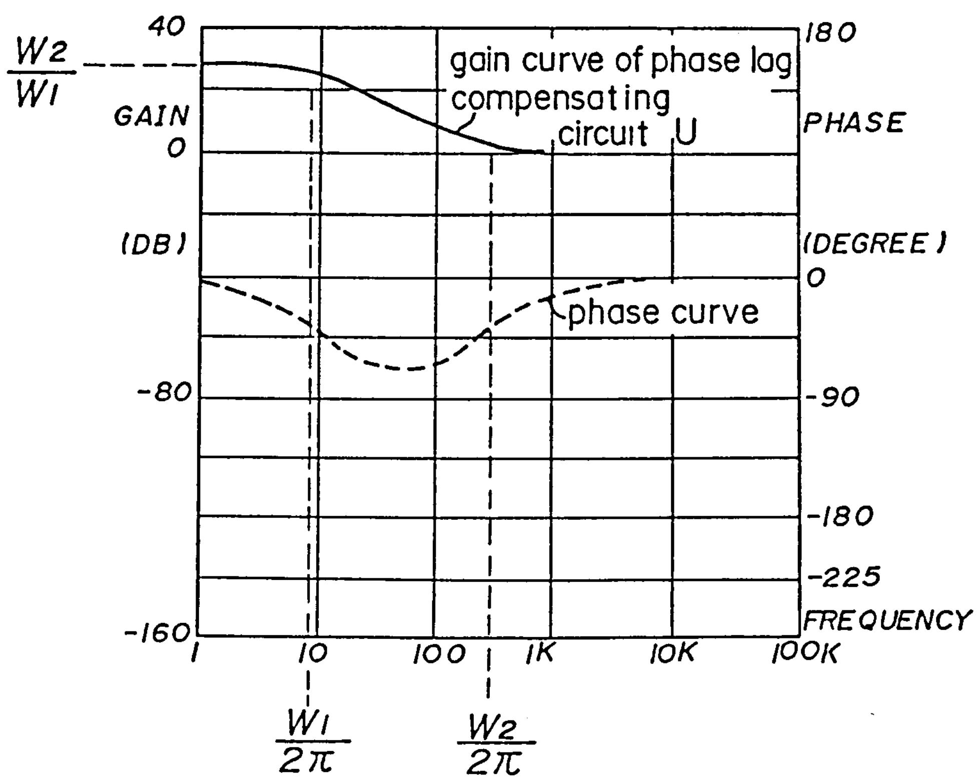
40
W2/W1
GAIN
0
(DB)
-80
-160
180
PHASE
(DEGREE)
0
-90
-180
-225
FREQUENCY
gain curve of phase lag compensating circuit U
phase curve
1
10
100
1K
10K
100K
W1/2π
W2/2π

Fig. 9

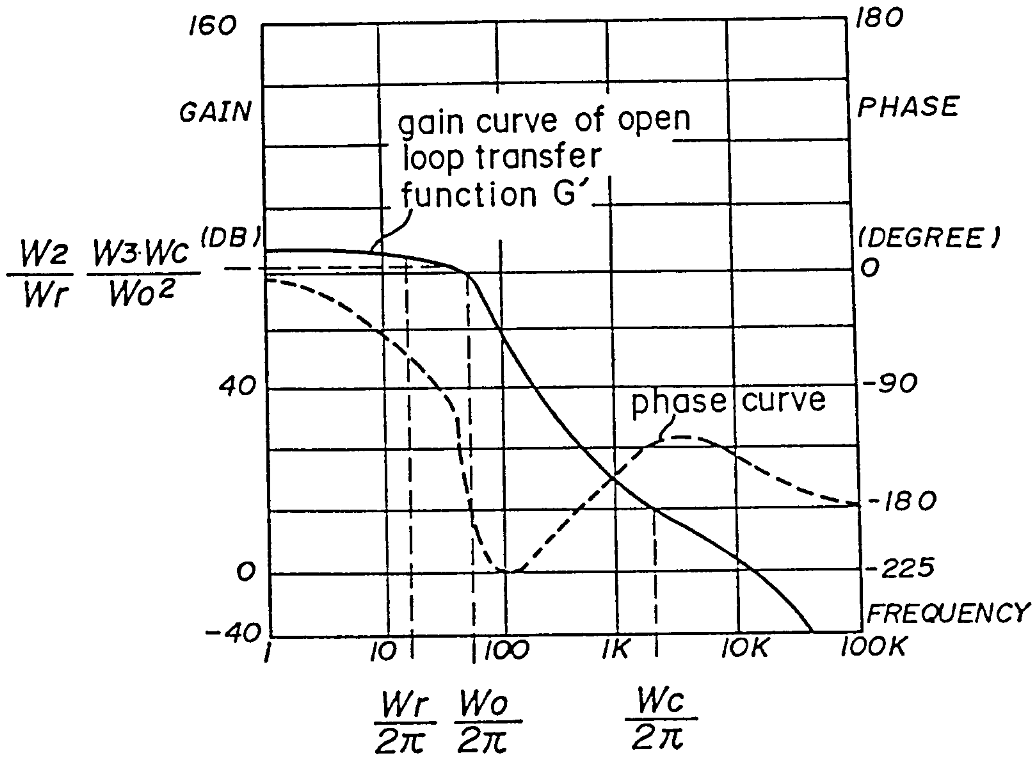
160
GAIN
(DB)
W2/Wr
W3·Wc/Wo2
40
0
-40
180
PHASE
(DEGREE)
0
-90
-180
-225
FREQUENCY
gain curve of open loop transfer function G′
phase curve
1
10
100
1K
10K
100K
Wr/2π
Wo/2π
Wc/2π

Fig.10

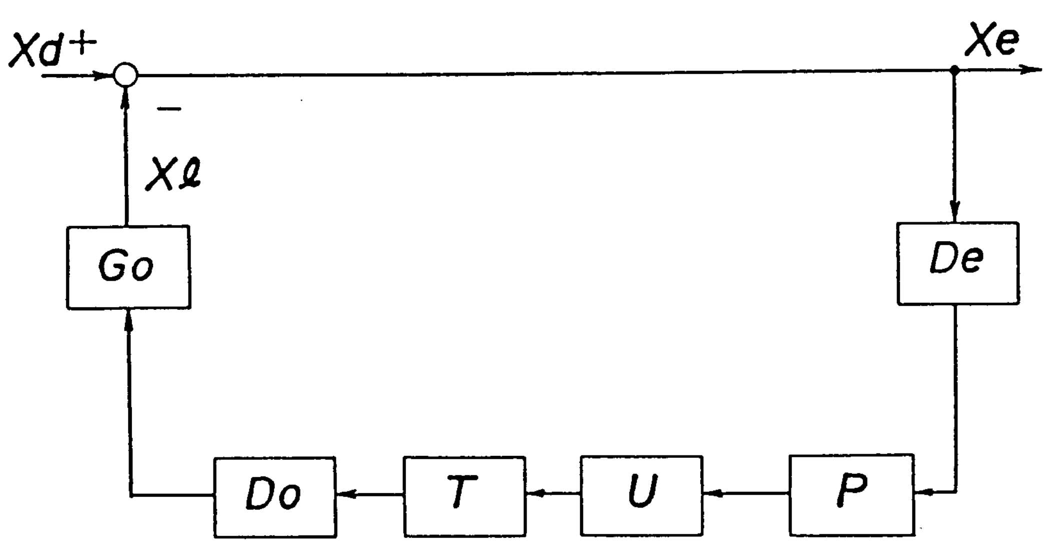
Xd+
Xe
−
Xℓ
Go
De
Do
T
U
P

Fig. 11

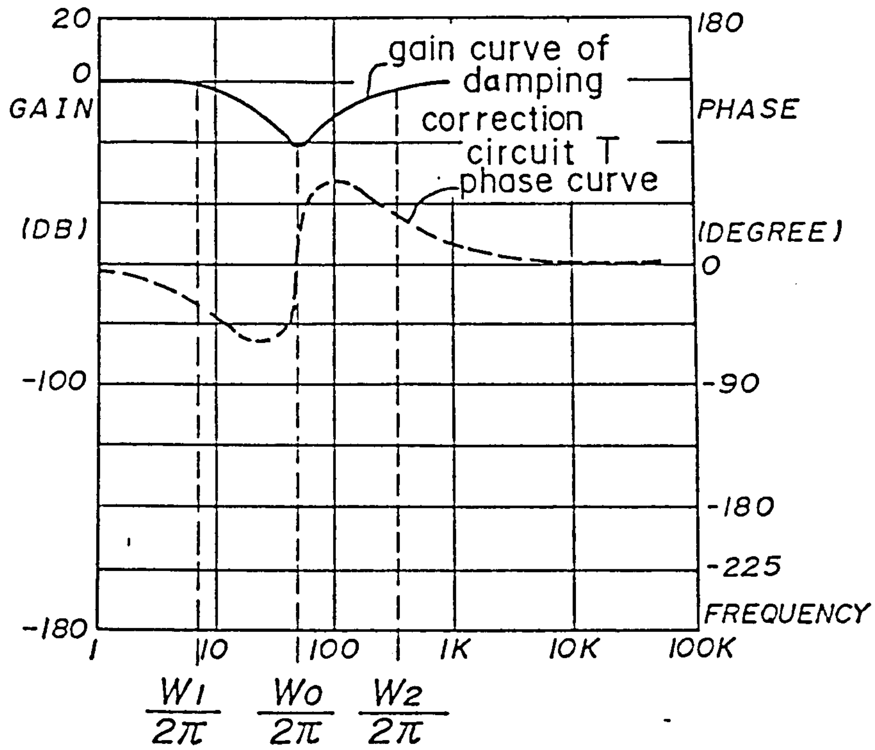
20
0
GAIN
(DB)
-100
-180
180
PHASE
(DEGREE)
0
-90
-180
-225
FREQUENCY
gain curve of damping correction circuit T
phase curve
1
10
100
1K
10K
100K
W1/2π
W0/2π
W2/2π

Fig. 12

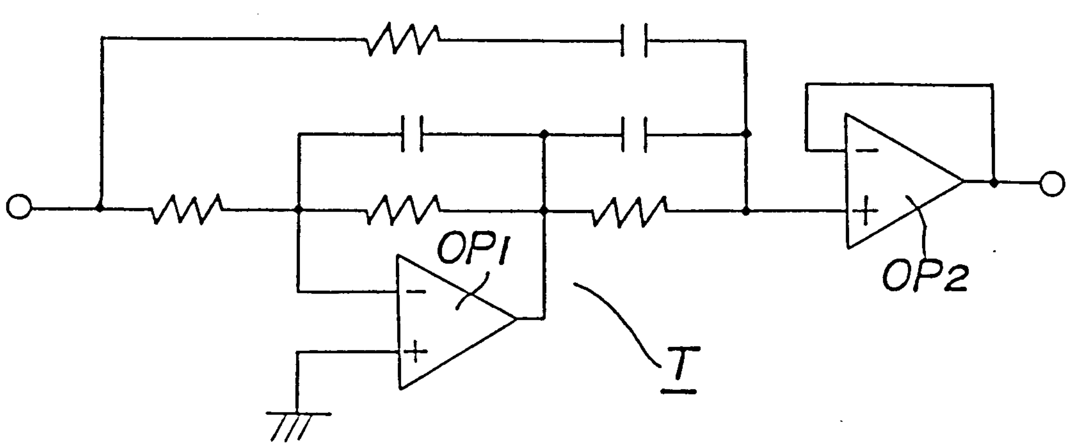
OP1
OP2
T

Fig. 13

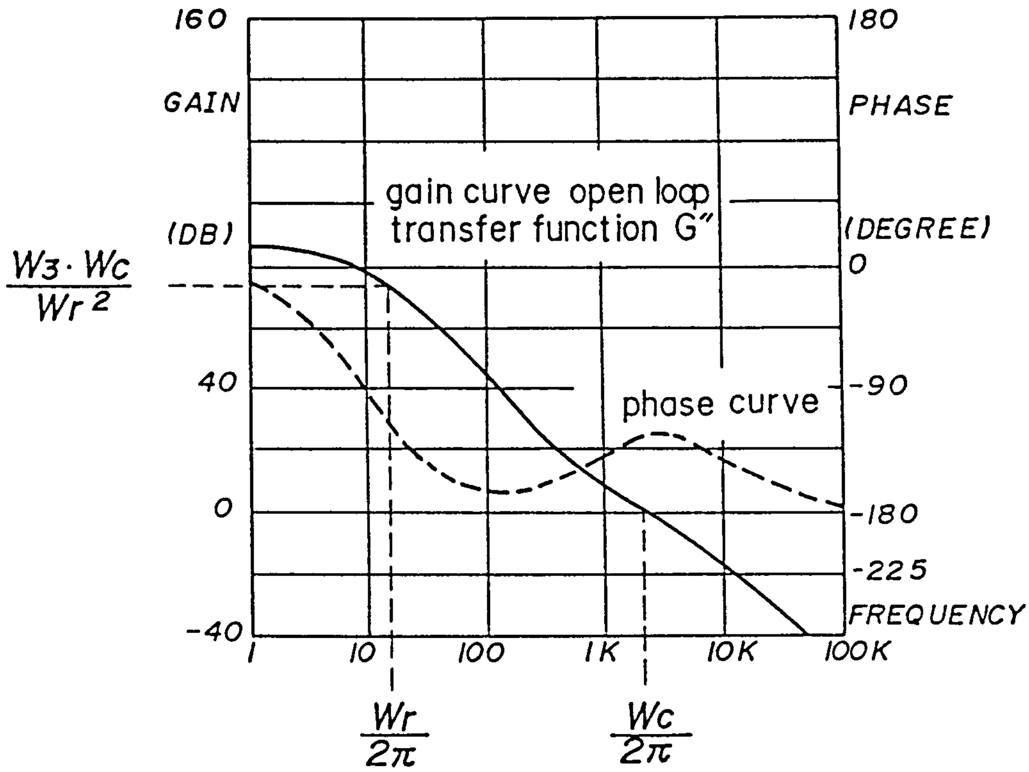
160
GAIN
(DB)
40
0
-40
180
PHASE
(DEGREE)
0
-90
-180
-225
FREQUENCY
1
10
100
1K
10K
100K
gain curve open loop transfer function G"
phase curve
W3·Wc / Wr 2
Wr / 2π
Wc / 2π

Fig. 14

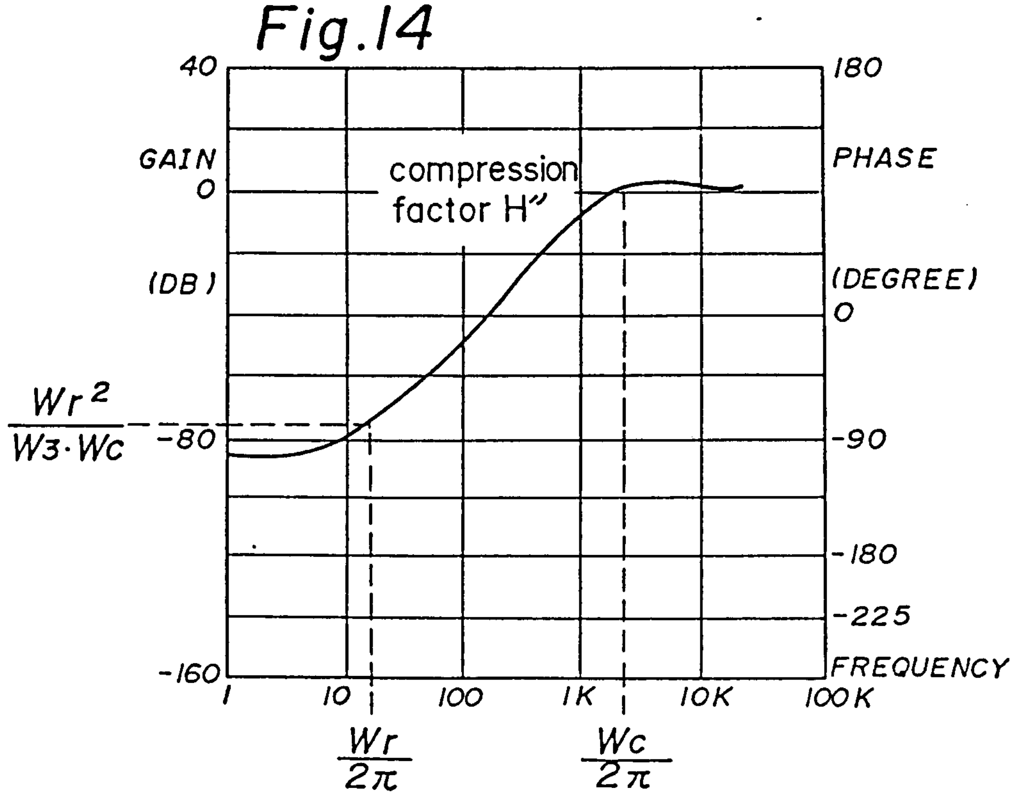
40
GAIN
0
(DB)
-80
-160
180
PHASE
(DEGREE)
0
-90
-180
-225
FREQUENCY
1
10
100
1K
10K
100K
compression factor H"
Wr 2 / W3·Wc
Wr / 2π
Wc / 2π

Fig. 15

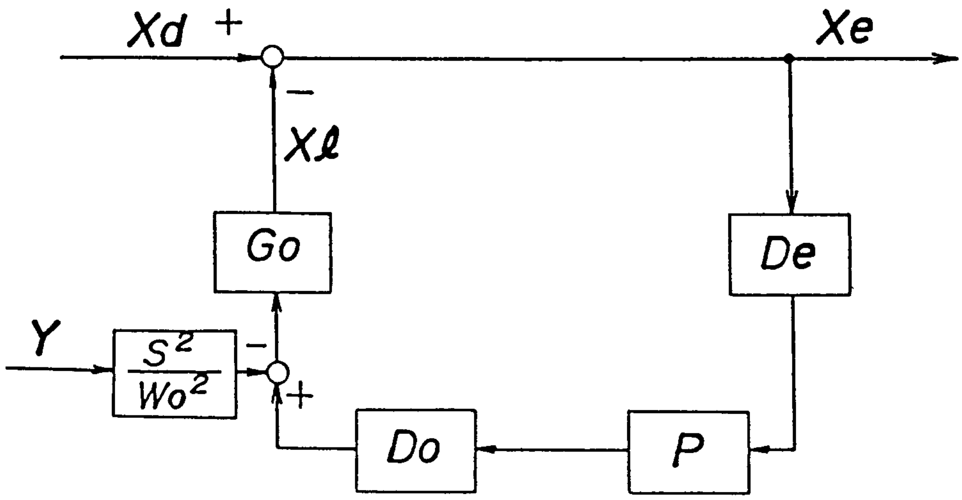
Xd
+
Xe
−
Xℓ
Go
De
Y
S2
Wo2
−
+
Do
P

Fig. 16

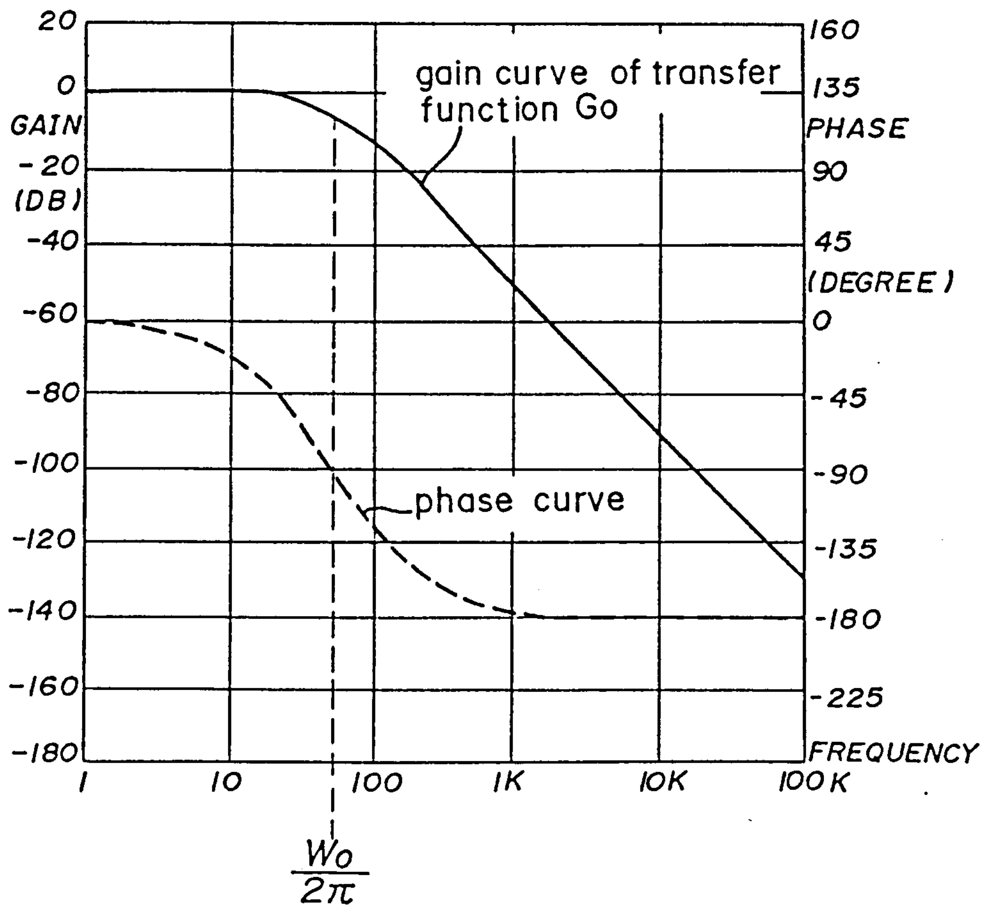
20
0
GAIN
-20
(DB)
-40
-60
-80
-100
-120
-140
-160
-180
160
135
PHASE
90
45
(DEGREE)
0
-45
-90
-135
-180
-225
FREQUENCY
1
10
100
1K
10K
100K
gain curve of transfer function Go
phase curve
Wo
2π

Fig. 17

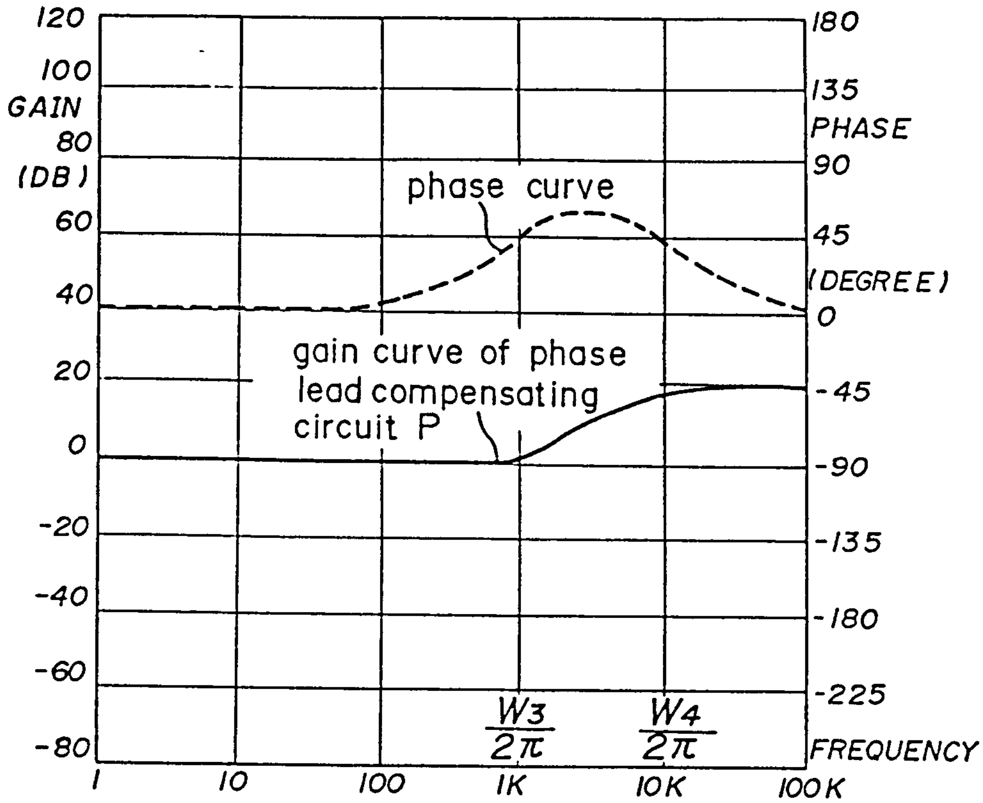
120
100
GAIN
80
(DB)
60
40
20
0
-20
-40
-60
-80
180
135
PHASE
90
45
(DEGREE)
0
-45
-90
-135
-180
-225
FREQUENCY
phase curve
gain curve of phase
lead compensating
circuit P
W3/2π
W4/2π
1
10
100
1K
10K
100K

Fig. 18

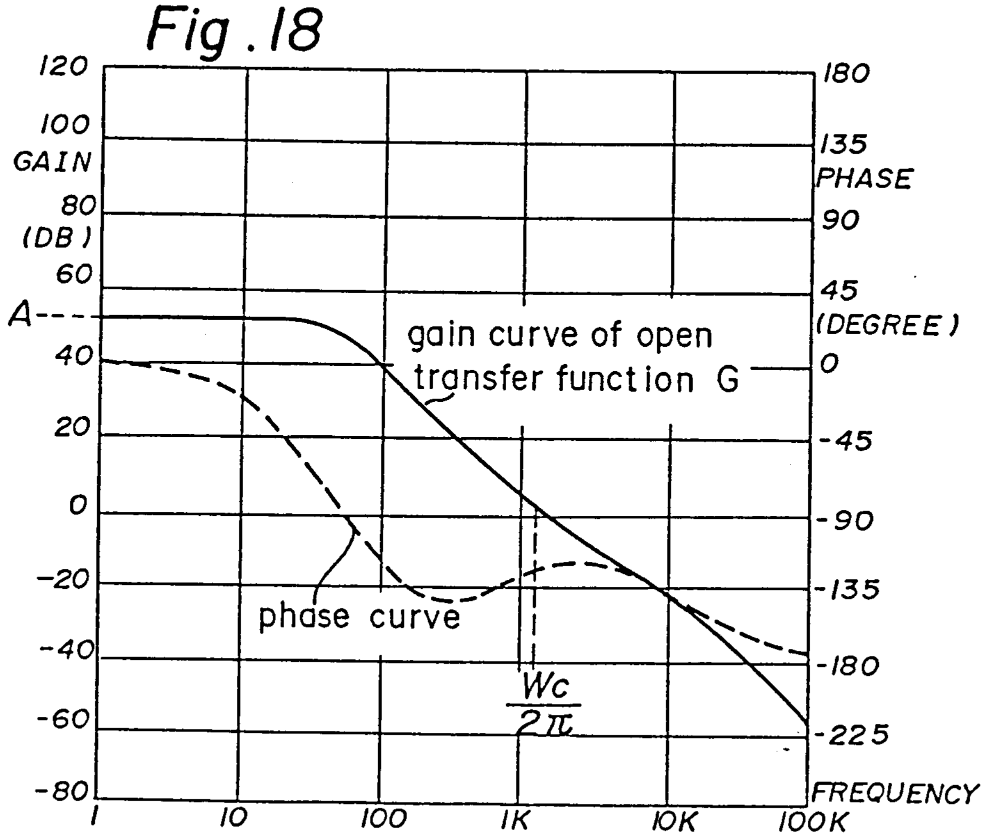
120
100
GAIN
80
(DB)
60
A
40
20
0
-20
-40
-60
-80
180
135
PHASE
90
45
(DEGREE)
0
-45
-90
-135
-180
-225
FREQUENCY
gain curve of open
transfer function G
phase curve
Wc/2π
1
10
100
1K
10K
100K

Fig. 19

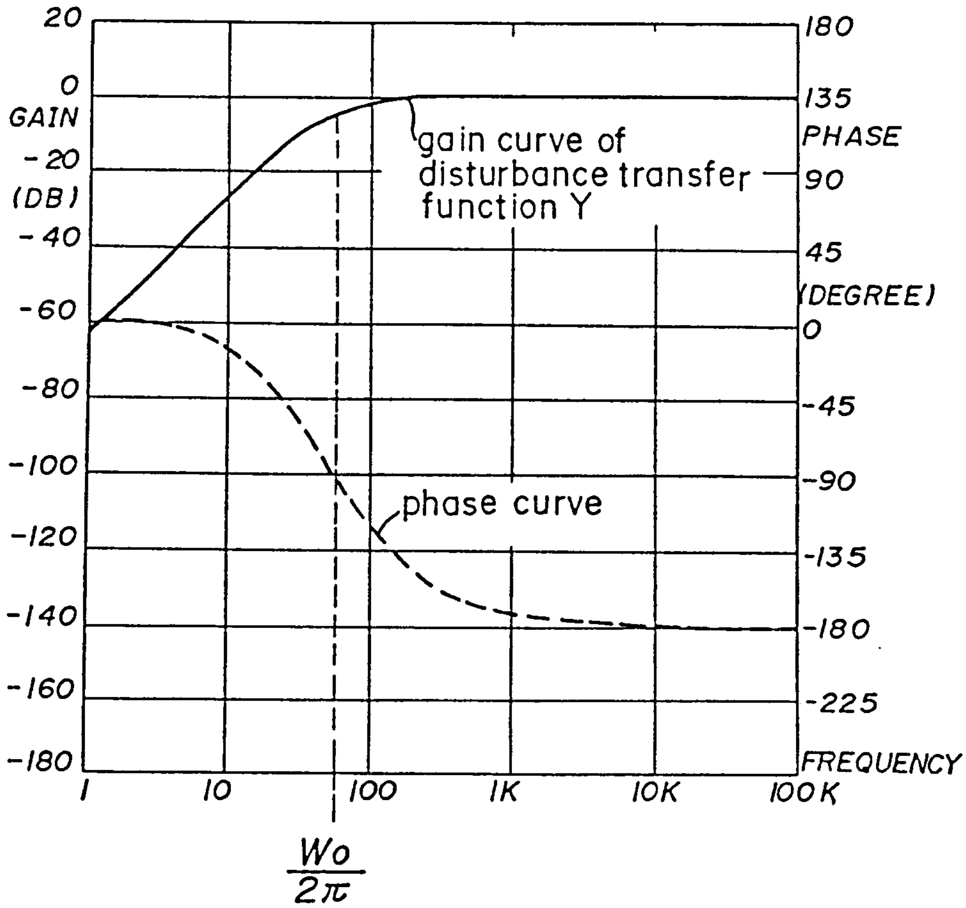
20
0
GAIN
-20
(DB)
-40
-60
-80
-100
-120
-140
-160
-180
180
135
PHASE
90
45
(DEGREE)
0
-45
-90
-135
-180
-225
FREQUENCY
1
10
100
1K
10K
100K
gain curve of
disturbance transfer
function Y
phase curve
Wo
2π

Fig. 20

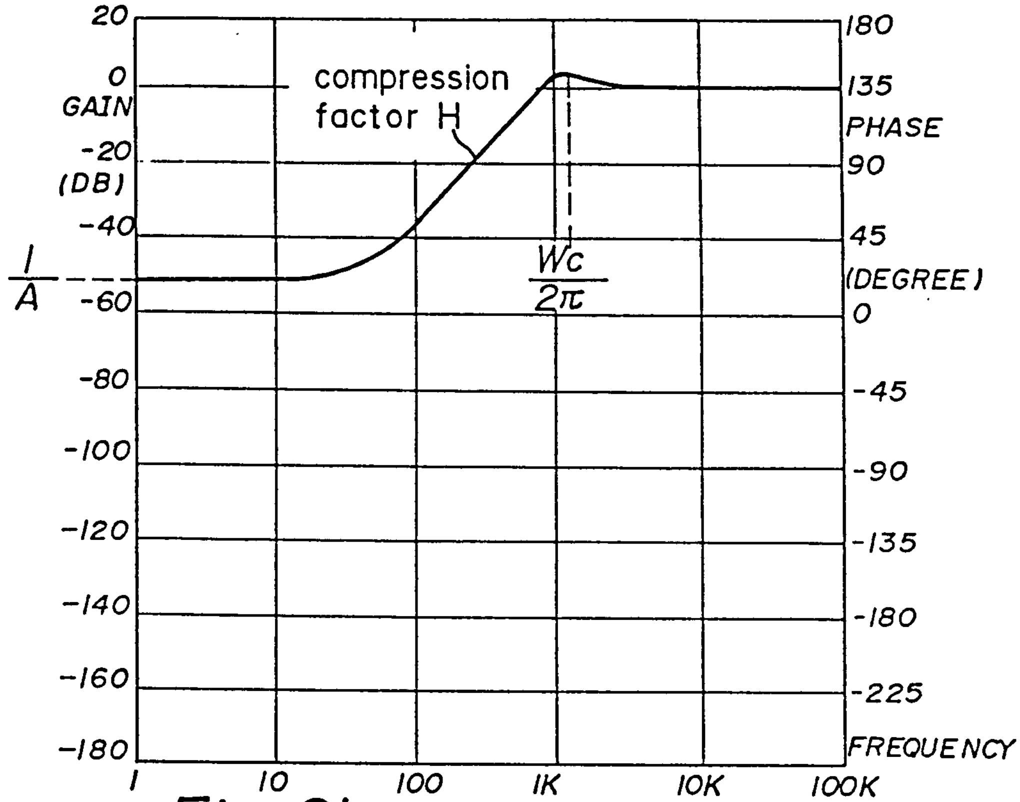
20
0
GAIN
-20
(DB)
-40
1/A
-60
-80
-100
-120
-140
-160
-180
180
135
PHASE
90
45
(DEGREE)
0
-45
-90
-135
-180
-225
FREQUENCY
1
10
100
1K
10K
100K
compression factor H
Wc/2π

Fig. 21

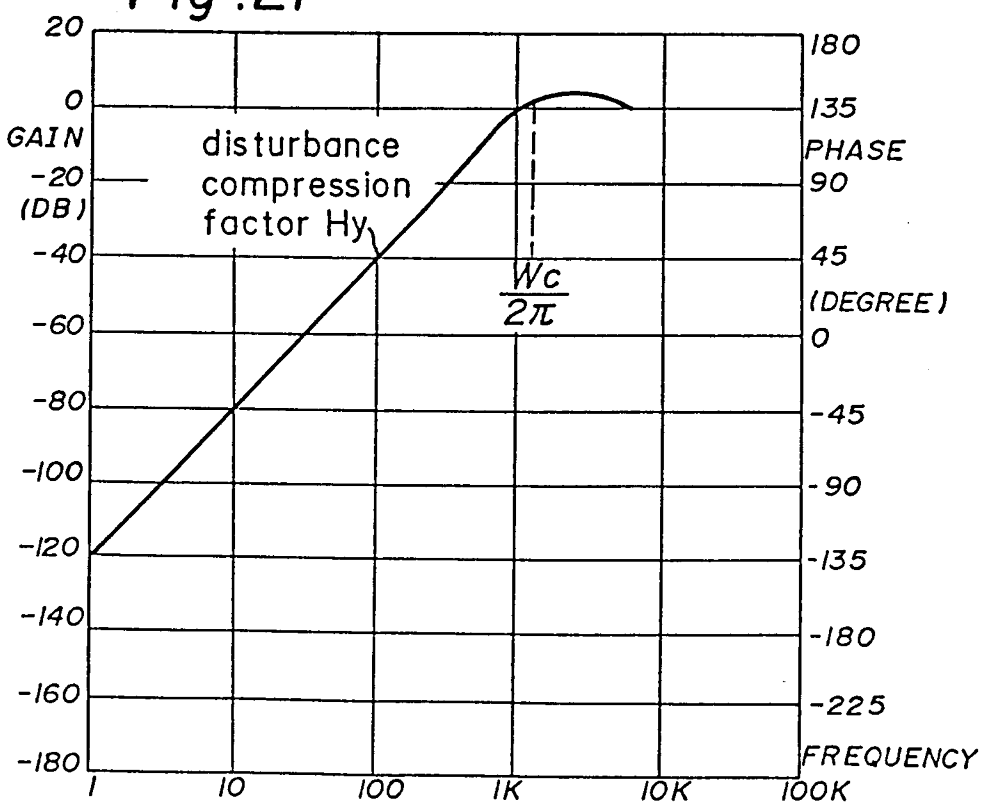
20
0
GAIN
-20
(DB)
-40
-60
-80
-100
-120
-140
-160
-180
180
135
PHASE
90
45
(DEGREE)
0
-45
-90
-135
-180
-225
FREQUENCY
1
10
100
1K
10K
100K
disturbance compression factor Hy
Wc/2π

Fig.22

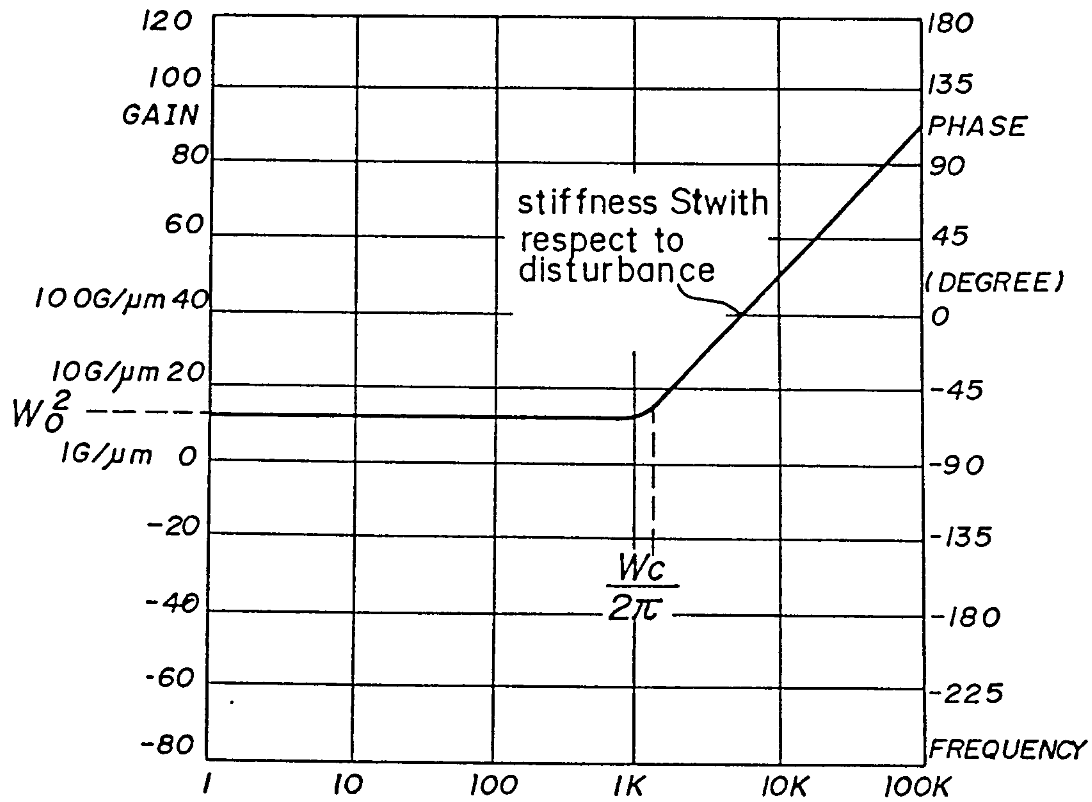
120
100
GAIN
80
60
100G/μm 40
10G/μm 20
$W_0^2$
1G/μm 0
-20
-40
-60
-80
180
135
PHASE
90
45
(DEGREE)
0
-45
-90
-135
-180
-225
FREQUENCY
1
10
100
1K
10K
100K
stiffness Stwith respect to disturbance
$\frac{Wc}{2\pi}$

Fig.23

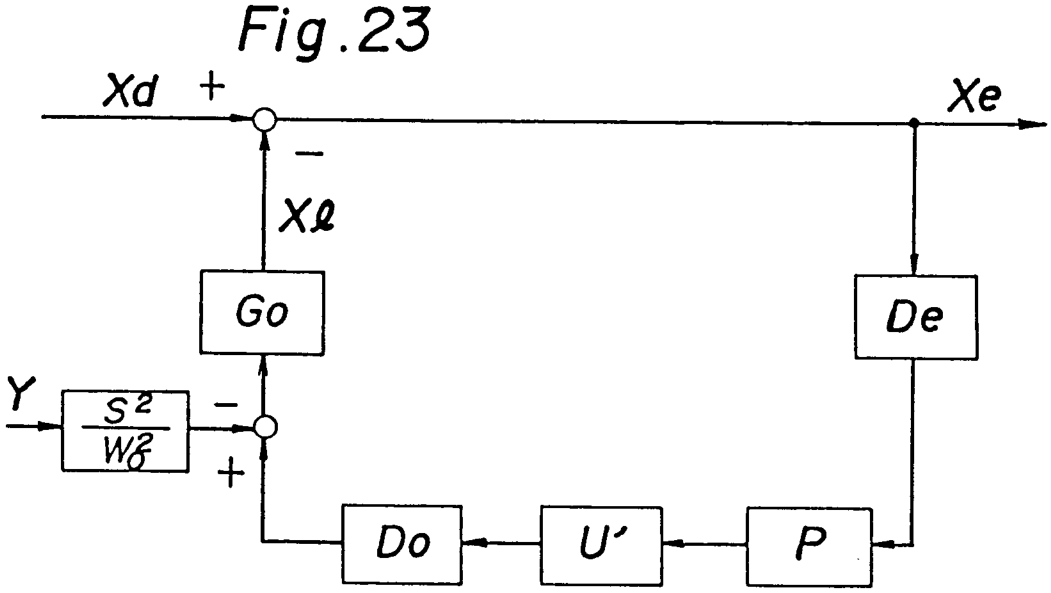
Xd
+
Xe
−
Xℓ
Go
De
Y
$\frac{S^2}{W_0^2}$
−
+
Do
U'
P

Fig. 24

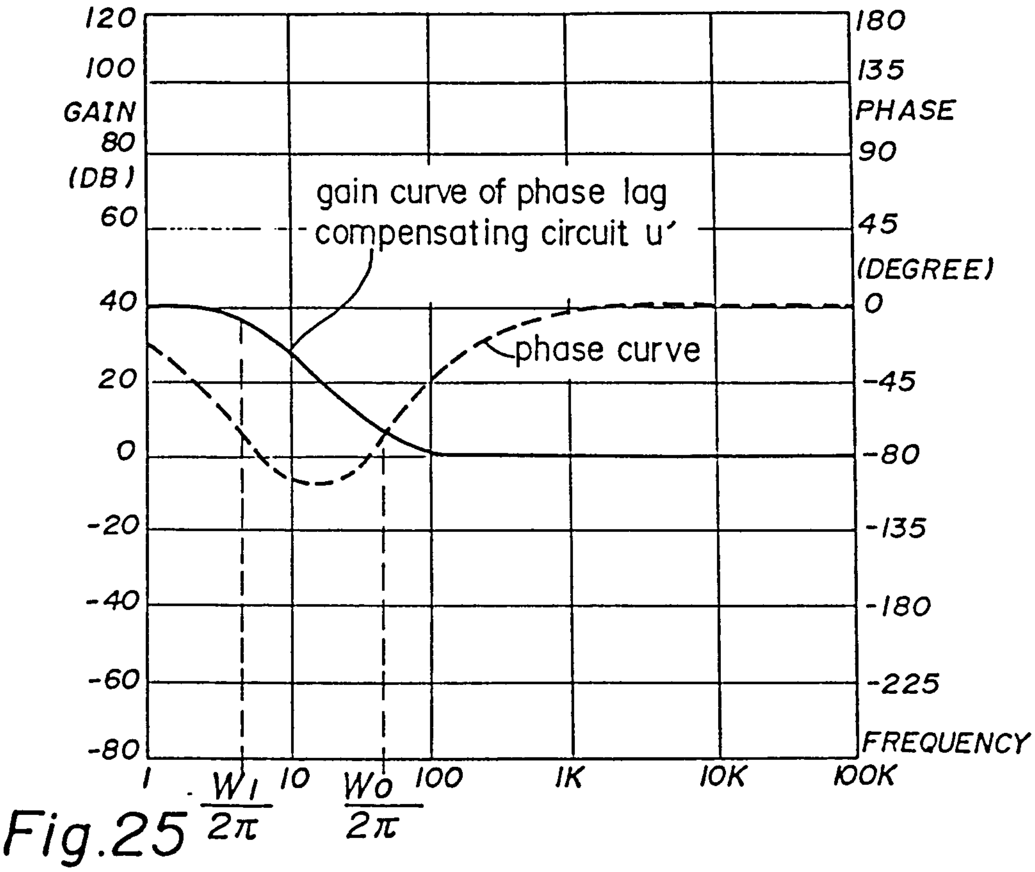
120
100
GAIN
80
(DB)
60
40
20
0
-20
-40
-60
-80
180
135
PHASE
90
45
(DEGREE)
0
-45
-80
-135
-180
-225
FREQUENCY
gain curve of phase lag compensating circuit u'
phase curve
1
$\frac{W_1}{2\pi}$
10
$\frac{W_0}{2\pi}$
100
1K
10K
100K

Fig.25

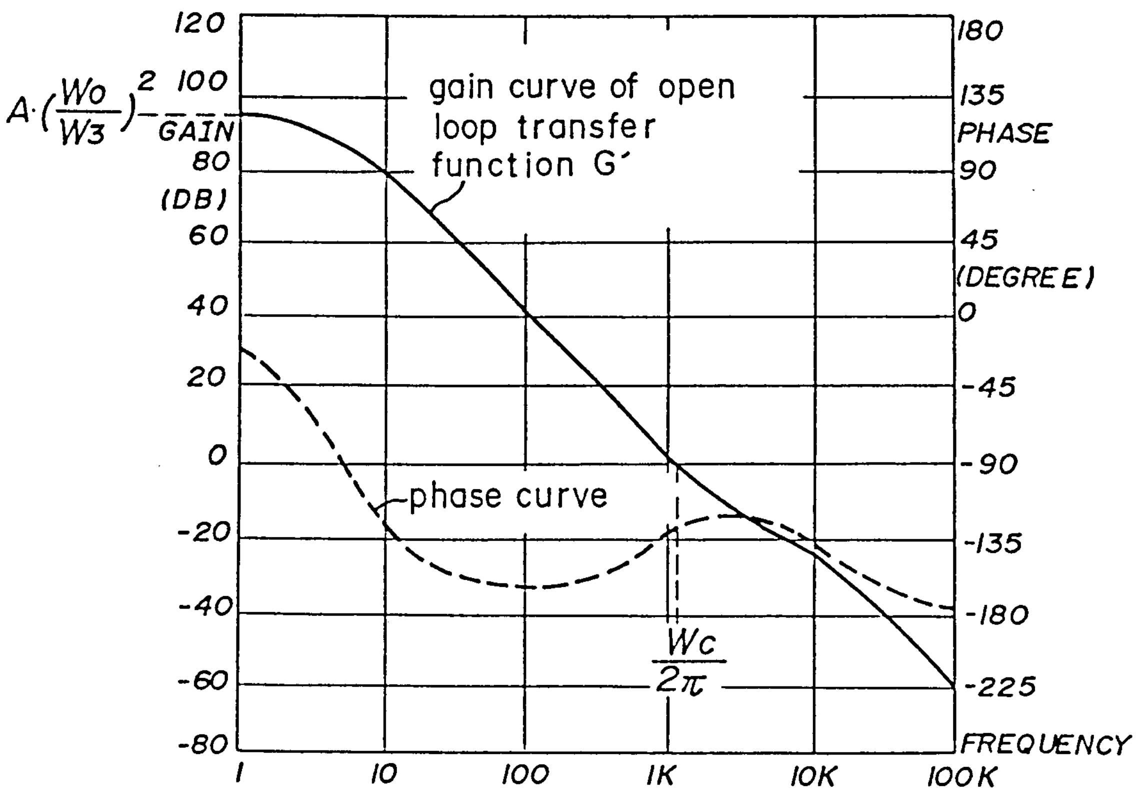
120
$A \cdot (\frac{W_0}{W_3})^2$
100
GAIN
80
(DB)
60
40
20
0
-20
-40
-60
-80
180
135
PHASE
90
45
(DEGREE)
0
-45
-90
-135
-180
-225
FREQUENCY
gain curve of open loop transfer function G'
phase curve
$\frac{W_c}{2\pi}$
1
10
100
1K
10K
100K

Fig. 26

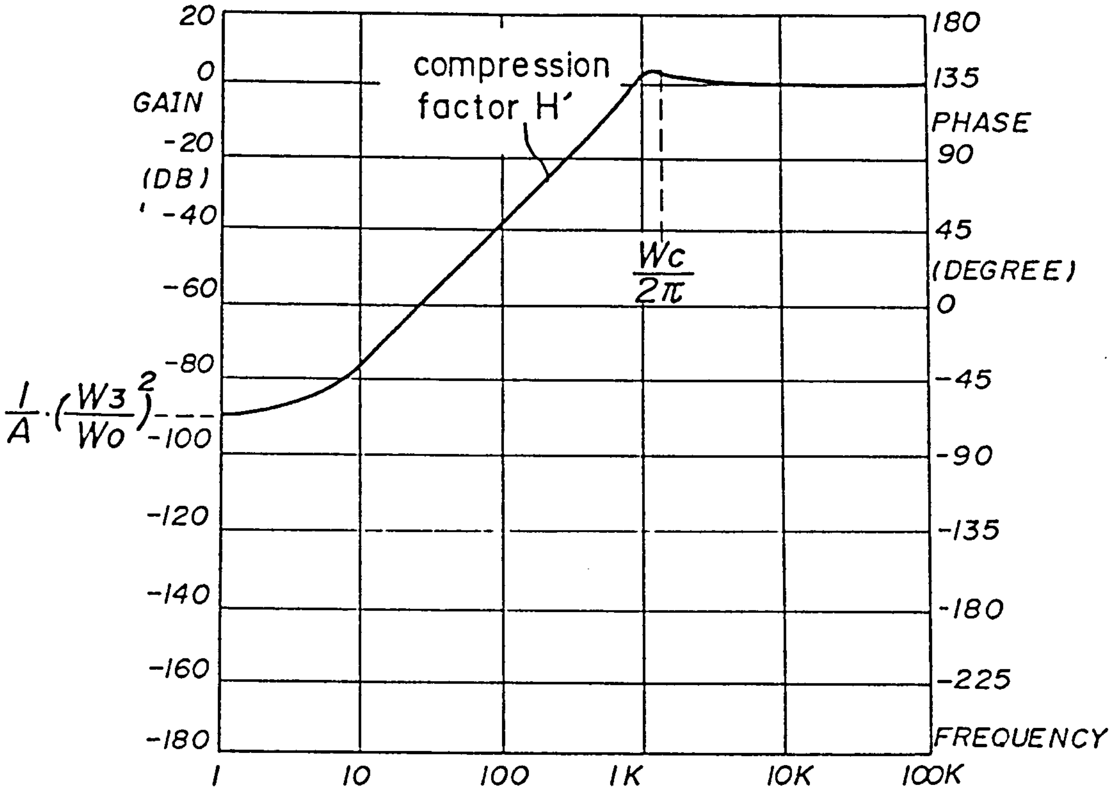
20
0
GAIN
-20
(DB)
-40
-60
-80
-100
-120
-140
-160
-180
$\frac{1}{A}\cdot(\frac{W3}{Wo})^2$
compression
factor H'
$\frac{Wc}{2\pi}$
180
135
PHASE
90
45
(DEGREE)
0
-45
-90
-135
-180
-225
FREQUENCY
1
10
100
1K
10K
100K

Fig. 27

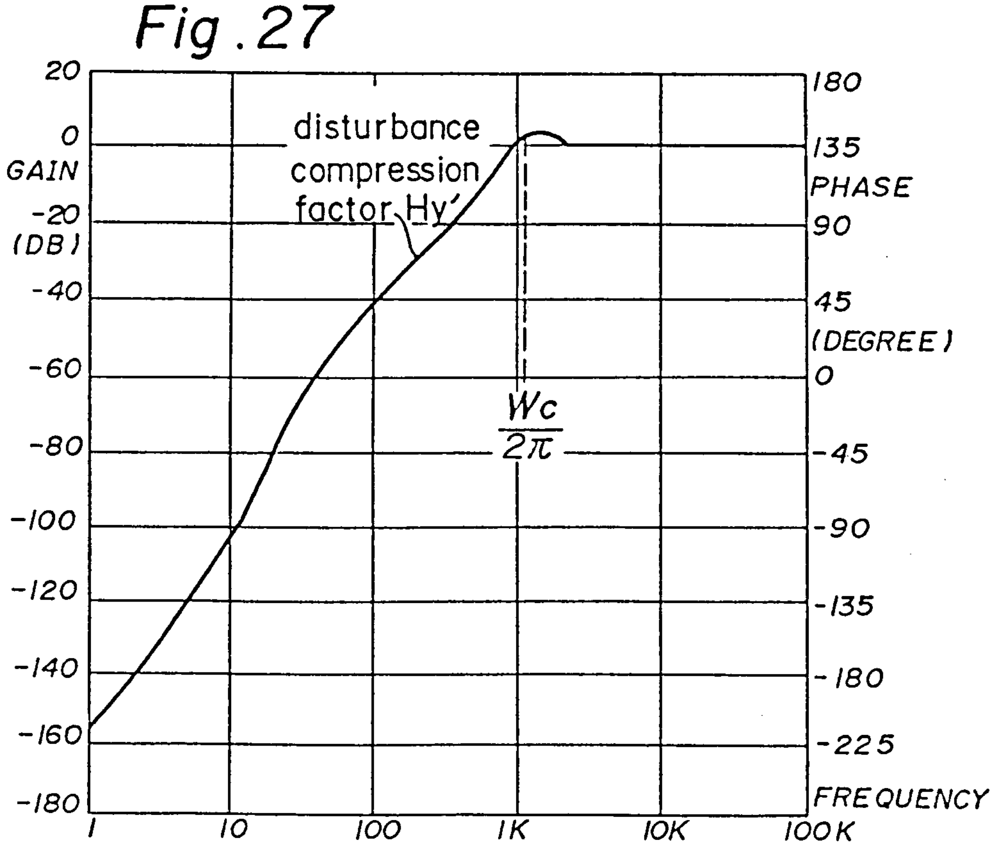
20
0
GAIN
-20
(DB)
-40
-60
-80
-100
-120
-140
-160
-180
disturbance
compression
factor Hy'
$\frac{Wc}{2\pi}$
180
135
PHASE
90
45
(DEGREE)
0
-45
-90
-135
-180
-225
FREQUENCY
1
10
100
1K
10K
100K

Fig. 28

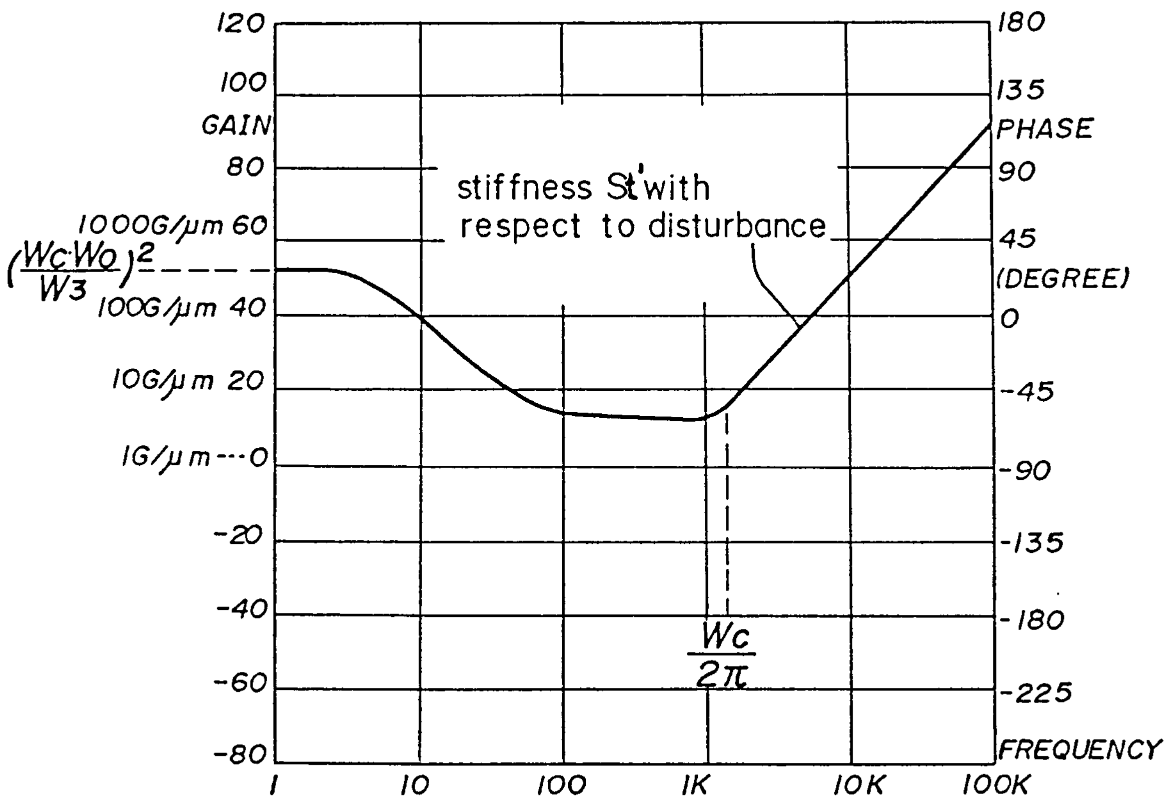
120
100
GAIN
80
1000G/μm 60
(Wc·Wo/W3)²
100G/μm 40
10G/μm 20
1G/μm···0
-20
-40
-60
-80
180
135
PHASE
90
45
(DEGREE)
0
-45
-90
-135
-180
-225
FREQUENCY
1
10
100
1K
10K
100K
stiffness St' with respect to disturbance
Wc/2π

Fig. 29

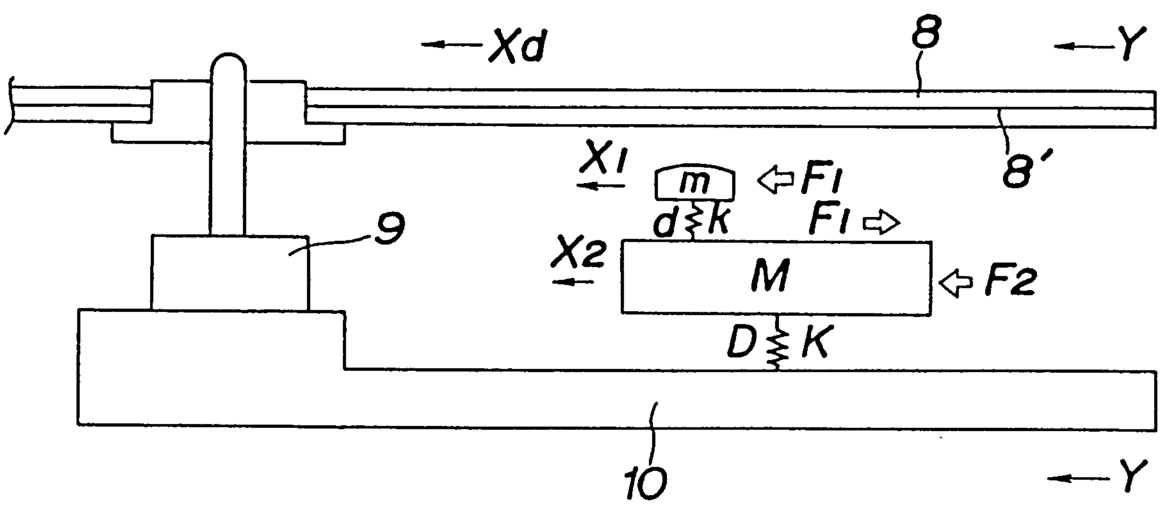
Xd
8
Y
8'
X1
m
F1
d
k
F1
9
X2
M
F2
D
K
10
Y

Fig. 30

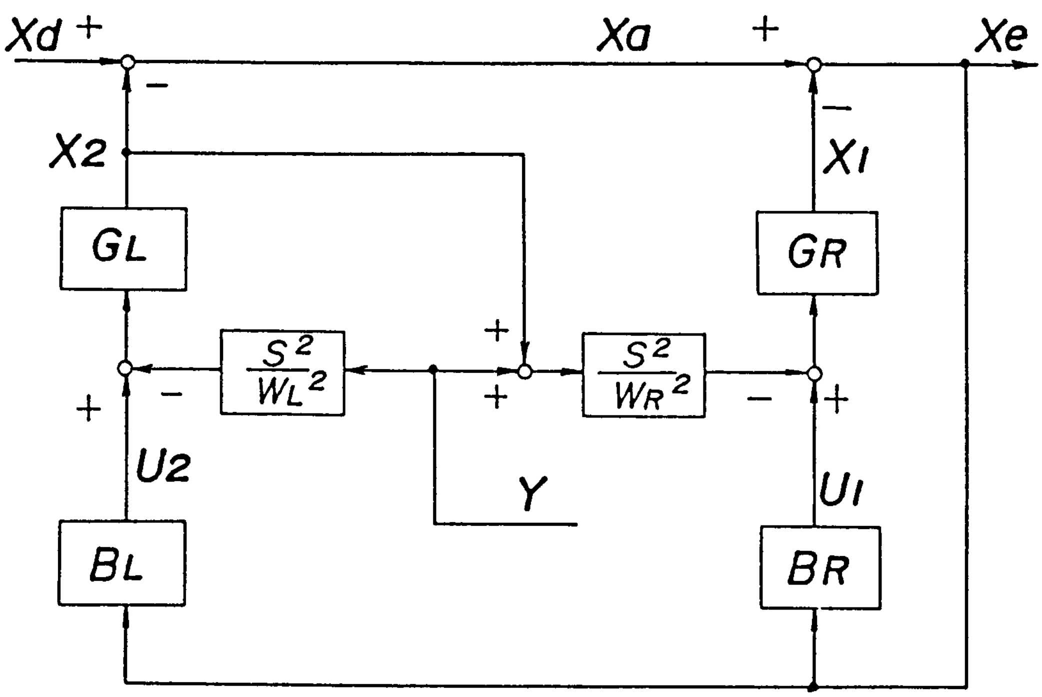
Xd
Xa
Xe
X2
X1
GL
GR
S2/WL2
S2/WR2
U2
U1
Y
BL
BR

Fig. 31

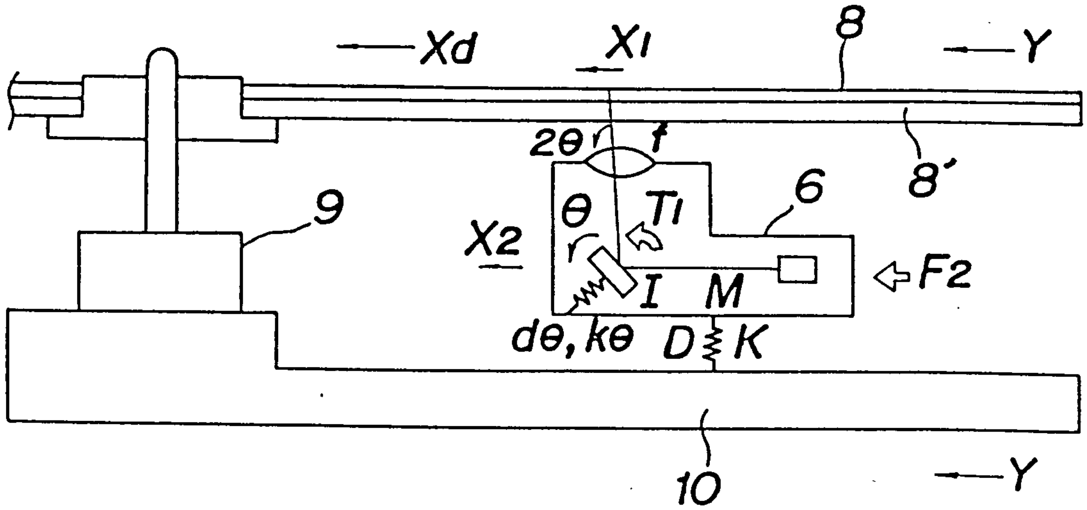
Xd
X1
8
Y
2θ
f
8'
9
6
θ
T1
X2
F2
I
M
dθ, kθ
D
K
10
Y

Fig. 32

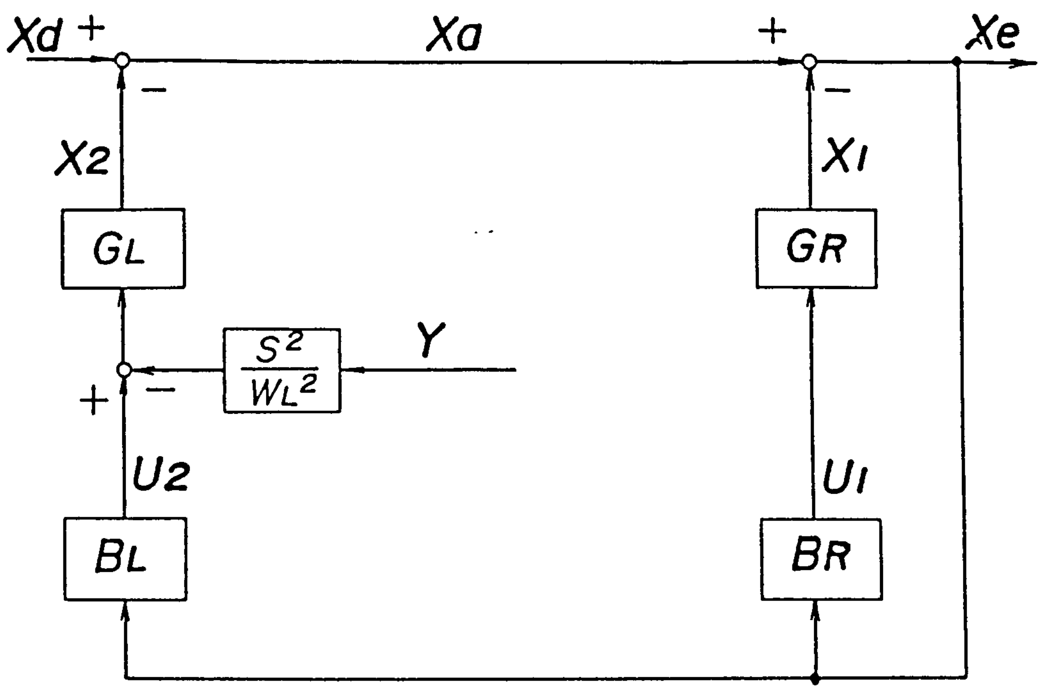
Xd
+
Xa
+
Xe
−
−
X2
X1
GL
GR
$\frac{S^2}{W_L^2}$
Y
+
−
U2
U1
BL
BR

Fig. 33

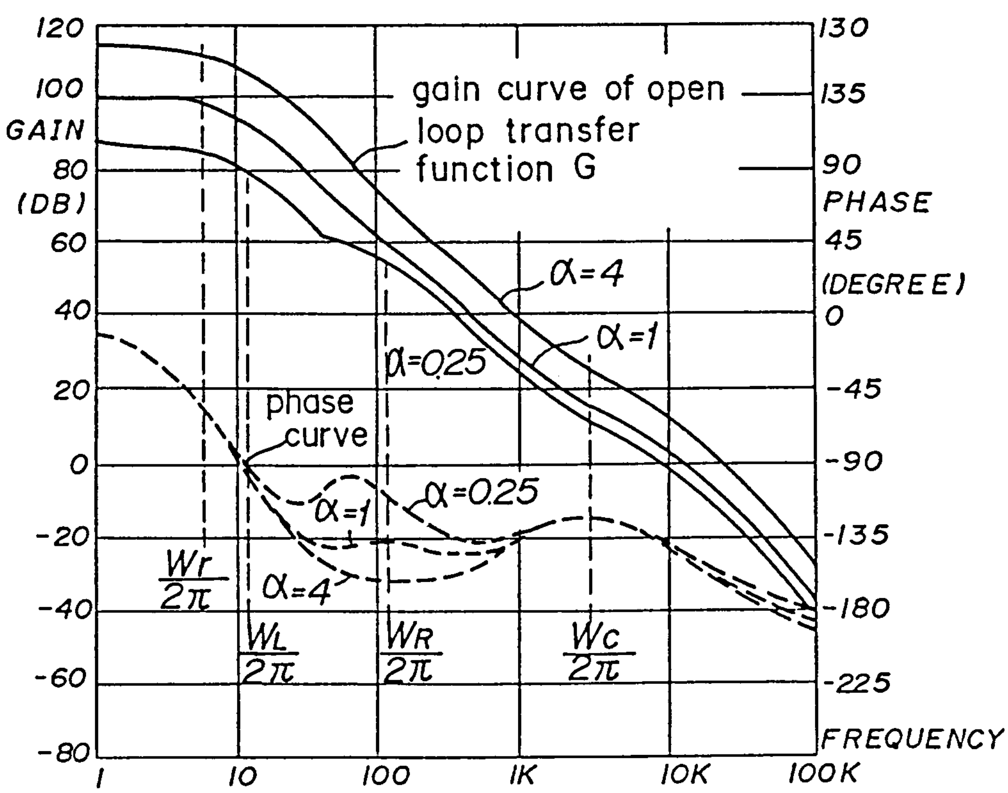
120
100
GAIN
80
(DB)
60
40
20
0
-20
-40
-60
-80
130
135
90
PHASE
45
(DEGREE)
0
-45
-90
-135
-180
-225
FREQUENCY
1
10
100
1K
10K
100K
gain curve of open
loop transfer
function G
α=4
α=1
α=0.25
phase
curve
α=1
α=0.25
α=4
Wr/2π
WL/2π
WR/2π
Wc/2π

Fig. 34

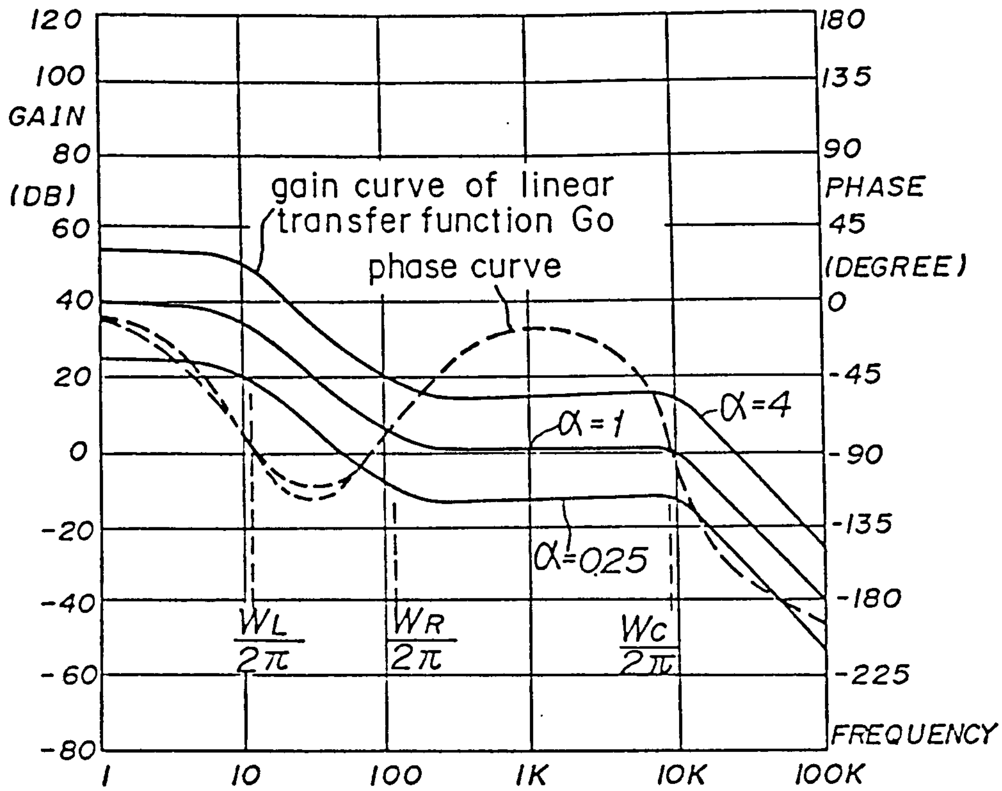
120
100
GAIN
80
(DB)
60
40
20
0
-20
-40
-60
-80
180
135
90
PHASE
45
(DEGREE)
0
-45
-90
-135
-180
-225
FREQUENCY
1
10
100
1K
10K
100K
gain curve of linear
transfer function Go
phase curve
α=4
α=1
α=0.25
WL/2π
WR/2π
Wc/2π

Fig. 35

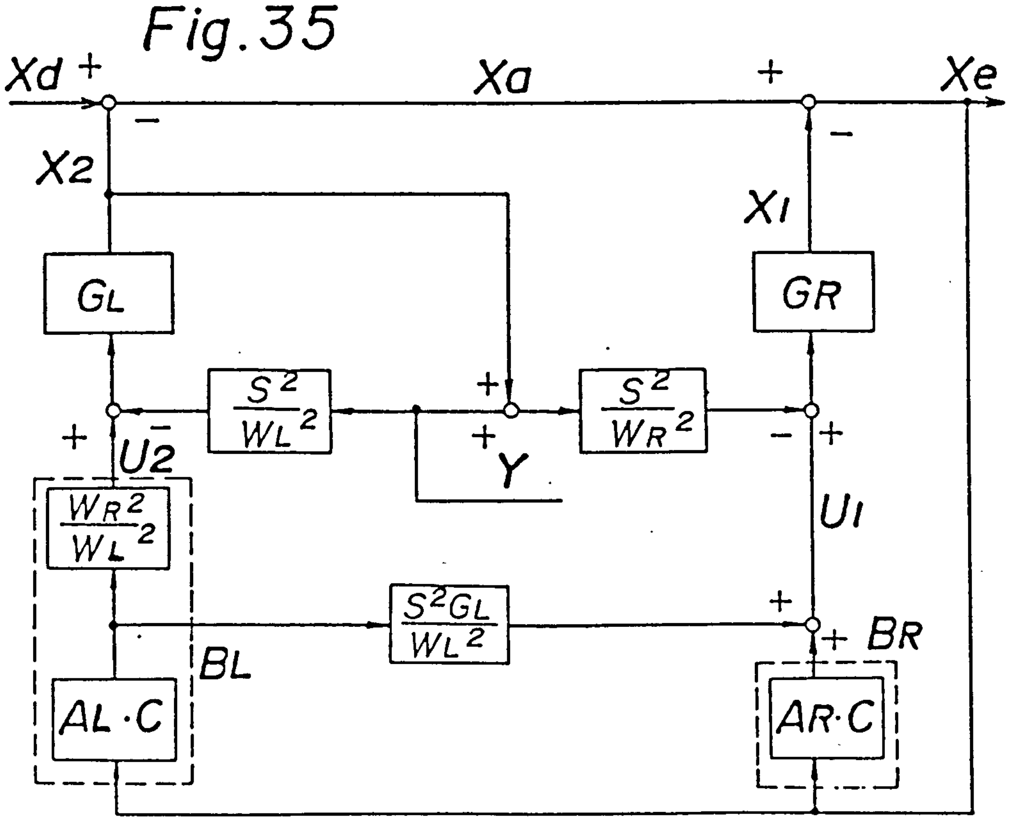
Xd
Xa
Xe
X2
X1
GL
GR
S2/WL2
S2/WR2
Y
U2
U1
WR2/WL2
S2GL/WL2
BL
BR
AL·C
AR·C

Fig.36

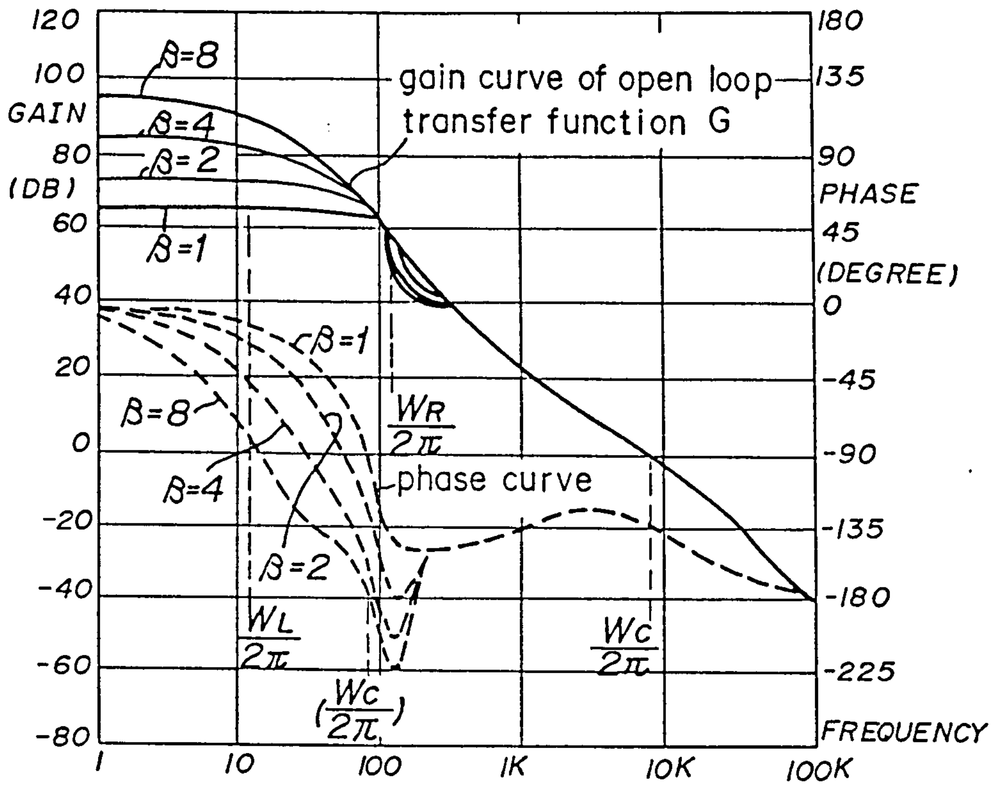
120
100
GAIN
80
(DB)
60
40
20
0
-20
-40
-60
-80
180
135
90
PHASE
45
(DEGREE)
0
-45
-90
-135
-180
-225
FREQUENCY
1
10
100
1K
10K
100K
β=8
β=4
β=2
β=1
gain curve of open loop transfer function G
β=1
β=8
β=4
β=2
WR/2π
phase curve
WL/2π
(Wc/2π)
Wc/2π

Fig.37

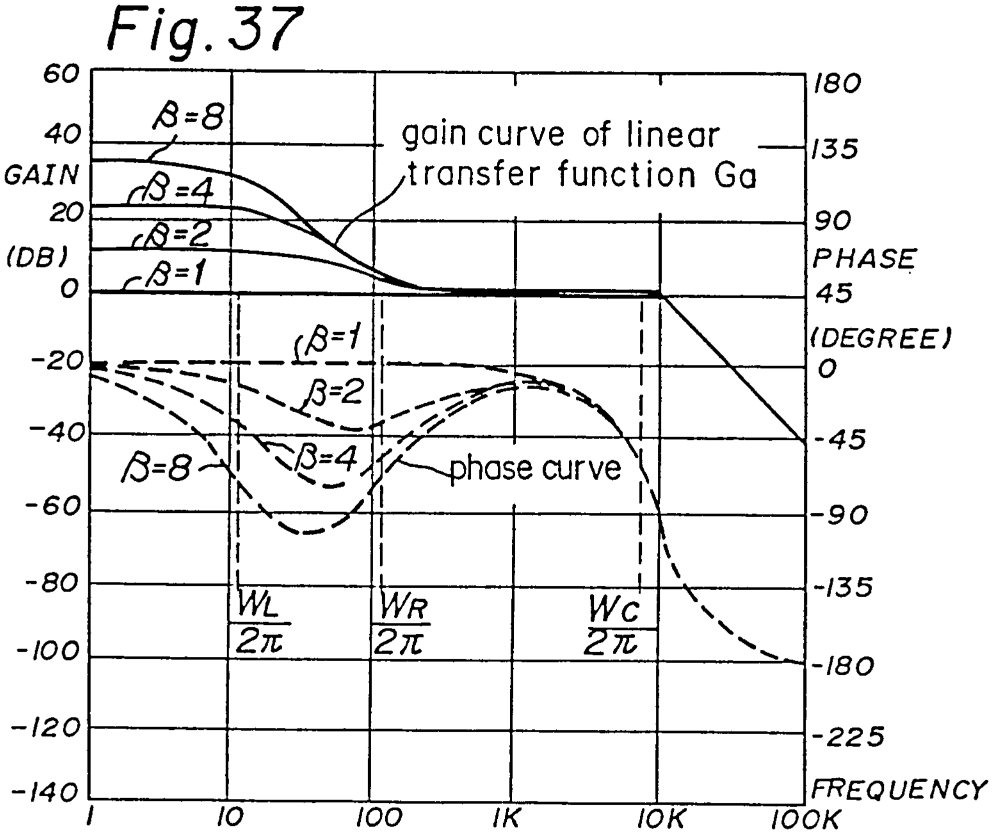
60
40
GAIN
20
(DB)
0
-20
-40
-60
-80
-100
-120
-140
180
135
90
PHASE
45
(DEGREE)
0
-45
-90
-135
-180
-225
FREQUENCY
1
10
100
1K
10K
100K
β=8
β=4
β=2
β=1
gain curve of linear transfer function Ga
β=1
β=2
β=4
β=8
phase curve
WL/2π
WR/2π
Wc/2π

Fig. 38

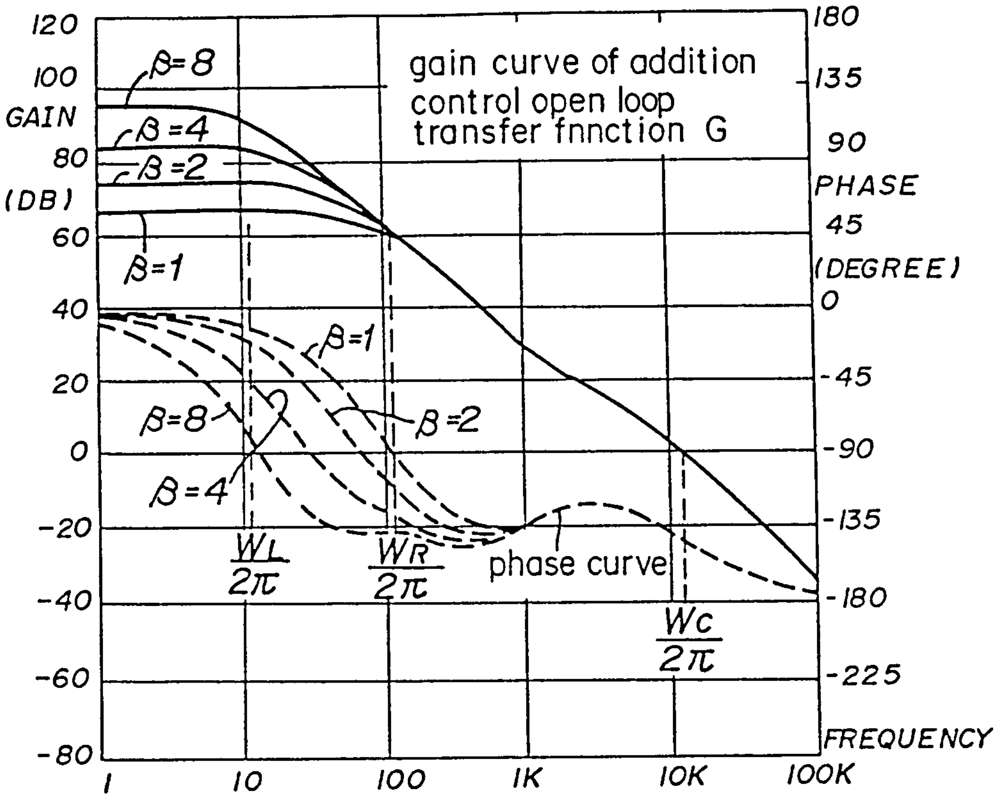
gain curve of addition
control open loop
transfer fnnction G
GAIN
(DB)
120
100
80
60
40
20
0
-20
-40
-60
-80
PHASE
(DEGREE)
180
135
90
45
0
-45
-90
-135
-180
-225
β=8
β=4
β=2
β=1
β=1
β=2
β=8
β=4
WL/2π
WR/2π
phase curve
Wc/2π
FREQUENCY
1
10
100
1K
10K
100K

Fig.39

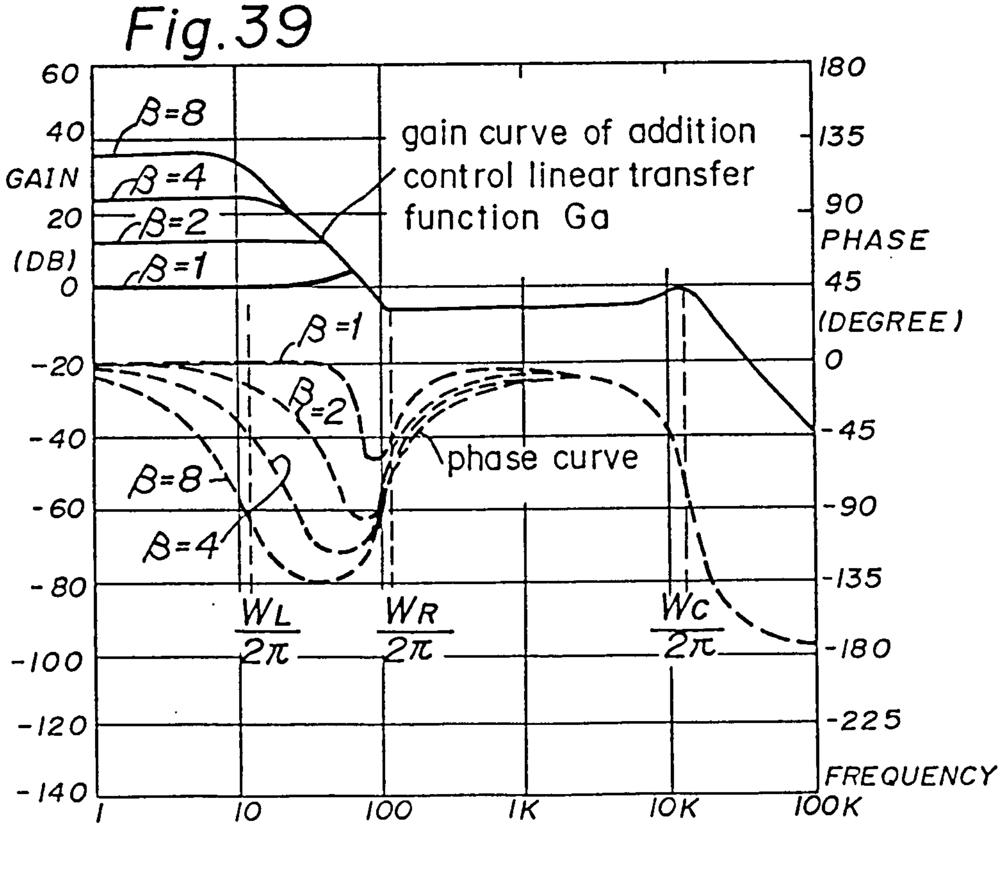
gain curve of addition
control linear transfer
function Ga
GAIN
(DB)
60
40
20
0
-20
-40
-60
-80
-100
-120
-140
PHASE
(DEGREE)
180
135
90
45
0
-45
-90
-135
-180
-225
β=8
β=4
β=2
β=1
β=1
β=2
β=8
β=4
phase curve
WL/2π
WR/2π
Wc/2π
FREQUENCY
1
10
100
1K
10K
100K

Fig. 40

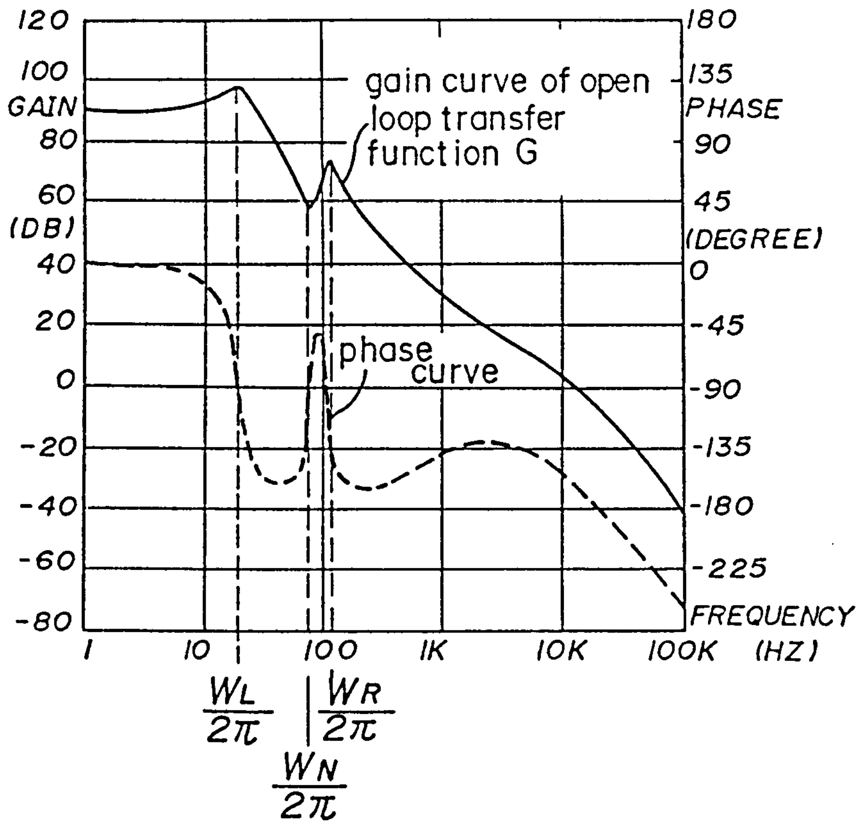
120
100
GAIN
80
60
(DB)
40
20
0
-20
-40
-60
-80
180
135
PHASE
90
45
(DEGREE)
0
-45
-90
-135
-180
-225
FREQUENCY
(HZ)
1
10
100
1K
10K
100K
gain curve of open loop transfer function G
phase curve
WL/2π
WR/2π
WN/2π

Fig. 41

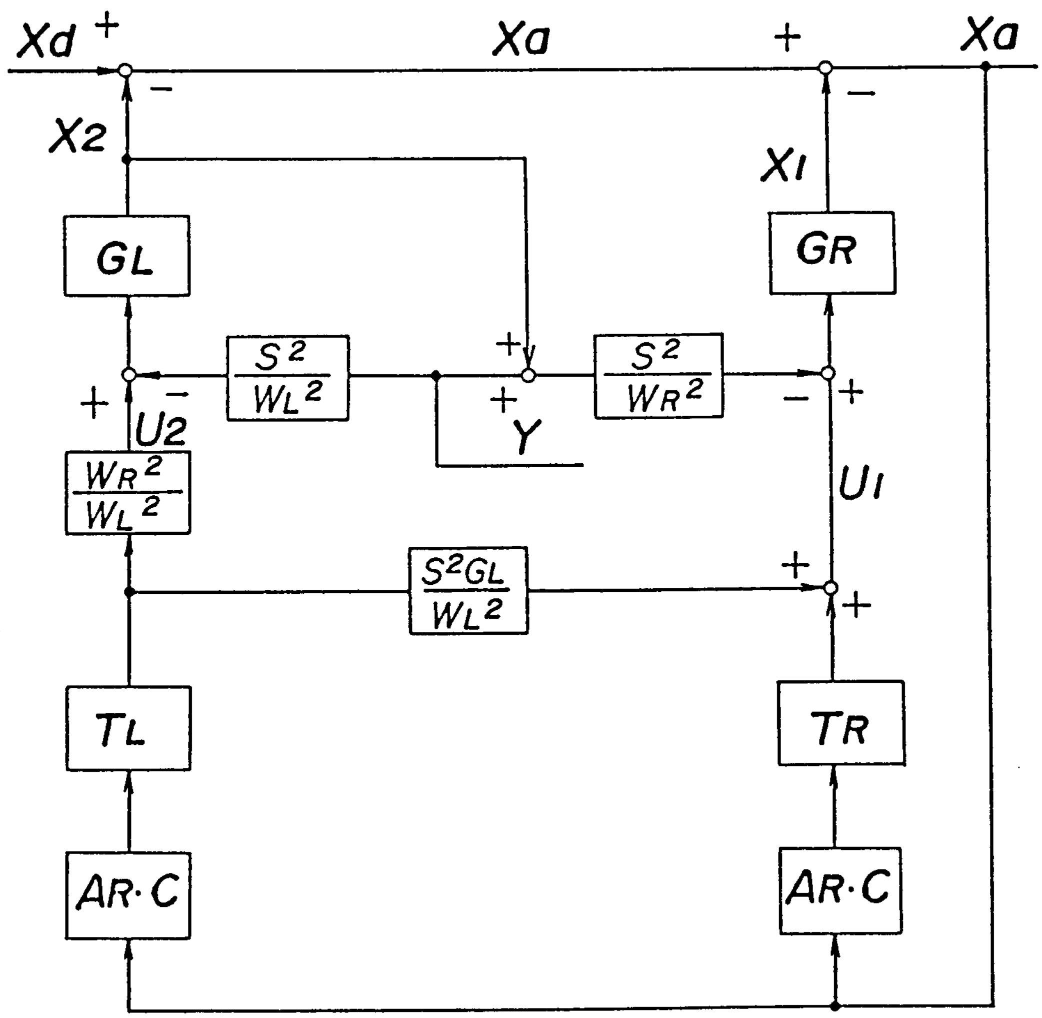
Xd
+
Xa
+
Xa
−
−
X2
X1
GL
GR
+
S2/WL2
S2/WR2
+
+
−
+
−
+
U2
Y
WR2/WL2
U1
S2GL/WL2
+
+
TL
TR
AR·C
AR·C

Fig. 42

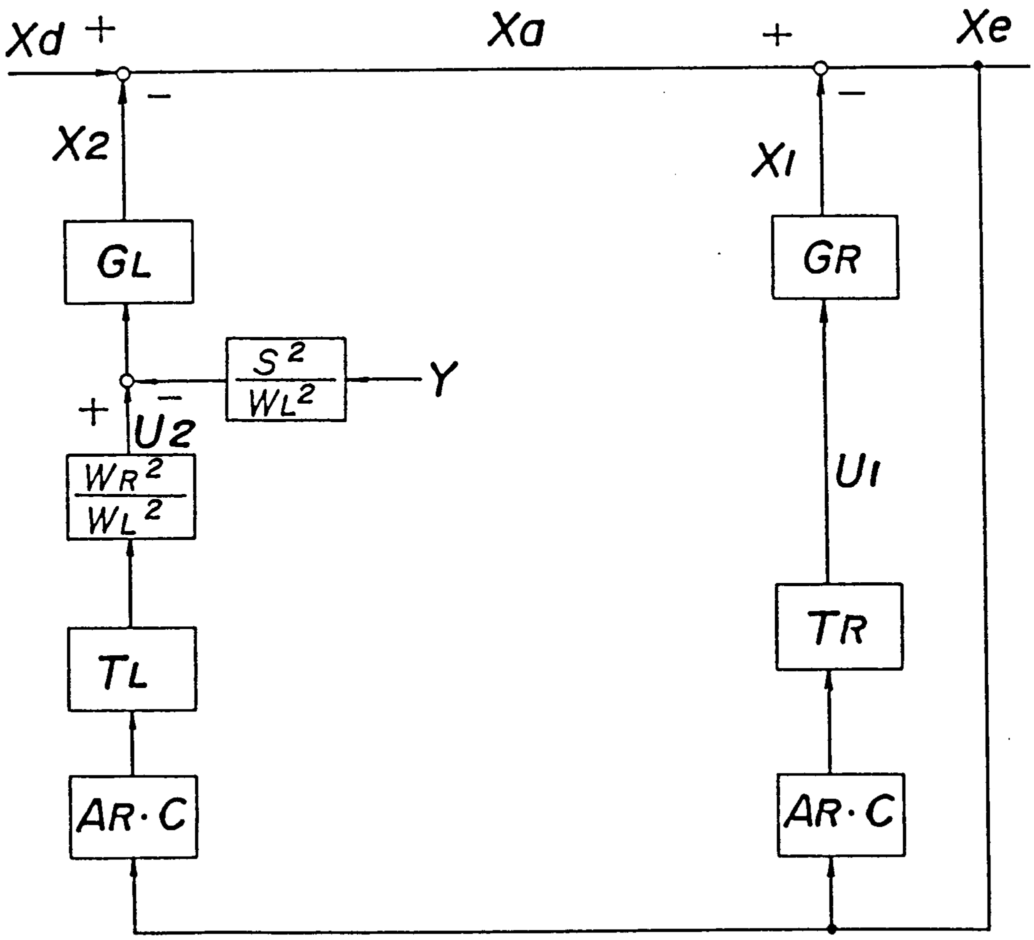

Fig. 43

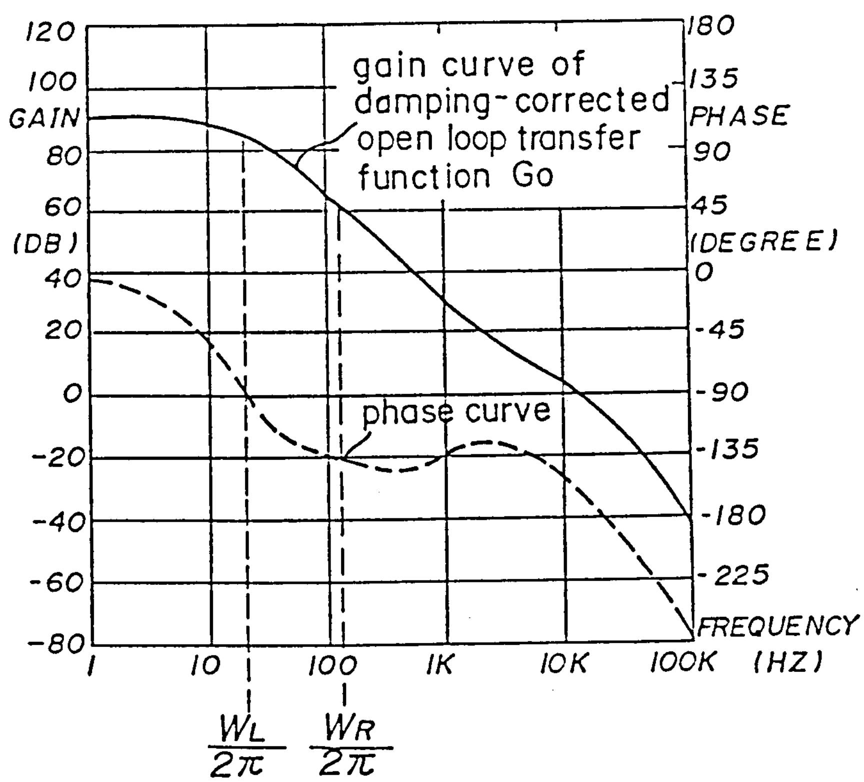
120
100
GAIN
80
60
(DB)
40
20
0
-20
-40
-60
-80
180
135
PHASE
90
45
(DEGREE)
0
-45
-90
-135
-180
-225
FREQUENCY
1
10
100
1K
10K
100K (HZ)
gain curve of damping-corrected open loop transfer function Go
phase curve
WL/2π
WR/2π

Fig. 44

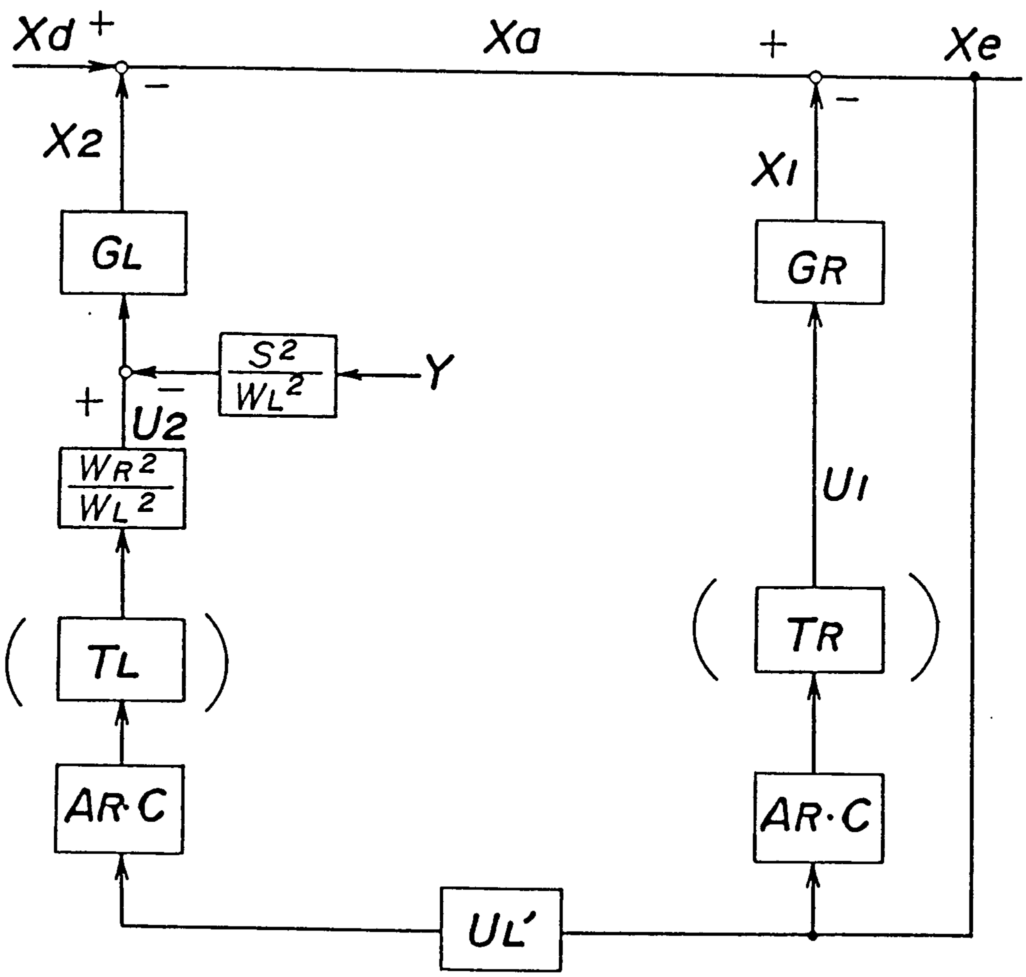

Fig .45

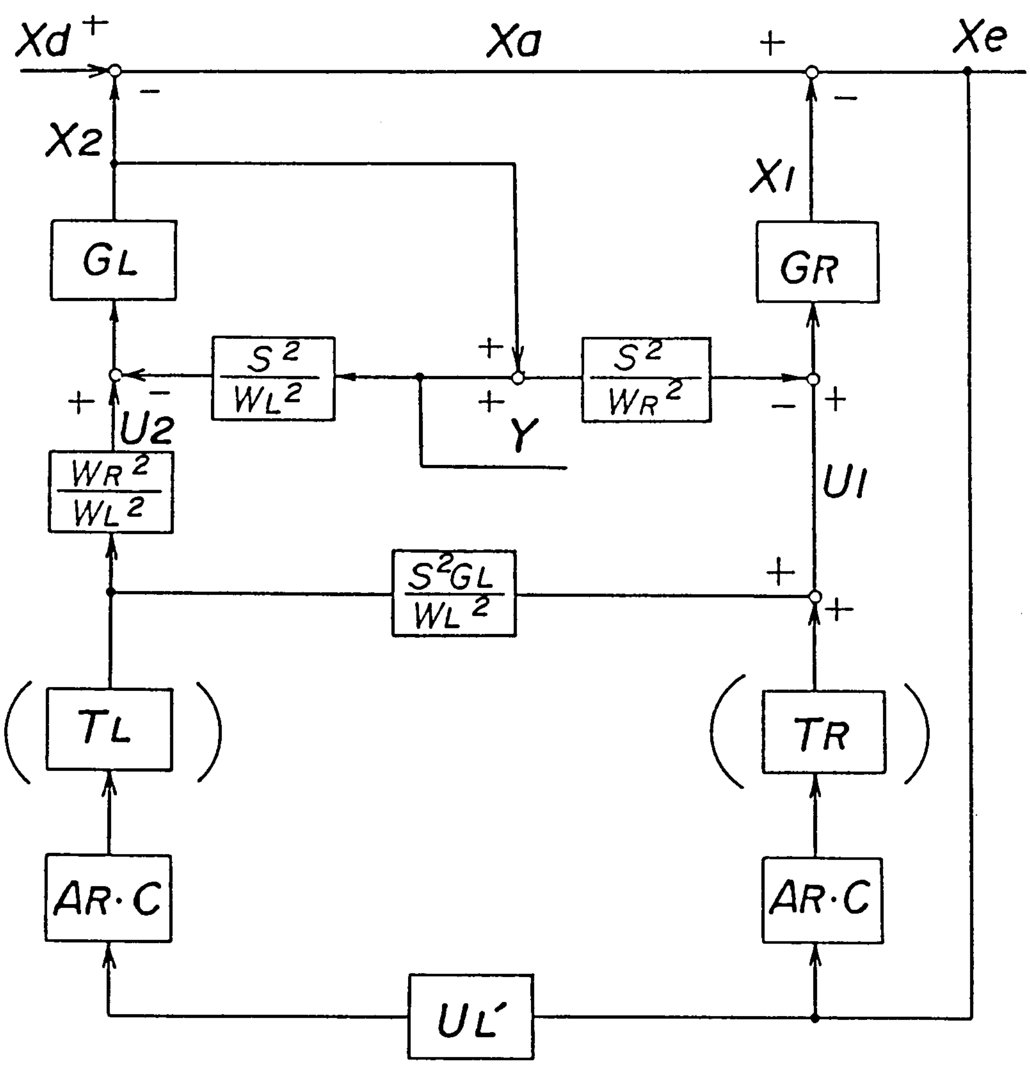
Xd
Xa
Xe
X2
X1
GL
GR
S2/WL2
S2/WR2
U2
Y
U1
WR2/WL2
S2GL/WL2
TL
TR
AR·C
AR·C
UL'

Fig .46

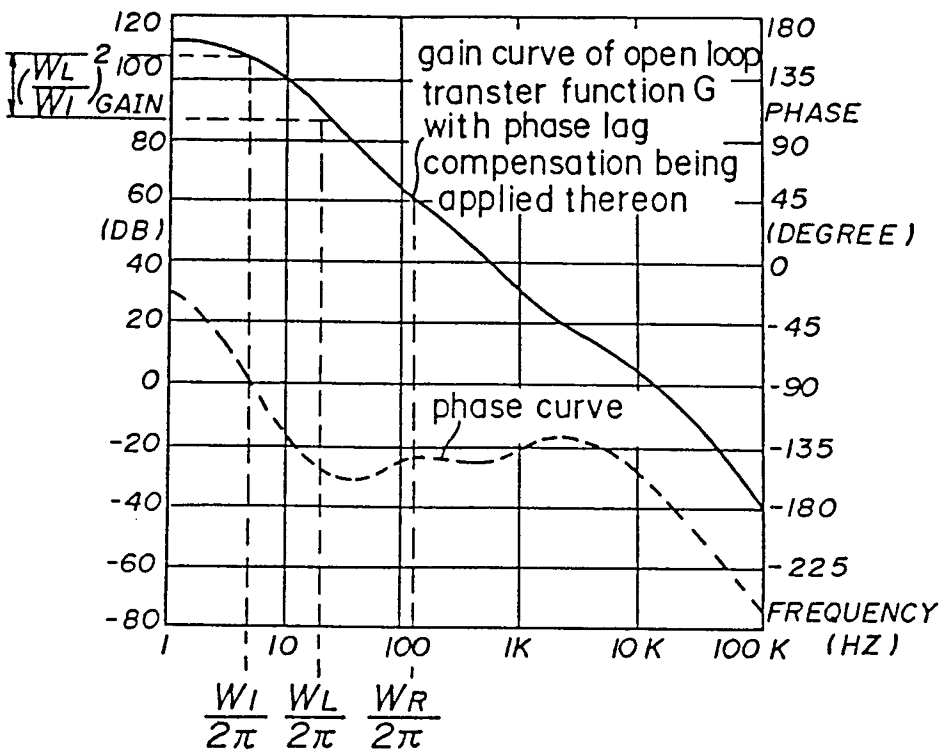
120
100
$(\frac{W_L}{W_I})^2$
GAIN
80
60
(DB)
40
20
0
-20
-40
-60
-80
180
135
PHASE
90
45
(DEGREE)
0
-45
-90
-135
-180
-225
FREQUENCY
(HZ)
1
10
100
1K
10K
100K
gain curve of open loop transter function G with phase lag compensation being applied thereon
phase curve
$\frac{W_I}{2\pi}$ $\frac{W_L}{2\pi}$ $\frac{W_R}{2\pi}$

Fig.47

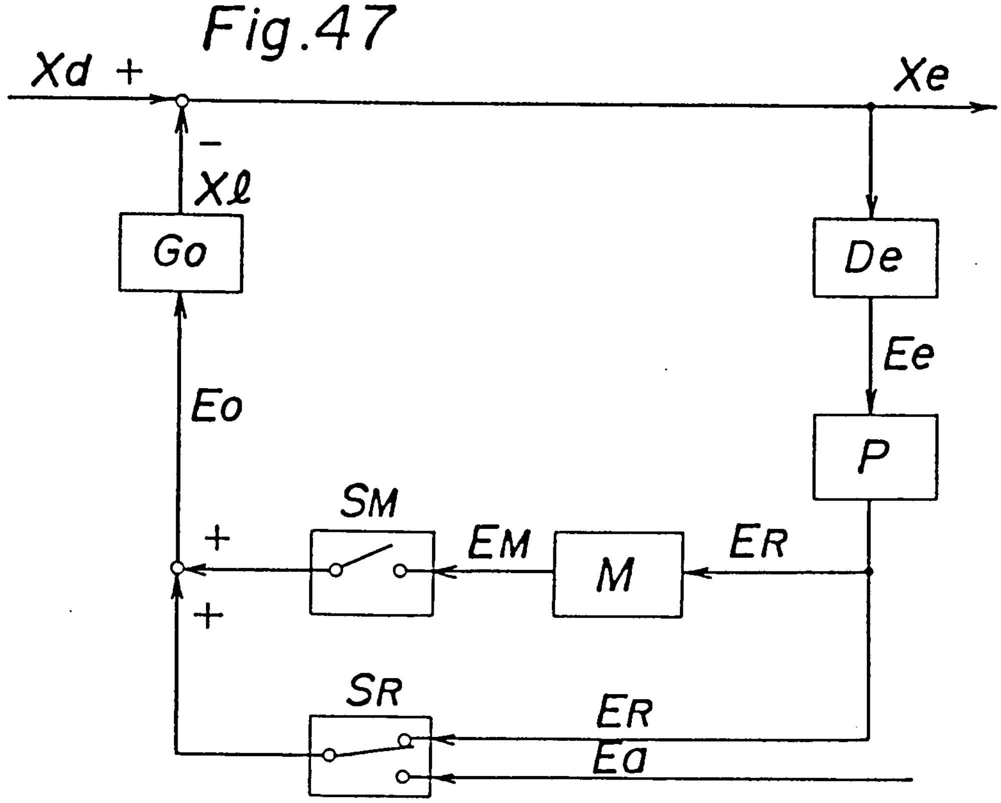
Xd +
Xe
−
Xℓ
Go
De
Ee
Eo
P
SM
+
EM
M
ER
+
SR
ER
Ea

Fig. 48

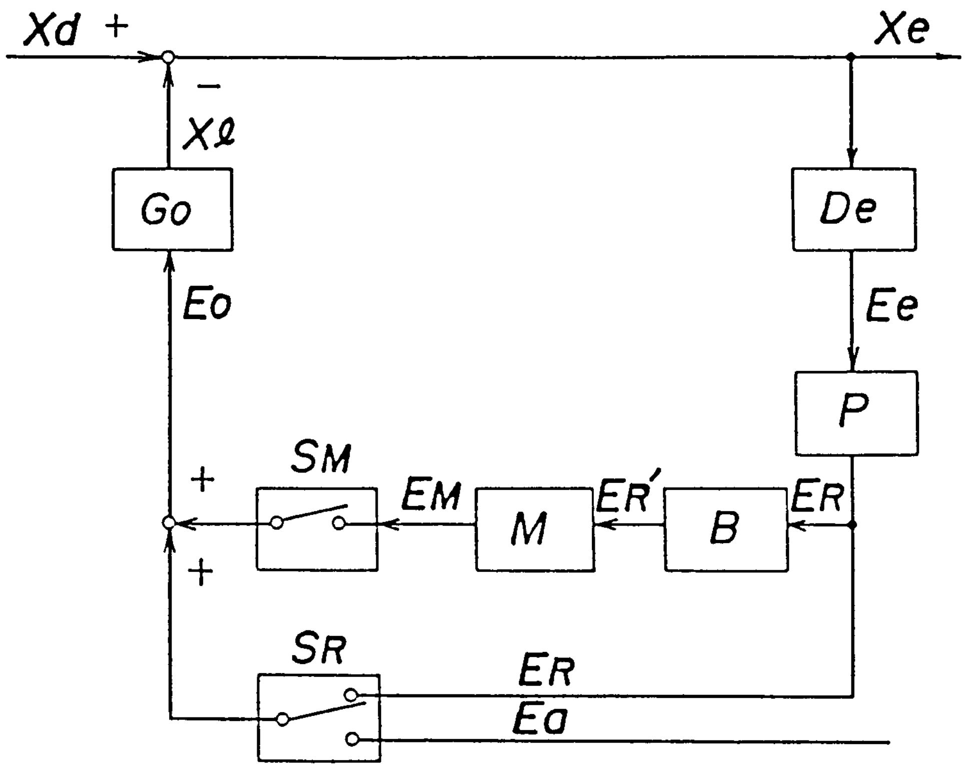
Xd
+
Xe
−
Xℓ
Go
De
Eo
Ee
P
SM
+
EM
ER′
ER
M
B
+
SR
ER
Ea

Fig.49

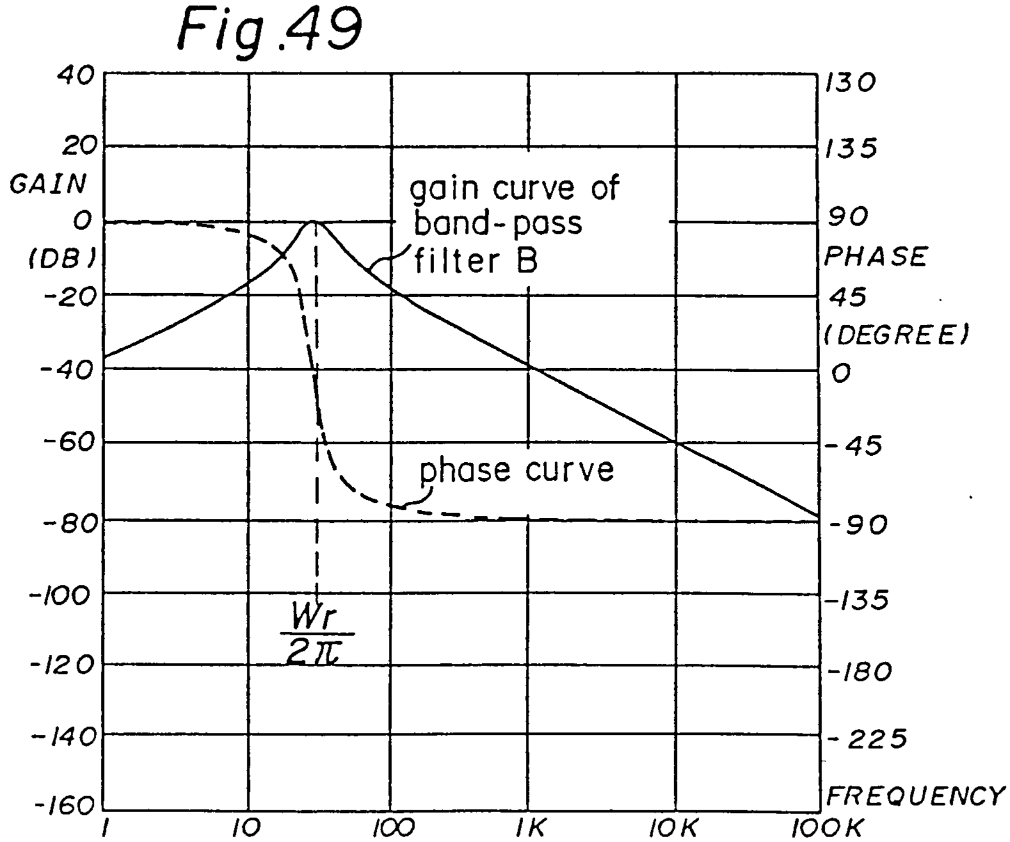
40
20
GAIN
0
(DB)
-20
-40
-60
-80
-100
-120
-140
-160
130
135
90
PHASE
45
(DEGREE)
0
-45
-90
-135
-180
-225
FREQUENCY
gain curve of
band-pass
filter B
phase curve
Wr
2π
1
10
100
1K
10K
100K

Fig. 50

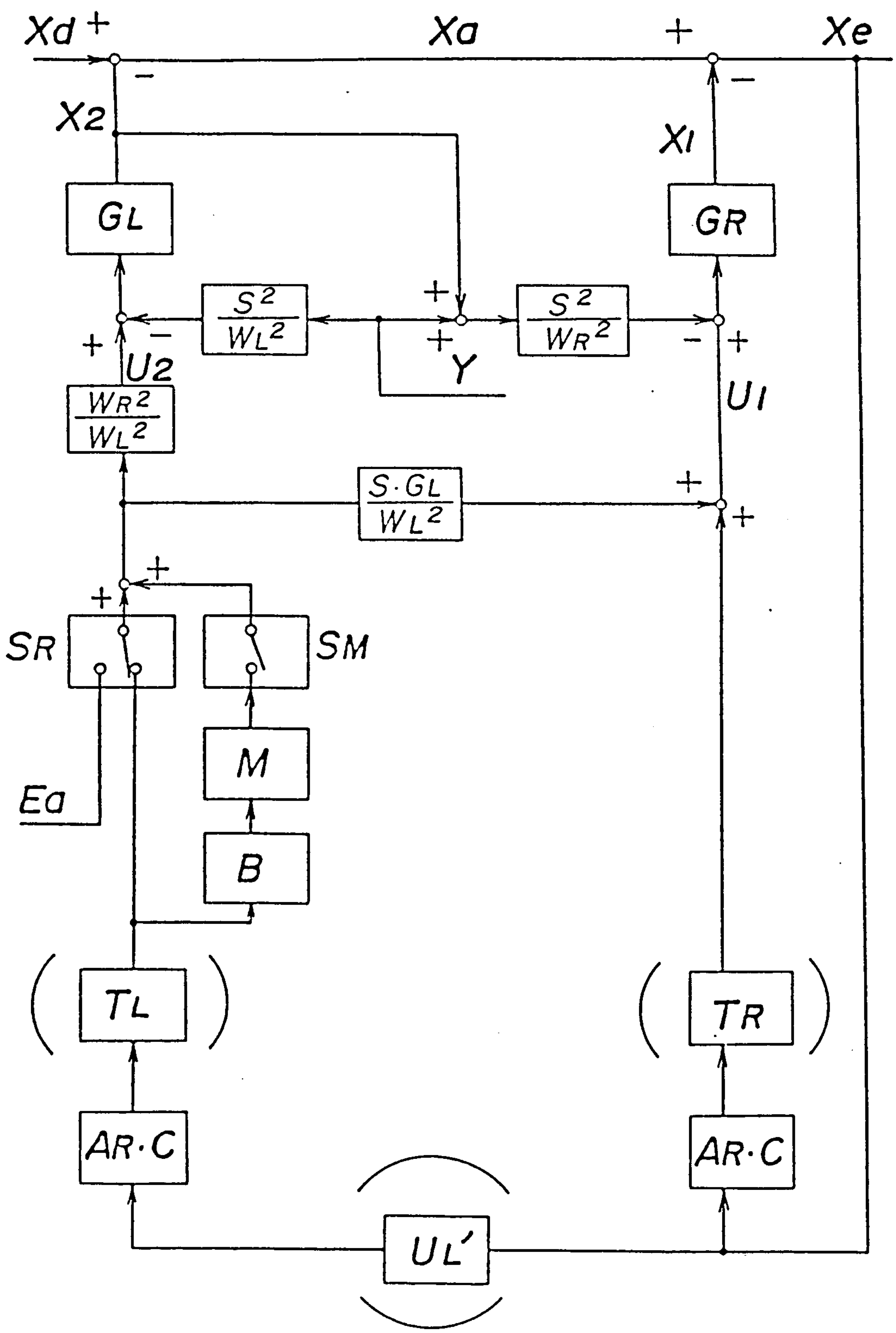

Fig. 51

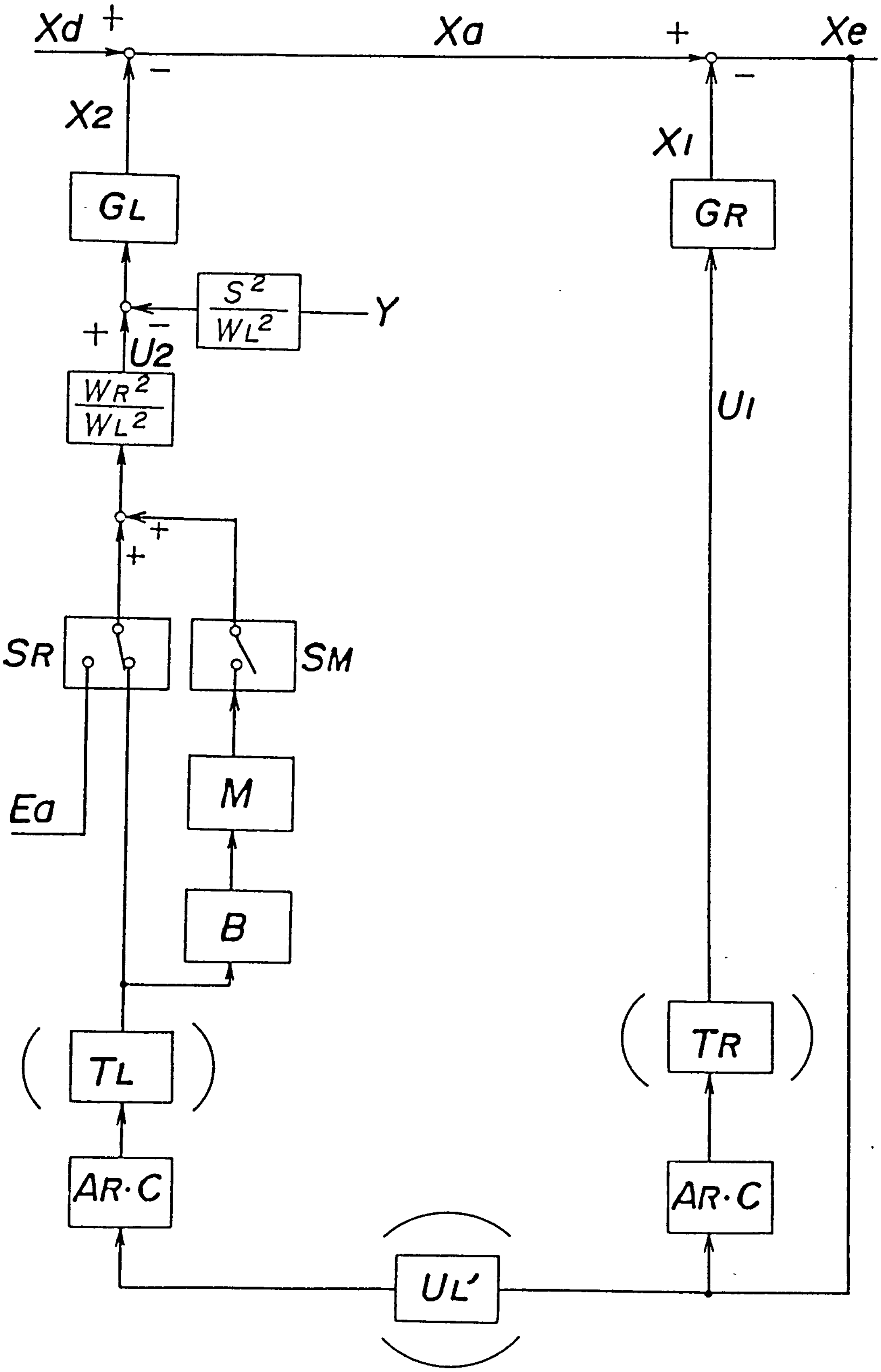
Xd
+
Xa
+
Xe
−
−
X2
X1
GL
GR
S2/WL2
Y
+
−
U2
WR2/WL2
U1
+
+
SR
SM
Ea
M
B
TL
TR
AR·C
AR·C
UL'